(19) Europäisches Patentamt
European Patent Office
Office européen des brevets

(11) **EP 4 786 413 A1**

(12) **EUROPEAN PATENT APPLICATION**

(43) Date of publication:
**05.08.2026  Bulletin 2026/32**

(21) Application number: **26169316.2**

(22) Date of filing: **27.08.2020**

(51) International Patent Classification (IPC):
**C01B 3/34** $^{(2006.01)}$     **C10L 1/08** $^{(2006.01)}$
**C10G 49/26** $^{(2006.01)}$     **C10G 49/00** $^{(2006.01)}$

(52) Cooperative Patent Classification (CPC):
**C01B 3/384; C01B 3/48; C10G 49/007;**
C01B 2203/0233; C01B 2203/0238;
C01B 2203/0244; C01B 2203/0261;
C01B 2203/0288; C01B 2203/0405;
C01B 2203/041; C01B 2203/0415; C01B 2203/043;
C01B 2203/0445; C01B 2203/046;
C01B 2203/0475;       (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2019  US 201962892123 P**

(62) Document number(s) of the earlier application(s) in accordance with Art. 76 EPC:
**20859542.1 / 4 022 013**

(71) Applicant: **Iogen Corporation
Ottawa, ON K1V 1C1 (CA)**

(72) Inventors:
• **FOODY, Patrick J.**
**Ottawa, K1V 1C1 (CA)**

• **FOODY, Brian**
**Ottawa, K1V 1C1 (CA)**
• **BLACK, Amanda**
**Ottawa, K1V 1C1 (CA)**

(74) Representative: **Keltie LLP
No. 1 London Bridge
London SE1 9BA (GB)**

Remarks:
This application was filed on 30.03.2026 as a divisional application to the application mentioned under INID code 62.

(54) **METHOD FOR PRODUCING A FUEL USING RENEWABLE HYDROGEN**

(57)     A method of producing a fuel having a determined amount of renewable content is provided. The method includes supplying renewable hydrogen to a hydroprocessing unit and hydrogenating crude oil derived liquid hydrocarbons within the hydroprocessing unit using the renewable hydrogen. The renewable content of the hydrogenated product is determined by measuring an amount of hydrogen, carbon, or a combination thereof in the crude oil derived liquid hydrocarbon feed introduced into the hydroprocessing unit and by measuring an amount of hydrogen, carbon, or a combination thereof in the hydrocarbon produced by the hydroprocessing unit. A difference between the relative amounts of carbon and hydrogen in the feed and in the product is used to determine the renewable content.

```
┌─────────────────────────┐
│  Providing renewable    │──── 460
│       hydrogen          │
└─────────────────────────┘
           │
           ▼
┌─────────────────────────┐
│ Selectively directing   │──── 470
│ the renewable hydrogen  │
│ to one or more          │
│ processing units        │
└─────────────────────────┘
           │
           ▼
┌─────────────────────────┐
│ Hydrogenating crude-oil │──── 480
│ derived liquid          │
│ hydrocarbon with the    │
│ renewable hydrogen      │
└─────────────────────────┘
           │
           ▼
┌─────────────────────────┐
│ Determining a renewable │──── 490
│ content of one or more  │
│ fuels                   │
└─────────────────────────┘
```

*Fig. 4*

EP 4 786 413 A1

(52) Cooperative Patent Classification (CPC): (Cont.)
C01B 2203/0827; C01B 2203/1058;
C01B 2203/1082; C01B 2203/127;
C01B 2203/146; C10G 2400/04; Y02P 30/20

## Description

### TECHNICAL FIELD

The present invention generally relates to a method and/or system for producing fuel using renewable hydrogen, and more specifically, to a method and/or system for producing fuel using renewable hydrogen and crude oil derived liquid hydrocarbon and/or a method of quantifying the renewable content.

### BACKGROUND

Conventionally, fuels such as gasoline, jet fuel, and diesel are produced at oil refineries, where crude oil is converted through numerous unit operations and conversion reactions into the various fuels. Today there is a growing interest in supplementing or supplanting such fossil-based fuels with renewable fuels. For example, conventional gasoline may be blended with renewable ethanol (e.g., E10, E15, or E85 blends), while conventional diesel may be blended with biodiesel (e.g., B2 or B7 blends).

Biodiesel refers to a renewable fuel consisting of fatty acid methyl esters (FAME). For example, biodiesel may be produced by transesterification of vegetable oil (e.g., soybean oil, canola oil, corn oil, rapeseed oil, sunflower oil, palm oil), algal oil, tall oil, fish oil, animal fats, used cooking oils, hydrogenated vegetable oils, or any mixture thereof, with an alcohol, in the presence of a catalyst. While biodiesel generally has gained acceptance as a blendstock for producing lower blends (e.g., B2 or B7 blends), pure biodiesel (B100) is rarely used directly as a transportation fuel.

Alternatively, vegetable oil, algal oil, animal fats, or oil derived from biomass, may be hydroprocessed to produce a renewable fuel. For example, biomass can be subjected to a pyrolysis process that produces bio oil. Hydrotreatment of this bio oil (i.e., biomass-derived oil), including hydro deoxygenation (HDO), hydrodesulfurization (HDS), and olefin hydrogenation, may produce a gasoline or diesel substitute suitable for use as a renewable blendstock (e.g., for blending or use as standalone fuel). Diesel resulting from the hydroprocessing of renewably sourced oils is often called "renewable diesel" to distinguish it from biodiesel. Compared with biodiesel, renewable diesel is generally considered to have better fuel properties. In contrast to biodiesel, renewable diesel is typically fungible with conventional diesel, so it can be blended at much higher levels than biodiesel.

While renewable fuels produced from renewably sourced oils (e.g., biodiesel, renewable diesel, or renewable gasoline) continue to attract attention, they are not ideal. For example, some disadvantages include the cost of feedstock (e.g., vegetable oil or bio oil), a limited supply of feedstock (e.g., particularly when compared to crude oil), adverse impacts of increased land use towards such fuels, and/or concerns related to competition with food production.

One approach to produce gasoline and diesel from a renewable resource other than renewably sourced oils is to use a Fischer-Tropsch synthesis. The Fischer-Tropsch process converts a mixture of hydrogen ($H_2$) and carbon monoxide (CO) (e.g., syngas) to liquid hydrocarbons. The syngas may be obtained by steam reforming biogas, or from gasification of biomass. In general, Fischer-Tropsch derived diesel product (FT diesel) is high quality fuel, free of sulfur and fungible with conventional diesel. However, such processes are relatively expensive.

Yet another approach to produce fuel, such as gasoline and diesel, from a renewable resource is to use biogas to generate renewable hydrogen, and to use the renewable hydrogen to hydrogenate crude oil derived hydrocarbon in a fuel production process to make renewable or partially renewable fuel (e.g., see U.S. Pats. 8,658,026, 8,753,854, 8,945,373, 9,040,271, 10,093,540, 10,421,663, 10,723,621). In this approach, gasoline, diesel, and/or jet fuel may be produced using existing fuel production facilities. This approach has the advantage that the renewable resource may be used to produce gasoline, diesel, and jet fuel having renewable content. Advantageously, this approach can increase a fossil fuel refiner's capability to produce renewable fuels and/or expand the use of biogas. Unfortunately, as a result of the potential complexity of fuel production facilities and/or the nature of crude oil processing when using renewable feedstocks, it can be challenging to quantify the renewable content in the resulting fuel products. Moreover, the yield of renewable content can be difficult to measure and/or unnecessarily low.

### SUMMARY

The instant disclosure describes a process and/or system for producing fuel using renewable hydrogen that can increase the yield of renewable content of fuel produced and/or facilitates quantification of the renewable content of the fuel. For example, in one embodiment, the method includes selectively directing the renewable hydrogen to one or more hydroprocessing units within a fuel production facility, such as an oil refinery. Without selectively directing the renewable hydrogen within the fuel production facility, the renewable hydrogen typically will be distributed to multiple hydroprocessing units (e.g., to all or most of the hydroprocessing units within the fuel production facility) and thus end up in multiple fuel products. As discussed herein, by appropriately selecting a subset of one or more hydroprocessing units from the plurality of hydroprocessing units at the fuel production facility to which the renewable hydrogen is allocated, the yield of renewable content can be relatively high (e.g., for one or more fuels). In one embodiment, the method includes quantifying the renewable content by determining the relative amount of hydrogen and carbon in the liquid feedstock fed to a particular hydroprocessing unit and the relative amount of hydrogen and carbon in the liquid product(s) produced by the particular hydroprocessing unit. As discussed herein, using the relative amount of hydrogen and carbon in liquid feedstock/products can provide a simple and reliable method of quantifying the renewable content of fuel. The instant disclosure also describes a process and/or system for producing fuel using renewable hydrogen that provides improvements such as lowering the greenhouse gas (GHG) emissions or carbon intensity of the fuel.

Thus in one aspect of the disclosure, the renewable hydrogen is fed a subset of the fuel production facility that includes one or more hydroprocessing units, where the one or more hydroprocessing units in the subset are selected based on transportation fuel energy yield (e.g., such that the transportation fuel energy yield of each hydroprocessing unit and/or the subset is greater than the transportation fuel energy yield of the entire fuel production facility by a predetermined amount). In another aspect, a method for quantifying the renewable content of a fuel is provided. Various embodiments and alternatives are described herein.

In accordance with one aspect of the instant invention there is provided a method of producing fuel having renewable content, the method comprising: (a) providing renewable hydrogen; (b) selectively directing the renewable hydrogen to one or more hydroprocessing units in a fuel production facility comprising a plurality of hydroprocessing units and hydrogenating crude oil derived liquid hydrocarbon in the one or more hydroprocessing units to provide one or more transportation fuel products comprising renewable content, wherein each of the one or more hydroprocessing units has a transportation fuel energy yield that is at least 5% higher than a transportation fuel energy yield of the fuel production facility; (c) determining a renewable content of the one or more transportation fuel products, the determining comprising determining an amount of renewable hydrogen selectively directed to the one or more hydroprocessing units and determining an amount of at least one transportation fuel product produced by the one or more hydroprocessing units; and (d) providing a fuel comprising at least one of the transportation fuel products comprising renewable content. In some embodiments, the renewable hydrogen is selectively directed to a subset of the plurality of hydroprocessing units (i.e., one or more selected hydroprocessing units), and crude oil derived liquid hydrocarbon is hydrogenated in the subset of hydroprocessing units to provide one or more transportation fuel products comprising renewable content, wherein each hydroprocessing unit in the subset has a transportation fuel energy yield that is at least 5% higher than a transportation fuel energy yield of the fuel production facility. In some embodiments, the renewable hydrogen is selectively directed to a subset of the plurality of hydroprocessing units (i.e., one or more selected hydroprocessing units), and crude oil derived liquid hydrocarbon is hydrogenated in the subset of hydroprocessing units to provide one or more transportation fuel products comprising renewable content, wherein the one or more hydroprocessing units in the subset are selected such that the average transportation fuel energy yield of the subset is at least 5% higher than the average transportation fuel energy yield of the fuel production facility.

In accordance with one aspect of the instant invention there is provided a method of producing fuel having a determined amount of renewable content, the method comprising: providing renewable hydrogen to a hydroprocessing unit; hydrogenating crude oil derived liquid hydrocarbon in the hydroprocessing unit with the renewable hydrogen; and determining the renewable content of crude oil derived liquid hydrocarbon hydrogenated in the hydroprocessing unit, wherein the determining comprises: measuring a relative amount of hydrogen and carbon in crude oil derived liquid hydrocarbon fed into the hydroprocessing unit; and measuring a relative amount of hydrogen and carbon in crude oil derived liquid hydrocarbon produced by the hydroprocessing unit.

Advantageously, determining the renewable content of one or more fuels using the relative amount of hydrogen and carbon in crude oil derived liquid hydrocarbon can permit adjustment of controllable parameters to increase or decrease the percentage of renewable content in one or more fuels once an initial determination has been made. This can improve the cost effectiveness of the renewable fuel production process.

In accordance with one aspect of the instant invention there is provided a method of quantifying a renewable content of fuel produced by hydrogenating crude oil derived liquid hydrocarbon with renewable hydrogen, the method comprising: (a) providing a sample of the crude oil derived liquid hydrocarbon; (b) measuring a relative amount of hydrogen and carbon in the sample of crude oil derived liquid hydrocarbon; (c) measuring a flow rate of the crude oil derived liquid hydrocarbon provided for hydrogenation; (d) measuring a flow rate of hydrogen provided for the hydrogenation; (e) determining an amount of renewable hydrogen provided for the hydrogenation; (f) providing a sample of a product of the hydrogenation; (g) measuring a relative amount of hydrogen and carbon in the sample of product; (h) measuring a flow rate of the product as it is produced; and (i) determining the renewable content in the product using the amounts determined or measured in (b), (e), and (g).

In accordance with one aspect of the instant invention there is provided a method of producing fuel having renewable content, the method comprising: (a) at a fuel production facility comprising one or more hydrogen production plants and a plurality of hydroprocessing units, hydrogenating crude oil derived liquid hydrocarbon to produce one or more fuels; (b) selecting one or more of the hydrogen production plants and multiple hydroprocessing units from the plurality of hydroprocessing units to provide a system for producing the fuel having renewable content, wherein the system is a subset of all the hydrogen production plants and hydroprocessing units at the fuel production facility, wherein the system excludes one or more hydroprocessing units at the fuel production facility, and wherein each of the excluded hydroprocessing units produces more than 20% of product by energy that further undergoes a chemical reaction that materially modifies the hydrocarbon therein; (c) providing renewable natural gas and fossil natural gas to the one or more hydrogen production plants in the system, thereby producing fossil hydrogen and renewable hydrogen; (d) selectively directing the renewable hydrogen to all of the one or more hydroprocessing units in the system, thereby producing one or more fuels having renewable content; and (e) quantifying the renewable content of a batch of a fuel produced in (d), the quantifying being dependent on an amount of renewable natural gas provided as feedstock to the system to produce the batch.

In accordance with one aspect of the instant invention there is provided a method of producing fuel having renewable content, the method comprising: (a) providing renewable hydrogen; (b) selectively directing at least a portion of the renewable hydrogen provided in (a) to a hydrogenation reactor in a fuel production facility; (c) hydrogenating crude oil derived liquid hydrocarbon in the hydrogenation reactor, said hydrogenating comprising feeding fossil hydrogen and the selectively directed renewable hydrogen into the hydrogenation reactor, and (d) determining a total amount of hydrogen incorporated into crude oil derived liquid hydrocarbon hydrogenated in the hydrogenation reactor, wherein the renewable hydrogen selectively directed to the hydrogenation reactor is fed into the hydrogenation reactor in an amount selected in dependence upon the total amount of hydrogen determined in step (d), and wherein the fuel includes at least some renewable hydrogen incorporated into the crude oil derived liquid hydrocarbon in step (c).

In accordance with one aspect of the instant invention there is provided a method of producing diesel, the method comprising: (a) providing renewable hydrogen; (b) selectively directing the renewable hydrogen provided in (a) to one or more hydrogenation reactors in a fuel production facility, said fuel production facility configured to produce gasoline and diesel from crude oil derived liquid hydrocarbon, said one or more hydrogenation reactors selected to preferentially incorporate the renewable hydrogen provided in (a) into diesel; (c) hydrogenating crude oil derived liquid hydrocarbon in the one or more hydrogenation reactors with the renewable hydrogen to produce diesel containing renewable hydrogen; and (d) determining an amount of renewable hydrogen incorporated into the crude oil derived liquid hydrocarbon in step (c), wherein said determining comprise measuring at least a flow of the hydrogen and the crude oil derived liquid hydrocarbon fed into the one or more hydrogenation reactors.

In accordance with one aspect of the instant invention there is provided a method of quantifying a renewability of fuel produced by hydrogenating crude oil derived liquid hydrocarbon with renewable hydrogen, said method comprising: (a) providing a sample of the crude oil derived liquid hydrocarbon; (b) measuring a relative amount of hydrogen and carbon in the sample of crude oil derived liquid hydrocarbon; (c) measuring a flow rate of the crude oil derived liquid hydrocarbon provided for hydrogenation; (d) measuring a flow rate of hydrogen provided for the hydrogenation; (e) determining an amount of renewable hydrogen provided for the hydrogenation; (f) providing a sample of a product of the hydrogenation; (g) measuring a relative amount of hydrogen and carbon in the sample of product; (h) measuring a flow rate of the product as it is produced; and (i) determining an amount of renewable hydrogen in the product using the amounts determined in (b), (e), and (g).

In accordance with one aspect of the instant invention there is provided a method of providing fuel having renewable content, the method comprising: (a) providing renewable hydrogen; (b) selectively directing the renewable hydrogen to one or more hydroprocessing units in a fuel production facility and hydrogenating crude oil derived liquid hydrocarbon in the one or more hydroprocessing units to provide one or more transportation fuel products comprising renewable hydrogen, wherein each of the one or more hydroprocessing units has a transportation fuel energy yield of at least 80%; and (c) determining a renewable content of the one or more transportation fuel products, said determining comprising determining an amount of renewable hydrogen fed into each of the one or more hydroprocessing units in energy units, determining an amount of crude oil derived liquid hydrocarbon fed into each of the one or more hydroprocessing units in energy units, and determining an amount of at least one transportation fuel product produced by each of the one or more hydroprocessing units in energy units, wherein the fuel comprises at least one of the one or more transportation fuel products comprising renewable hydrogen.

In accordance with one aspect of the instant invention there is provided a method of providing fuel having renewable content, the method comprising: (a) providing renewable hydrogen; (b) selectively directing the renewable hydrogen to one or more hydroprocessing units in a fuel production facility and hydrogenating crude oil derived liquid hydrocarbon in the one or more hydroprocessing units to provide one or more transportation fuel products comprising renewable hydrogen, wherein each of the one or more hydroprocessing units has an energy loss to non-transportation fuel products that is less than 0.9 times the energy loss to non-transportation fuel products of the fuel production facility; and (c) determining a renewable content of the one or more transportation fuel productions, said determining comprising determining an amount of renewable hydrogen fed into each of the one or more hydroprocessing units in energy units, determining an amount of crude oil derived liquid hydrocarbon fed into each of the one or more hydroprocessing units in energy units, and determining an amount of at least one fuel product produced by each of the one or more hydroprocessing units in energy units, wherein the fuel comprises at least one of the one or more transportation fuel products comprising renewable hydrogen.

In accordance with one aspect of the instant invention there is provided a fuel production process comprising: providing renewable hydrogen; selectively directing the renewable hydrogen to one or more hydroprocessing units in a fuel production facility and hydrogenating crude oil derived liquid hydrocarbon therein to provide one or more transportation fuel products comprising renewable hydrogen; and determining a renewable content of the one or more transportation fuel products containing renewable hydrogen, wherein the one or more hydroprocessing units are selected such that at least 70% of the renewable hydrogen consumed in the fuel production facility ends up in the one or more transportation fuel products.

## BRIEF DESCRIPTION OF THE DRAWINGS

FIG. 1 is a representative simplified process flow diagram of some major processing units in an oil refinery, according to one embodiment;

FIG. 2a is a simplified flow diagram for an older style hydrogen plant using SMR;

FIG. 2b is a simplified flow diagram for a new style hydrogen plant using SMR;

FIG. 3 is a flow diagram illustrating one embodiment wherein a fuel is produced using renewable hydrogen;

FIG. 4 is a flow diagram illustrating one embodiment wherein a fuel is produced using renewable hydrogen;

Fig. 5 is a schematic diagram of an oil refinery which can be used in a fuel production process in accordance with one embodiment;

Fig. 6 is a schematic diagram illustrating a system that can be used to produce fuel in accordance with one embodiment; and

Fig. 7 is a schematic diagram illustrating a system that can be used to produce fuel in accordance with one embodiment.

## DETAILED DESCRIPTION

Certain exemplary embodiments of the invention now will be described in more detail, with reference to the drawings, in which like features are identified by like reference numerals. The invention may, however, be embodied in many different forms and should not be construed as limited to the embodiments set forth herein.

The terminology used herein is for the purpose of describing certain embodiments only and is not intended to be limiting of the invention. For example, as used herein, the singular forms "a," "an," and "the" may include plural references unless the context clearly dictates otherwise. The terms "comprises", "comprising", "including", and/or "includes", as used herein, are intended to mean "including but not limited to." The term "and/or", as used herein, is intended to refer to either or both of the elements so conjoined. The phrase "at least one" in reference to a list of one or more elements, is intended to refer to at least one element selected from any one or more of the elements in the list of elements, but not necessarily including at least one of each and every element specifically listed within the list of elements. Thus, as a non-limiting example, the phrase "at least one of A and B" may refer to at least one A with no B present, at least one B with no A present, or at least one A and at least one B in combination. The terms "cause" or "causing", as used herein, may include arranging or bringing about a specific result (e.g., a withdrawal of a gas), either directly or indirectly, or to play a role in a series of activities through commercial arrangements such as a written agreement, verbal agreement, or contract. The term "associated with", as used herein with reference to two elements (e.g., a fuel credit associated with the transportation fuel), is intended to refer to the two elements being connected with each other, linked to each other, related in some way, dependent upon each other in some way, and/or in some relationship with each other. The term "plurality", as used herein, refers to two or more. The terms "upstream" and "downstream", as used herein, refer to the disposition of a step/stage in the process with respect to the disposition of other steps/stages of the process. For example, the term upstream can be used to describe to a step/stage that occurs at an earlier point of the process, whereas the term downstream can be used to describe a step/stage that occurs later in the process. Unless defined otherwise, all technical and scientific terms used herein have the same meanings as commonly understood by one of ordinary skill in the art.

Oil refineries (i.e., petroleum refineries) include many unit operations and processes. One of the first unit operations is the continuous distillation of crude oil. For example, crude oil may be desalted and piped through a hot furnace before being fed into a distillation unit (e.g., an atmospheric distillation unit or vacuum distillation unit). Inside the distillation unit, the liquids and vapours separate into fractions in dependence upon their boiling point. The lighter fractions, including naphtha, rise to the top, the middle fractions, including kerosene fractions and diesel/heating oil fractions, stay in the middle, and the heavier liquids, often called gas oil, settle at the bottom. After distillation, each of the fractions may be further processed (e.g., in a cracking unit, a reforming unit, alkylation unit, light ends unit, dewaxing unit, coking unit, etc.). The term "unit," as used herein, generally refers to one or more systems that performs a unit operation. Unit operations can involve a physical change and/or chemical transformation. A unit can include one or more individual components. For example, a separation unit can include more than one separation column.

Cracking units use heat, pressure, catalysts, and sometimes hydrogen, to crack heavy hydrocarbon molecules into lighter ones. Complex refineries may have multiple types of crackers, including fluid catalytic cracking (FCC) units and/or hydrocracking units. FCC units (i.e., catalytic crackers or "cat crackers") are often used to process gas oil from distillation units. The FCC process primarily produces gasoline but may also produce important by-products such as liquefied petroleum gas (LPG), light olefins, light cycle oil (LCO), heavy cycle oil (HCO), and clarified slurry oil. Hydrocracking units (i.e., hydrocrackers), which consume hydrogen, also may be used to process gas oils from a distillation unit. However since the hydrocracking process combines hydrogenation and catalytic cracking, it may be able to handle feedstocks that are heavier than those that can be processed by FCC, and thus may be used to process oil from cat crackers or coking units. Hydrocrackers typically produce more middle distillates (e.g., kerosene fractions and/or diesel fractions) than gasoline fractions. Hydrocrackers may also hydrogenate unsaturated hydrocarbons and any sulfur, nitrogen or oxygen compounds (e.g., reduces sulfur and nitrogen levels).

Reforming units (i.e., catalytic reforming units) use heat, moderate pressure, and catalysts to convert heavy naphtha, which typically has a low octane rating, and/or other low octane gasoline fractions, into high-octane gasoline components called reformates. Alkylation units may convert lighter fractions (e.g., by-products of cracking) into gasoline components. Isomerization units may convert linear molecules to higher-octane branded molecules for blending into gasoline or as feedstock to alkylation units.

Hydrotreating units may perform a number of diverse processes including, for example, the conversion of benzene to cyclohexane, aromatics to naphtha, and the reduction of sulfur, oxygen, and/or nitrogen levels. For example, hydrotreating units are often used to remove sulfur from naphtha streams because sulfur, even in very low concentrations, may poison the catalysts in catalytic reforming units. In oil refineries, hydrotreaters (HT) are often referred to as hydrodesulfurization (HDS) units. Hydrotreating units may be used for kerosene, diesel, and/or gas oil fractions. For example, hydrotreating units for diesel may saturate olefins, thereby improving the cetane number.

Both hydrotreating and hydrocracking consume hydrogen and fall within the scope of hydroprocessing. In general, hydrotreating is less severe than hydrocracking (e.g., there is minimal cracking associated with hydrotreating). For example, the time that the feedstock remains at the reaction temperature and the extent of decomposition of non-heteroatoms may differ between hydrotreating and hydrocracking. Hydroprocessing is typically conducted in a hydroprocessing unit. The term "hydroprocessing unit", as used herein, refers to one or more systems (e.g., hydrogenation reactor(s), pumps, compressor(s), separation equipment, etc.) provided for hydroprocessing operations. For example, hydrotreating units and hydrocracking units are examples of hydroprocessing units.

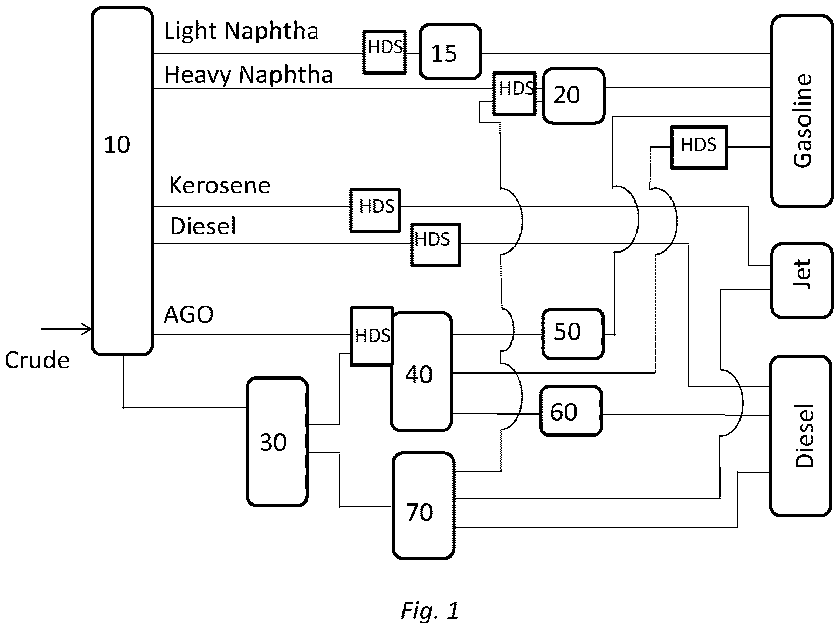

Referring to FIG. 1, there is shown some of the unit operations commonly found in an oil refinery. The crude oil, supplied by a suitable furnace (not shown), is introduced into an atmospheric distillation unit 10, where it is separated into different fractions: atmospheric gas oil (AGO), diesel, kerosene, and naphtha (light and heavy). Light naphtha is directed to an isomerization unit 15 to produce isomerate. Heavy naphtha is directed to a reformer 20 to produce reformate. Residue from the atmospheric distillation process (atmospheric bottoms) is fed to a vacuum distillation unit 30, which produces light vacuum gas oil (LVGO) and heavy vacuum gas oil (HVGO). The AGO and/or LVGO are fed to the FCC 40. The FCC 40 produces, for example, propylene and butylenes, which are fed to an alkylation unit 50. The FCC 40 also produces gasoline (i.e., FCC gasoline) and light cycle oil (LCO). LCO, which is a diesel boiling range product, is a poor diesel fuel blending component without further processing. In Fig. 1, the LCO is fed to a hydrocracker 60; however, other approaches to upgrading LCO may be used. The HVGO is fed to the hydrocracker 70, where it is processed into naphtha, kerosene, and/or diesel fractions. The hydrocracker naphtha may contain naphthene, and thus may be converted to high-octane grade gasoline upon catalytic reforming 20. In general, the hydrocracker products may have a low content of sulfur and/or contaminants.

Referring again to Fig. 1, the various outputs from these unit operations/process units may be blended to provide finished fuels and/or be part of various pools (e.g., gasoline, jet fuel, diesel/heating oil). For example, in Fig. 1, isomerate from the isomerization unit 15, reformate from the reformer 20, alkylate from the alkylation unit 50, and FCC gasoline from the FCC 50 may be part of the gasoline pool, while the straight run diesel (i.e., diesel fraction from the atmospheric crude tower 10), the hydrocracked diesel, and the light cycle oil from the FCC may be part of the diesel pool (e.g., after further processing). Depending on the grade, jet fuel can be largely highly refined kerosene. The term "pool", as used herein, refers to all of the fuel produced by the fuel production process that is ultimately sold as the corresponding fuel pool (e.g., over a given time period). For example, the gasoline pool typically includes all the gasoline boiling range fuels that are ultimately sold as gasoline product but does not include gasoline boiling range fuels that end up in jet fuel. The fuels that contribute to a pool may have different qualities and/or be stored separately. The production of finished fuels by multi-component blending (i.e., mixing of blendstocks) facilitates providing large volumes of finished fuel that meet specifications.

In general, the boiling point ranges of the various product fractions (e.g., gasoline, kerosene/jet fuel, diesel/heating oil) may be set by the oil refinery and/or may vary with factors such as the characteristics of the crude oil source, refinery local markets, product prices, etc. For example, without being limiting, the gasoline boiling point range may span from about 35°C to about 200°C, the kerosene boiling point range may span from about 140° C to about 230°C, and the diesel boiling point range may span from about 180°C to about 400°C. Each boiling point range covers a temperature interval from the initial boiling point, defined as the temperature at which the first drop of distillation product is obtained, to a final boiling point, or end point, where the highest-boiling compounds evaporate.

Of course, it will be appreciated by those skilled in the art that the flow diagram of FIG. 1 is representative only. In practice, the unit operations, process units, and/or general configuration may be dependent on the oil refinery, the desired fuel products, and/or advancing technologies. For example, the configuration and/or technology may be dependent upon whether the oil refinery is designed to produce more gasoline or diesel. In general, some oil refineries, e.g., in the United States (U.S.), often produce more gasoline than diesel, and thus typically include one or more cat crackers. Without being limiting, a typical U.S. refinery may produce about 60% gasoline-fuel components and about 40% diesel/jet fuel components. In some cases, the gasoline to diesel ratio is seasonal and is higher in the summer than the winter to reflect changes in fuel demand.

In addition, although not shown in Fig. 1, a typical oil refinery will include a light ends unit (e.g., for processing the overhead distillate produce from the atmospheric distillation column), and may include units for processing vacuum distillation residues (e.g., the bottom of the barrel), polymerization units, coking units, visbreaking units, tanks, pumps, valves, and so forth. In addition, some of the components illustrated in Fig. 1 may be provided in replicate. For example, there may be multiple, independently operated distillation units. Furthermore, oil refineries typically include various auxiliary facilities (e.g., boilers, wastewater treatments, hydrogen plants, cooling towers, and sulfur recovery units).

Oil refineries typically include numerous hydroprocessing units (e.g., hydrotreaters and/or hydrocrackers), each of which consumes hydrogen at individual rates, purities, and pressures. For example, referring again to Fig. 1, the diesel fraction obtained from the atmospheric distillation unit 10 may be treated with a hydrotreater (HDS) to provide diesel blendstock, whereas naphtha fractions may be hydroprocessed before being sent to the isomerization 15 or catalytic reformer unit 20. The hydrogen used in these hydroprocessing units may be obtained from a variety of sources. One source of hydrogen in an oil refinery may be the reforming unit 20, which when used to produce reformate, also produces hydrogen as a by-product. However, since the quantity of hydrogen produced by the reformer 20 may not be adequate to meet the hydrogen demand of the oil refinery, oil refineries often include a hydrogen production plant and/or are connected to a hydrogen production plant by pipeline.

In general, around 96% of global hydrogen production comes from fossil fuels, with electrolysis largely making up the rest. Steam methane reforming (SMR) of natural gas may be the most used pathway to supply hydrogen for oil refineries. In SMR, methane in natural gas can react with steam to form synthesis gas (syngas), which contains hydrogen ($H_2$) and carbon monoxide (CO). A portion of the carbon monoxide in the syngas may then be converted to carbon dioxide ($CO_2$) in a water gas shift (WGS) reaction. Modern SMR processes are typically equipped with a pressure swing adsorption (PSA) technology to purify the hydrogen rich gas from the carbon dioxide. The hydrogen produced may be about 99.9% pure and is suitable for use in most hydrotreating and/or hydrocracking processes.

Unfortunately, SMR may be one of the main sources of carbon dioxide emissions in an oil refinery. These greenhouse gas emissions from SMR are in addition to those greenhouse emissions subsequently caused by using the fossil-based fuels as a transportation fuel. While the greenhouse emissions of the process may be reduced by using hydrogen produced using electrolysis, the instant inventors have recognized that there may be various advantages to using hydrogen produced from biomass, and more specifically, to using hydrogen produced from renewable methane. For example, using renewable methane provides the opportunity to use existing infrastructure (e.g., renewable methane may be co-fed with non-renewable methane (from fossil sources) to the SMR reactor). In addition, there may be opportunities to use the renewable methane in the SMR process as a fuel. Using hydrogen produced from biomass, in general, is advantageous because the hydrogen is of biological origin and thus it, or fuels produced using it, can qualify for incentives otherwise not available for hydrogen of non-biological origin.

In accordance with one embodiment of the instant invention, renewable hydrogen (e.g., produced from renewable methane) is used in any hydroprocessing unit in a refinery, and thus its use may produce fuel that is considered renewable or to have renewable content. The term "fuel", as used herein, refers to material that can be combusted to produce heat and/or power, and encompasses finished fuels (i.e., that meet specifications for transportation and/or heating use) and fuel components such as blendstock. The term "renewable content", as used herein, refers the portion of the fuel(s) that is recognized and/or qualifies as renewable (e.g., a biofuel) under applicable regulations. Advantageously, the fuel and/or the renewable content, may have reduced lifecycle greenhouse gas emissions or a reduced carbon intensity. The term "carbon intensity" or "CI" refers to the quantity of lifecycle greenhouse gas emissions, per unit of fuel energy, which is typically expressed in equivalent carbon dioxide emissions (e.g., $gCO_2e/MJ$ or $kgCO_2e/MMBtu$). As is known to those skilled in the art, the carbon intensity of a fuel is typically determined using a net lifecycle GHG analysis. A lifecycle GHG analysis, which generally evaluates the GHG emissions of a product, typically considers GHG emissions of each: (a) the feedstock production and recovery (including if the carbon in the feedstock is of fossil origin (such as petroleum) or of atmospheric origin (such as with biomass)), direct impacts like chemical inputs, energy inputs, and emissions from the collection and recovery operations, and indirect impacts like the impact of land use changes from incremental feedstock production; (b) feedstock transport (including energy inputs, and emissions from transport); (c) fuel production (including chemical and energy inputs, emissions and byproducts from fuel production (including direct and indirect impacts)); (d) transport and storage prior to use as a transport fuel (including chemical and energy inputs and emissions from transport and storage), and (e) tailpipe emissions. Models for conducting lifecycle GHG emission analyses are known (e.g., GREET model developed by Argonne National Laboratory (ANL)). As will be understood by those skilled in the art, the lifecycle GHG emissions analysis used to determine the carbon intensity of the fuel can vary and be dependent on the applicable regulations (e.g., for fuel credit generation).

## Renewable methane

In general, renewable methane is methane produced from biomass. When methane is sourced from biomass, and is not sourced from fossil resources (e.g., buried combustible geologic deposits of organic material), it can be considered a biofuel. While the bulk of existing renewable methane may come from processes that capture gas from the anaerobic digestion (AD) of organic material, it is also possible to produce renewable methane from the gasification of biomass. For example, the gasification of biomass may produce syngas, which may be treated to remove one or more components, methanated, and separated into methane and carbon dioxide.

In one embodiment, renewable methane is obtained from biogas. Biogas refers to the gas produced by the anaerobic digestion of organic material. Biogas, which is a mixture of gases, is largely made up of methane and carbon dioxide. The methane in biogas is renewable methane.

Biogas may be produced by anaerobic digestion that occurs naturally (e.g., in a landfill) or in an engineered environment (e.g., an anaerobic digester). In one embodiment, the renewable methane is produced at one or more landfills. In one embodiment, the renewable methane is produced from one or more anaerobic digesters. In one embodiment, the renewable methane is produced at an anaerobic digestion facility.

In general, the renewable methane may be produced from any suitable biomass. In one embodiment, the renewable methane is produced from (i) agricultural crops, (ii) trees grown for energy production, (iii) wood waste and wood residues, (iv) plants (including aquatic plants and grasses), (v) residues, (vi) fibers, (vii) animal wastes and other waste materials, and/or (viii) fats, oils, and greases (including recycled fats, oils, and greases).

In one embodiment, the renewable methane is produced from (i) manure, (ii) agricultural by-products, (iii) energy crops, (iv) wastewater sludge, (v) industrial waste, (vi) source separated organics, and/or (vii) municipal solid waste.

In one embodiment, the renewable methane is produced from waste organic material. The term "waste organic material", as used herein, refers to organic material used as a feedstock in a waste-to-fuel process, where the feedstock qualifies as a waste or residue for fuel credit generation. Waste organic material includes but is not limited to, residues from agriculture, aquaculture, forestry and fisheries, and includes wastes and processing residues (e.g., organic municipal waste, manure, sewage sludge, waste wood, etc.). In one embodiment, the renewable methane is produced from a non-woody organic waste. In one embodiment, the renewable methane is produced from non-food cellulosic or lignocellulosic material.

In one embodiment, the renewable methane is produced from organic material that includes (i) animal waste material and/or animal byproducts; (ii) separated yard waste and/or food waste, including recycled cooking and trap grease; or (iii) landfill waste, including, but not limited to, food and yard waste.

In one embodiment, the renewable methane is produced from organic material selected in dependence upon available incentives (e.g., fuel credits). Some regulatory authorities may provide different incentives for different feedstocks. For example, biofuels derived from organic waste or dedicated energy crops may be eligible for additional incentive-based rewards. In one embodiment, the renewable methane is produced only from organic waste material. In one embodiment, the renewable methane is produced only from organic waste material selected from landfill, municipal wastewater sludge, food scraps, urban landscaping waste, and/or manure. In one embodiment, the renewable methane is produced only from the organic portion of municipal solid waste (i.e., is landfill gas). In one embodiment, the renewable methane is produced only from manure (e.g., dairy or swine). In one embodiment, the renewable methane is produced only from a dedicated energy crop. In one embodiment, the renewable methane is produced only from organic waste material that does not include landfill material.

In one embodiment, the renewable methane is produced at a biogas production facility, which is an operation that produces biogas either as a target product or as a coproduct (e.g., agricultural, municipal, or industrial operation). This includes, without limitation, a landfill, a facility containing anaerobic digesters, a waste treatment facility, such as a sewage treatment facility, and a manure digestion facility.

In one embodiment, the renewable methane is obtained by collecting biogas from a single biogas production facility. For example, in one embodiment, the biogas production facility is a large landfill or is a centralized anaerobic digester facility that receives organic material (e.g., manure) from a plurality of sources (e.g., remote farms).

In one embodiment, the renewable methane is obtained by collecting biogas from a plurality of biogas production facilities (e.g., landfills and/or anaerobic digesters). For example, in one embodiment, the renewable methane is obtained from an aggregate of biogases transported to a centralized location by pipeline, truck, rail, and/or ship.

Biogas collected at its source (e.g., a landfill or anaerobic digester) is typically referred to as raw biogas. Raw biogas, which is largely composed of methane and carbon dioxide, may also contain hydrogen sulfide ($H_2S$), water ($H_2O$), nitrogen ($N_2$), ammonia ($NH_3$), hydrogen ($H_2$), carbon monoxide (CO), oxygen ($O_2$), siloxanes, volatile organic compounds (VOCs), and/or particulates. Without being limiting, raw biogas may have a methane content between about 35% and 75% (e.g., average of about 60%) and a carbon dioxide content between about 15% and 65% (e.g., average of about 35%). The percentages used to quantify gas composition and/or a specific gas content, as used herein, are expressed as mol%, unless otherwise specified.

In one embodiment, the renewable methane is obtained by collecting raw biogas. In one embodiment, the raw biogas is subjected to a cleaning, partial purification, or full biogas upgrading. The term "partial purification", as used herein, refers to a process wherein biogas is treated to remove one or more non-methane components (e.g., $CO_2$, $H_2S$, $H_2O$, $N_2$, $NH_3$, $H_2$, CO, $O_2$, VOCs, and/or siloxanes) to produce a partially purified biogas, where the partially purified biogas fails to qualify as RNG and/or will be subject to further purification. The term "biogas cleaning", as used herein, refers to a process that removes some $H_2O$, $H_2S$, VOCs, siloxanes, and/or particulates from the biogas, but does not remove significant amounts of carbon dioxide and/or nitrogen. The term "biogas upgrading", as used herein, refers to a process that increases the calorific value of biogas by removing at least some carbon dioxide and/or nitrogen. Optionally, biogas upgrading may also remove $H_2S$, $H_2O$, $NH_3$, $H_2$, CO, $O_2$, VOCs, siloxanes, and/or particulates. The term "full biogas upgrading", as used herein, refers to a process that removes sufficient quantities of non-methane components (e.g., $CO_2$, $H_2S$, $H_2O$, $N_2$, $NH_3$, $H_2$, CO, $O_2$, VOCs, and/or siloxanes) to produce renewable natural gas (RNG). The term "renewable natural gas" or "RNG", as used herein, refers to biogas (or another gas containing renewable methane) that has been upgraded to meet or exceed applicable pipeline quality standards and/or specifications, meet or exceed applicable quality specifications for vehicle use (e.g., CNG specifications), and/or a gas that qualifies as RNG under applicable regulations. For example, RNG includes natural gas leaving a distribution system that has been assigned environmental attributes associated with a corresponding amount of renewable natural gas, upgraded from biogas, that was injected into the distribution system. Pipeline specifications include specifications required for the biogas for injection into the pipeline. Pipeline quality standards or specifications may vary by region and/or country in terms of value and units. For example, pipelines standards may require a methane level that is greater than 95%. In addition, or alternatively, the pipeline standards may refer to the purity of the gas expressed as a heating value (e.g., $MJ/m^3$ or in BTU/standard cubic foot). Pipeline standards may require, for example, that the heating value of RNG be greater than about 950 BTU/scf, greater than about 960 BTU/scf, or greater than about 967 BTU/scf. In the United States (US), RNG and CNG standards may vary across the country. For example, for one company, the pipeline specifications may require a heating value between 967 and 1110 BTU/scf, a $CO_2$ content less than 1.25%, an $O_2$ content less than 0.02%, a total inert content (e.g., $CO_2$, $N_2$, helium, argon, neon) less than 4%, a $H_2S$ concentration less than 0.25 gr/100 scf of gas, and a water concentration less than 7 lbs/MMscf. Whereas for another company, the pipeline specifications may require a heating value greater than 970 BTU/scf, a $CO_2$ content less than 1.4%, an $O_2$ concentration less than 10 ppm, an $N_2$ content less than 1.2%, and $H_2S$ concentration less than 1 ppm. The specifications for CNG for vehicle use may include a heating value between 940-1100 BTU/scf, a $CO_2$+$N_2$ content less than about 4%, an $O_2$ content less than 1%, and a $H_2S$ content less than 6 ppm(v). In one embodiment, the RNG produced has a methane content of at least 95%. In one embodiment, the RNG produced has a heating value of at least 950 BTU/scf.

In general, any known process and/or technology, or combination of processes and technologies, known in the art for removing non-methane components from biogas may be used for the biogas cleaning, partial purification, or full biogas upgrading. For example, carbon dioxide removal may be achieved using various scrubbing techniques, PSA, membrane separation, or cryogenic separation. In any case, the raw biogas, partially purified biogas, or RNG, contains methane that is considered renewable (i.e., renewable methane).

### Providing Renewable Methane

In one embodiment, renewable methane is provided to and/or within one or more hydrogen plants as raw biogas, partially purified biogas, or RNG. For example, the renewable methane may be transported to the hydrogen plant using a pipeline and/or may be transported to the hydrogen plant(s) in a vessel by vehicle (e.g., truck, rail car, or ship). In one embodiment, the renewable methane is transported using a natural gas distribution system. The term "distribution system", as used herein, refers to a single pipeline or interconnected network of pipelines (i.e., physically connected). Distribution systems are used to distribute a product (e.g., natural gas, hydrogen, etc.), often to multiple users and/or destinations (e.g., businesses and households). A distribution system can include pipelines owned and/or operated by different entities and/or pipelines that cross state, provincial, and/or national borders, provided they are physically connected. One example of a distribution system is the U.S. natural gas grid, which includes interstate pipelines, intrastate pipelines, and/or pipelines owned by local distribution companies. The term "providing" as used herein with respect to an element, refers to directly or indirectly obtaining the element and/or making the element available for use.

In one embodiment, the renewable methane is provided as raw biogas by pipeline. In this embodiment, since the raw biogas may have a significant $CO_2$ content, the pipeline may be a dedicated pipeline (e.g., a pipeline designed to provide raw and/or partially purified biogas from one or more sources to the hydrogen plant). In one embodiment, the renewable methane is provided as raw biogas in a vessel by vehicle (e.g., truck, rail car, or ship). In embodiments where the renewable methane is provided as raw biogas, the raw biogas is optionally upgraded at the hydrogen plant.

In one embodiment, the renewable methane is provided as partially purified biogas by pipeline. In this embodiment, since the partially purified biogas may have a significant $CO_2$ content, the pipeline may be a dedicated pipeline (e.g., a pipeline designed to transport raw and/or partially purified biogas from one or more sources to the hydrogen plant). In one embodiment, the renewable methane is provided as partially purified biogas in a vessel by vehicle (e.g., truck, rail car, or ship). In embodiments where the renewable methane is provided as partially purified biogas, the partially purified biogas is optionally upgraded at the hydrogen plant.

In one embodiment, the renewable methane is provided as RNG by pipeline. In this embodiment, the RNG may be transported using a dedicated pipeline (e.g., a pipeline designed to transport only RNG), or may be transported using a commercial distribution system (e.g., a natural gas grid). In one embodiment, the renewable methane is provided as RNG in a vessel by vehicle (e.g., truck, rail car, or ship). Advantageously, RNG can be transported using transportation methods established for pipeline natural gas. For example, natural gas may be transported as compressed natural gas (CNG) (e.g., at 2900 psig (20 MPa) - 3600 psig (25 MPa)) or as liquefied natural gas (LNG). In one embodiment, the renewable methane is transported as a compressed gas (e.g., bio-CNG) or a liquefied gas (e.g., bio-LNG).

In general, when RNG is provided by pipeline, it is transferred as a fluid (e.g., in gaseous or liquid form), and may be provided as a segregated batch or a fungible batch. The term "batch", as used herein, refers to a certain amount of the gas (e.g., measured using volume, mass, and/or energy delivered) and does not imply or exclude an interruption in the production and/or delivery.

In one embodiment, RNG is provided as a fungible batch using a distribution system. When RNG is provided as a fungible batch in a distribution system, a quantity of RNG (e.g., in MJ) is injected into the distribution system, where it can comingle with non-renewable methane (derived from fossil sources), and an equivalent quantity of gas (e.g., in MJ) is withdrawn at another location. Since the transfer or allocation of the environmental attributes of the RNG injected into the distribution system to gas withdrawn at a different location is typically recognized, the withdrawn gas is recognized as RNG and/or qualifies as RNG under applicable regulations (e.g., even though the withdrawn gas may not contain actual molecules from the original biomass and/or contains methane from fossil sources). Such transfer may be carried out on a displacement basis, where transactions within the distribution system involve a matching and balancing of inputs and outputs. Typically, the direction of the physical flow of gas is not considered. For purposes herein, the term "renewable methane" refers to methane derived from biomass (and not fossil sources) and/or to methane withdrawn from a distribution system that is recognized as and/or qualifies as renewable methane under applicable regulations (e.g., for fuel credit generation). Establishing that a gas is recognized as and/or qualifies as renewable methane/RNG (e.g., originates from renewable sources) under applicable regulations can depend on whether the gas is transported by truck or by pipeline and the practices and requirements of the applicable regulatory agency, where such practices may include, for example, the use of chain of custody accounting methods such as identity preservation, book-and-claim, and a mass balance system.

In one embodiment, wherein the renewable methane is provided as a fungible batch using a distribution system, the process includes injecting RNG into the distribution system at injection point that meters the volume of RNG injected into the distribution system, withdrawing an equivalent (or smaller) volume of gas from the distribution system (e.g., determined by a gas meter), and reporting the withdrawn gas as dispensed as RNG.

In one embodiment, the balancing of inputs and/or outputs for the distribution system includes monitoring the energy content and/or energy delivered. The term "energy content", as used herein, refers to the energy density, and more specifically to the amount of energy contained within a volume of gas (e.g., measured in units of BTU/scf or $MJ/m^3$). Heating value is one example of an energy content measurement. The term "energy delivered", as used herein, is a measure of the amount of energy delivered to or from the distribution system in a particular time period, or series of time periods (e.g., discrete increments of time), such as, without limitation, hourly, daily, weekly, monthly, quarterly, or yearly intervals. The energy delivered may be obtained after determining values representing the energy content and flow (e.g., volume) for a particular time period. In particular, the energy delivered may be obtained from the product of these two values, multiplied by the time according to the following:

Energy delivered (BTU) = Σ ((energy content (BTU/cubic foot) * volume of flow (cubic feet/min)) * number of minutes In one embodiment, the energy delivered is provided by a meter.

In one embodiment, the process includes producing RNG directly from raw biogas, and transporting the RNG to the hydrogen plant as a fungible batch in a natural gas distribution system, where the transporting includes (i) causing a first amount of RNG to be introduced into the distribution system; and (ii) withdrawing at the destination a second amount of the RNG, which is approximately equal in energy content to the first amount of RNG.

In one embodiment, the renewable methane used to produce the renewable hydrogen is sourced from (i) biogas derived from anaerobic digestion; (ii) methane, including natural gas and/or fossil fuel derived methane which qualifies under applicable laws and/or regulations to be treated as renewably derived biogas; or (iii) any combination of (i) or (ii).

In one embodiment, the renewable methane is provided to a hydrogen plant and/or a fuel production facility. The term "fuel production facility", as used herein, refers to any processing plant or plants used for the processing and/or refining of crude oil or crude oil derived hydrocarbons into more useful products, including but not limited to, fuels (e.g., liquid transportation fuels) and/or fuel intermediates. For example, some products that can be produced by a fuel production facility include, but are not limited to, gasoline, diesel, heating oil, kerosene, jet fuels, fuels made from naphtha, fuel oils, and/or liquefied petroleum gas. A fuel production facility can also provide some non-fuel products, including, but not limited to, asphalt, greases, waxes, lubricants, and/or chemicals. In one embodiment, the fuel production facility is an oil refinery. An oil refinery is a fuel production facility that has crude oil as its primary input and produces fuels and other products.

### *Renewable Hydrogen Production*

In general, the renewable hydrogen may be produced at one or more hydrogen plants situated at the fuel production facility and/or or at one or more hydrogen plants located off-site. In one embodiment, the hydrogen production plant is located off-site (e.g., is owned by a third party), and the renewable hydrogen is transferred from the hydrogen plant to the fuel production facility by pipeline and/or truck (e.g., as a gas or liquid). In one embodiment, the hydrogen production plant is located within the fuel production facility and/or is otherwise integrated with the fuel production facility (e.g., is owned by the refinery or a third party). In one embodiment, the renewable hydrogen is produced at the hydrogen plant and is distributed throughout the fuel production facility (e.g., to the selected unit operations) in one or more pipe systems. The term "hydrogen plant", as used herein, refers to a system or combination of systems primarily used for producing hydrogen (e.g., by reforming a methane containing gas (e.g., natural gas) or from the gasification of biomass (e.g., to produce syngas that can be treated/purified to produce a stream enriched in hydrogen)).

The term "renewable hydrogen", as used herein, refers to hydrogen produced or derived from biomass (e.g., from the reforming of a gas containing renewable methane and/or RNG, or from the gasification of biomass), and includes hydrogen that has been assigned environmental attributes of hydrogen produced or derived from biomass. For example, the term "renewable hydrogen" as used herein, includes hydrogen withdrawn from a hydrogen pipe system which is associated with the environmental attributes of a corresponding quantity of renewable hydrogen injected or otherwise fed into the hydrogen pipe system.

In one embodiment, the renewable hydrogen is produced using renewable methane transported to the hydrogen plant as raw biogas, partially purified biogas, or RNG by truck. In one embodiment, the renewable hydrogen is produced using renewable methane provided to the hydrogen plant as raw biogas, partially purified biogas, or RNG by pipeline. In one embodiment, the renewable hydrogen is produced using renewable methane provided to the hydrogen plant as a fungible batch using a natural gas distribution system, where the natural gas withdrawn from the distribution system is assigned environmental attributes of a corresponding amount of RNG injected into the distribution system and is recognized as and/or qualifies as RNG under applicable regulations (e.g., for fuel credit generation). In one embodiment, the renewable hydrogen is transported to the fuel production facility as a fungible batch using a hydrogen distribution system (e.g., a hydrogen pipeline fed by multiple hydrogen plants).

In general, the renewable hydrogen may be produced using any suitable technology known in the art where methane is converted to hydrogen. Examples of technologies that may be suitable for producing renewable hydrogen using renewable methane include, but are not limited to, autothermal reforming (ATR), steam methane reforming (SMR), partial oxidation (POX), and dry methane reforming (DMR). SMR, ATR, and DMR, which are types of catalytic reforming, may operate by exposing a gas containing the methane to a catalyst at high temperature and pressure to produce syngas (e.g., a mixture of gases including hydrogen and carbon monoxide). POX reactions, which include thermal partial oxidation reactions (TPOX) and catalytic partial oxidation reactions (CPOX), may occur when a sub-stoichiometric fuel-oxygen mixture is partially combusted in a reformer. POX also may be referred to as oxidative reforming.

In one embodiment, the renewable hydrogen is produced by subjecting a gas containing the renewable methane to an SMR reaction. For example, in one embodiment, a gas stream containing raw biogas, partially purified biogas, RNG or any combination thereof, is a feedstock for a hydrogen production process that uses a steam methane reformer configured to support the following reaction:

$$CH_4 + H_2O + heat \rightarrow CO + 3H_2 \qquad (1)$$

The carbon monoxide in the syngas produced by the SMR may be reacted with water in a water gas shift (WGS) reaction to form carbon dioxide and more hydrogen, as follows:

$$CO + H_2O \rightarrow CO_2 + H_2 + small\ amount\ of\ heat \qquad (2)$$

In general, the heat required for the catalytic reforming of Eq. 1 may be provided by burning a fuel in the combustion chamber of the steam methane reformer (e.g., the combustion chamber may surround the reformer tubes in which the reaction is conducted). Without being limiting, the catalyst may be nickel-based. Optionally, the catalyst is supported on suitable material (e.g., alumina, etc.). Optionally, promoters (e.g., MgO) are added. Without being limiting, conventional steam reforming units may operate at pressures between 200 psig (1.38 MPa) and 600 psig (4.14 MPa) and temperatures between about 450 to 1000°C. In general, SMR is one of the most commonly used technologies for hydrogen production. Advantageously, SMR is well proven, simple, and does not require an oxygen feedstock.

In one embodiment, the renewable hydrogen is produced by subjecting a gas containing the renewable methane to an ATR reaction. In general, ATR combines partial oxidation and catalytic steam or carbon dioxide reforming of methane in a single reactor. Heat generated from the partial oxidation (e.g., in the combustion zone of the reactor) may be used in the catalytic reforming (e.g., in the reforming zone of the reactor). Accordingly, a stand-alone ATR may not require the supply or dissipation of thermal energy. In one embodiment, a gas stream containing raw biogas, partially purified biogas, RNG or any combination thereof, is a feedstock for a hydrogen production process that uses an ATR reformer configured to support one of the following reactions:

$$2CH_4 + O_2 + CO_2 \rightarrow 3H_2 + 3CO + H_2O \qquad (3)$$

$$4CH_4 + O_2 + 2H_2O \rightarrow 10H_2 + 4CO \qquad (4)$$

One key difference between SMR and ATR is that ATR typically uses oxygen as a feed, whereas SMR does not (e.g., an oxygen plant may be required). Without being limiting, conventional ATR plants may operate at temperatures between about 750 to 1400°C. ATR, which is often used for smaller scale hydrogen production, may afford higher hydrogen production than POX and faster start-up and response times than SMR. Advantageously, the H2:CO ratio provided by ATR may be varied (e.g., the $H_2$:CO decreases with the addition of carbon dioxide in the feed). The carbon monoxide in the syngas produced by ATR may be reacted with water in a WGS reaction according to Eq. 2 to increase the partial pressure of hydrogen.

In one embodiment, the renewable hydrogen is produced by subjecting a gas containing the renewable methane to a TPOX reaction. For example, in one embodiment, a gas stream containing raw biogas, partially purified biogas, RNG, or any combination thereof, is a feedstock for a hydrogen production process that uses a TPOX reactor configured to support the following reaction:

$$CH_4 + \tfrac{1}{2} O_2 \rightarrow CO + 2H_2 + heat \qquad (5)$$

This reaction is referred to as a partial oxidation because it lacks the stoichiometric amount of oxygen required to completely oxidize the hydrocarbons to carbon dioxide. In addition to hydrogen and carbon monoxide, the product gas may also contain nitrogen if the reaction is carried out with air rather than pure oxygen and/or a relatively small amount of carbon dioxide and/or other compounds. For example, some secondary reactions that may occur during a POX reaction include:

$$CO + \tfrac{1}{2} O_2 \rightarrow CO_2 + heat \qquad (6)$$

$$H_2 + \tfrac{1}{2} O_2 \rightarrow H_2O + heat \qquad (7)$$

In general, TPOX is mildly exothermic, and therefore does not have the fuel demand required for SMR. Without being limiting, the non-catalytic POX reactors may operate at pressures between 430 psig (2.96 MPa) and 1000 psig (6.89 MPa) and temperatures between about 1200 to 1500°C.

In one embodiment, the renewable hydrogen is produced by subjecting a gas containing the renewable methane to a CPOX reaction. For example, in one embodiment, a gas stream containing raw biogas, partially purified biogas, RNG, or any combination thereof, is a feedstock for a hydrogen production process that uses a CPOX reactor. Without being limiting, the catalyst may be nickel-based, or based on another suitable material (e.g., rhodium, ruthenium, or platinum).

Optionally, the catalyst is supported and/or contains promoters (e.g., CaO, MgO, etc.) are used. Without being limiting, CPOX reactors may operate at pressures between 220 psig (1.52 MPa) and 500 psig (3.45 MPa) and temperatures between about 900 to 1000°C.

In one embodiment, the renewable hydrogen is produced by subjecting a gas containing renewable methane to a DMR reaction, wherein carbon dioxide is used instead of water. For example, in one embodiment, a gas stream containing raw biogas, partially purified biogas, RNG, or any combination thereof, is a feedstock for a hydrogen production process that uses a dry reformer configured to support the following reaction:

$$CO_2 + CH_4 \rightarrow 2CO + 2H_2 \qquad (8)$$

Advantageously, the carbon dioxide in raw biogas, partially purified biogas, or RNG, may be beneficial in the DMR process. Unfortunately, the use of carbon dioxide may increase the risk of carbon formation and/or may reduce the hydrogen yield. For example, with respect to the latter, some of the hydrogen produced may be consumed in the undesirable reverse water gas shift reaction (R-WGS) in which hydrogen reacts with carbon dioxide to produce carbon monoxide and water.

$$CO_2 + H_2 \rightarrow CO + H_2O \qquad (9)$$

This reduces the efficiency of the reformer/process. Nevertheless, the potential of DMR for hydrogen production may increase with continuing advancements in the field and/or when it is combined with another reforming process. Without being limiting, the DMR catalyst may be iron, ruthenium, palladium, or platinum based.

For purposes herein, methane reforming includes SMR, ATR, DMR, and POX reactions. In one embodiment, the renewable hydrogen is produced by subjecting a gas containing renewable methane to more than one type of reforming. In general, these reforming reactions may be conducted in the same or different reactors.

In one embodiment, the renewable hydrogen is produced by subjecting a gas containing renewable methane to an SMR reaction followed by an ATR reaction. For example, in one embodiment, a gas stream containing raw biogas, partially purified biogas, RNG, or any combination thereof, is a feedstock for a hydrogen production process that uses a methane reformer configured to support the reaction in Eq. 1. Any unreacted methane exiting the primary SMR reactor may be converted in the secondary ATR reactor. The resulting syngas may be subjected to a WGS and hydrogen purification process.

In one embodiment, the renewable hydrogen is produced by subjecting a gas containing renewable methane to a syngas production process that combines partial oxidation of methane with SMR. For example, in one embodiment, the reforming process is an ATR process that combines POX of methane with SMR in a single reactor. In one embodiment, the renewable hydrogen is produced by subjecting a gas containing renewable methane to a syngas production process that combines partial oxidation of methane with DMR. For example, in one embodiment, the reforming process is an ATR process that combines POX of methane with DMR in a single reactor.

In one embodiment, the renewable hydrogen is produced by subjecting a gas containing renewable methane to a syngas production process that uses a tri-reforming process. For example, in one embodiment, the reforming process provides the synergetic combination of DMR, SMR, and POX in a single reactor. Although SMR may be the leading methane reforming technology, it is a highly energy intensive process. The use of these alternate methane reforming processes (e.g., DMR or tri-reforming) is particularly interesting for embodiments where the feedstock contains carbon dioxide (e.g., partially purified biogas).

The above-described methods of converting a methane containing gas to hydrogen (i.e., SMR, ATR, DMR, and/or POX) are well-known in the art, and those in the art will understand that the methane reforming method, operating conditions, and/or configuration may be selected in dependence upon the feedstock and/or the desired product. For example, it may be advantageous to provide a feedstock purification stage and/or a pre-reforming stage. A purification stage may remove sulfur, chloride, olefin, and/or other compounds that may be detrimental to downstream reforming catalysts (e.g., SMR catalysts). Pre-reforming may allow a higher inlet feed temperature with minimal risk of carbon deposition. As will be understood by those skilled in the art, methane reformers are often configured to receive a natural gas feedstock (e.g., pipeline natural gas). The term "natural gas" or "NG", as used herein, refers to mixture of hydrocarbon compounds that is gaseous at standard temperatures and pressures, where the primary component is methane. In general, the methane reformers in a hydrogen plant may be able to convert any of the hydrocarbons present in the natural gas to syngas (i.e., not just the methane).

In any case, the process of converting methane to hydrogen (e.g., based on SMR, ATR, DMR, and/or POX) may use a shift reactor. In the SMR reaction discussed above, the SMR catalyst may be active with respect to the WGS reaction. For example, the gas leaving the steam reformer may be in equilibrium with respect to the WGS reaction. However, syngas leaving the steam methane reformer typically contains a significant amount of carbon monoxide that can be converted in the WGS reaction. Since the WGS reaction is exothermic, cooling of the syngas over a selected catalyst may promote the WGS reaction, and thus may increase the $H_2$ content of the syngas while decreasing the CO content. Accordingly, it may be advantageous to provide one or more WGS reactors (i.e., shift reactors) downstream of the methane reforming reactors. In general, shift reactors may use any suitable type of shift technology (e.g., high temperature shift conversion, medium temperature shift conversion, low temperature shift conversion, sour gas shift conversion, or isothermal shift). For example, WGS reactions may be conducted at temperatures between 320-450°C (high temperature) and/or between 200-250°C (low temperature). Without being limiting, high temperature thermal shift may be conducted with an iron oxide catalyst (e.g., supported by chromium oxide), whereas low temperature thermal shift may be conducted with a Cu/ZnO mixed catalyst. Optionally, a promoter is added.

In one embodiment, a WGS is conducted following SMR, ATR, TPOX, CPOX, or DMR, or any combination thereof, in order to convert some of the carbon monoxide in the syngas produced to additional hydrogen. In general, there may be one or more stages of WGS to enhance the hydrogen concentration in the reformate stream. For example, the WGS may be conducted in a high temperature WGS reactor (e.g., 350°C) followed by a low temperature WGS reactor (e.g., 200°C).

Without being limiting, and dependent upon the selected reactions and reaction conditions, the WGS product gas may contain about 60 to 80% hydrogen (dry basis) and/or about 10-25% carbon dioxide (dry basis). The WGS product gas may also contain some water, methane, carbon monoxide and/or nitrogen. Without being limiting, the WGS product gas (i.e., shifted gas), which may be at about 210-220°C, may be cooled down (e.g., to 35-40°C), condensate separated, and excess heat recovered.

A hydrogen purification process may separate out relatively pure hydrogen and/or may remove carbon dioxide, carbon monoxide, methane, and/or any other impurities from the syngas, to provide a stream enriched in hydrogen (i.e., containing at least 80% hydrogen). In one embodiment, the hydrogen purification process produces an enriched hydrogen stream having a hydrogen content of at least 90, 92, 94, 96, 98, 99, or 99.5%. In one embodiment, the hydrogen purification process produces an enriched hydrogen stream having a hydrogen content of at least 99.9%. In one embodiment, the hydrogen purification process includes a carbon dioxide removal process. In one embodiment, gas produced by the WGS (i.e., the shifted gas) is subjected to a hydrogen purification process. In one embodiment, the gas produced by the WGS is subjected to a carbon dioxide removal process. In one embodiment, gas produced by the SMR, the ATR, the POX, or the DMR, is subjected to a hydrogen purification process. In one embodiment, the gas produced by the SMR, the ATR, the POX, or the DMR, is subjected to a carbon dioxide removal process.

Without being limiting, some examples of suitable hydrogen purification technologies include: a) absorption, b) adsorption, c) membrane separation, d) cryogenic separation, and e) methanation. Without being limiting, some examples of suitable carbon dioxide removal technologies include: a) absorption, b) adsorption, c) membrane separation, and d) cryogenic separation. For example, carbon dioxide may be removed from syngas using amines, hot potassium carbonate, physical solvents (e.g., methanol), or membranes.

In one embodiment, the product gas from the SMR, ATR, POX, DMR, or WGS is fed to an absorption process. Absorption processes that remove carbon dioxide may include scrubbing with a weak base (e.g., potassium carbonate) or an amine (e.g., ethanolamine). For example, carbon dioxide may be captured using a monoethanolamine (MEA) unit or a methyl-diethanolamine (MDEA) unit. A MEA unit may include one or more absorption columns containing an aqueous solution of MEA at about 30 wt%. The outlet liquid stream of solvent may be treated to regenerate the MEA and separate carbon dioxide.

In one embodiment, the product gas from the SMR, ATR, POX, DMR, or WGS is fed to an adsorption process. Adsorption processes may use an adsorbent bed (e.g., molecular sieves, activated carbon, active alumina, or silica gel) to remove impurities such as methane, carbon dioxide, carbon monoxide, nitrogen, and/or water from the syngas (e.g., shifted gas). More specifically, these impurities may be preferentially adsorbed over hydrogen, yielding a relatively pure hydrogen stream. In some cases, the impurities may be adsorbed at higher partial pressures and desorbed at lower partial pressures, such that the adsorption beds may be regenerated using pressure. Such systems /processes are typically referred to as pressure swing adsorption (PSA) systems/processes. In general, PSA systems may be the most commonly used hydrogen purification processes used in hydrogen plants. In one embodiment, the product gas from the SMR, ATR, POX, DMR, or WGS is fed to a PSA system. For example, one example of a PSA system is a vacuum PSA system (VPSA). In one embodiment, the gas from the SMR, ATR, POX, DMR, or WGS is fed to an MDEA unit and then to a PSA system. This embodiment is advantageous in that it allows the capture of carbon dioxide (e.g., by absorption) and provides a relatively pure hydrogen (e.g., by PSA). Some adsorption beds may be regenerated with temperature.

In one embodiment, the product gas from the SMR, ATR, POX, DMR, or WGS is fed to a membrane separation. The principle behind membrane separation is based on different molecules having varying permeability through a membrane. More specifically, some molecules, referred to as the permeant(s) or permeate, diffuse across the membrane (e.g., to the permeate side). Other molecules do not pass through the membrane and stay on the retentate side. The driving force behind this process is a difference in partial pressure, wherein the diffusing molecules move from an area of high concentration to an area of low concentration. For hydrogen purification, the permeable gas typically is hydrogen. While hydrogen separation through a membrane may have a relatively high recovery rate, this may come at the expense of reduced purity.

In one embodiment, the product gas from the SMR, ATR, POX, DMR, or WGS is fed to a cryogenic separation. The principle of cryogenic separation is based on the fact that different gases may have distinct boiling/sublimation points. Cryogenic separation processes may involve cooling the product gas down to temperatures where the impurities condense or sublimate and can be separated as a liquid or a solid fraction, while the hydrogen accumulates in the gas phase. For example, cryogenic separations may use temperatures below -10°C or below -50°C. In one embodiment, cryogenic separation is combined with another technique (e.g., washing) to remove some impurities (e.g., before cryogenic separation).

In one embodiment, the product gas from the SMR, ATR, POX, DMR, or preferably from the WGS, is subjected to a methanation. Methanation is a catalytic process that can be conducted to convert the residual carbon monoxide and/or carbon dioxide in the syngas to methane. For example, see equation 10.

$$CO + 3H_2 \rightarrow CH_4 + H_2O \qquad (10)$$

Since the methanation reaction consumes hydrogen, it can be advantageous to provide a carbon dioxide removal step prior to the methanation step.

In one embodiment, the WGS product is subjected to a carbon dioxide removal based on wet scrubbing using amine absorption and regeneration, and any carbon monoxide and/or carbon dioxide remaining after the scrubbing process is converted to methane in a methanation reaction. This approach may provide a product stream that is about 95%-97% hydrogen. It may also provide a relatively pure carbon dioxide stream (e.g., 99%).

In one embodiment, the WGS product is subjected to PSA. This approach may provide a product stream that is about 99.9% hydrogen. In general, PSA is the most common method of hydrogen purification following WGS, likely due to the high purity levels and overall energy efficiency (e.g., relative to wet scrubbing). The purge gas from the PSA, which may contain hydrogen, carbon monoxide, and unconverted methane, may be fed back to the methane reformer (e.g., as fuel).

In one embodiment, the WGS product is subjected to a hydrogen purification process including liquid carbon dioxide removal, and any carbon monoxide remaining after the scrubbing process is converted to methane in a methanation reaction.

In general, the hydrogen production process, including any reforming reactions, may be carried out in any suitable devices/systems or combination of devices/systems that are known or used in the art for such purposes. For example, steam methane reforming may be conducted in top-fired reformers, side-fired reformers, bottom-fired reformers, etc. Conventionally, SMR is conducted in fixed bed reactors followed by one or more separation stages for purifying the hydrogen. Membrane reactors, which combine the reforming action for producing hydrogen and its separation in one stage, provide an alternative to fixed bed reactors. In one embodiment, the hydrogen production process incudes SMR in a membrane reactor packed with a catalyst. Other methods of producing hydrogen from renewable methane may include solar reforming, thermal plasma reforming, or catalytic decomposition.

As discussed above, the feedstock for the selected hydrogen production process may contain raw biogas, partially purified biogas, RNG, or any combination thereof. As will be understood by those in the art, the presence of some non-methane components, or generally some non-hydrocarbon components, in the feedstock may be undesirable for and/or may require modifications to the methane reforming process(es). For example, consider the discussion below that illustrates such embodiment.

Raw biogas, partially purified biogas, or RNG may contain hydrogen sulfide. Hydrogen sulfide may poison reforming catalysts (e.g., sulfur is generally considered detrimental in SMR). In embodiments where the feedstock contains hydrogen sulfide, it may be subjected to an $H_2S$ removal process prior to the reforming. In one embodiment, the feedstock (e.g., raw biogas, partially purified biogas, or RNG) is desulfurized up to less than about 1 ppm prior to the reforming. In one embodiment, the feedstock contains hydrogen sulfide and the syngas is produced using a technology that is more tolerant of hydrogen sulfide (e.g., TPOX). In one embodiment, the hydrogen production process produces syngas using a sulfur-passivated reformer (e.g., a SPARG reformer). In a SPARG reformer, small quantities (e.g., 2 to 10 ppm) of hydrogen sulfide may be added to avoid carbon formation. The sulfur passivates the reforming catalyst allowing low steam to carbon feed ratios without carbon formation problems. In embodiments where syngas is produced using a technology that is more tolerant to hydrogen sulfide, any hydrogen sulfide present may be problematic for a subsequent WGS. In particular, conventional WGS catalysts may be highly sensitive to sulfur contamination. In one embodiment, the WGS utilizes a catalyst more tolerant to hydrogen sulfide (e.g., based on molybdenum sulfide). In one embodiment, the syngas is desulfurized after the methane reforming and prior to the WGS.

Raw biogas, partially purified biogas, or RNG may contain nitrogen. Nitrogen may increase the cost of downstream purification processes (i.e., to remove the nitrogen from the hydrogen). In one embodiment, the feedstock (e.g., raw biogas, partially purified biogas, or RNG) is subject to a nitrogen removal process prior to the methane reforming.

Raw biogas, partially purified biogas, or RNG may contain carbon dioxide. For example, raw biogas typically has a $CO_2$ content greater than 15%. As is known by those skilled in the art, the presence of carbon dioxide may affect the $H_2$:CO ratio of the syngas produced and/or may result in carbon deposits. In one embodiment, the feedstock (e.g., raw biogas, partially purified biogas, or RNG) is subject to a carbon dioxide removal process prior to the reforming. For example, in one embodiment sufficient carbon dioxide is removed from raw biogas or partially purified biogas to produce RNG. In one embodiment, carbon dioxide is removed from raw biogas or partially purified biogas, but not to the extent that qualifies as RNG. While it may be possible to subject biogas having a $CO_2$ content greater than 5% to methane reforming, without removing the $CO_2$, the process may need to be altered in order to reduce carbon formation (e.g., add excess steam).

In one embodiment, raw biogas is used as a feedstock for the hydrogen production. In this embodiment, the raw biogas may be subject to a purification step where $H_2S$ is removed. This cleaned biogas, which still has a significant $CO_2$ content, is fed to a methane reformer along with steam. The renewable methane in the biogas and steam react to form syngas according to Eq. 1. The syngas is fed, along with additional steam, into a high temperature WGS reactor, where the carbon monoxide and steam react to produce carbon dioxide and hydrogen according to Eq. 2. The product gas from the high temperature WGS reactor is fed to a low temperature WGS reactor, with additional steam, to produce more carbon dioxide and hydrogen. From this product gas, water is condensed out, and the hydrogen is purified.

In one embodiment, the feedstock for the hydrogen production process is a gas stream containing raw biogas or partially purified biogas, and the hydrogen production process includes removing $H_2S$, $NH_3$, siloxanes, VOCs, and particulates, if present in significant quantities, from the feed stream prior to reforming. In one embodiment, the feedstock for the hydrogen production process is a gas stream containing partially purified biogas, which is produced by removing $H_2S$, $NH_3$, siloxanes, VOCs, and particulates, if present in significant quantities, from raw biogas.

In one embodiment, the feedstock for the hydrogen production process is a gas stream containing partially purified biogas that has a methane content of at least 85%, at least 90%, at least 92.5%, or at least 95%. In this embodiment, the partially purified biogas is produced by a partial purification process that removes most of the contaminates but does not purify it to the extent that it meets pipeline standards.

In one embodiment, the feedstock for the hydrogen production process is a gas stream containing RNG. Advantageously, RNG can be used in a conventional hydrogen plant without any changes any changes to the existing infrastructure and/or process. For example, in one embodiment, the RNG is transported to the hydrogen plant using a natural gas distribution system.

Producing the renewable hydrogen from RNG may be particularly advantageous. For example, in addition to being compatible with existing natural gas infrastructure, it also allows the renewable methane to be sourced from a RNG producer located at any distance from the hydrogen plant/fuel production facility (e.g., as long as they are connected to the same natural gas distribution system). Moreover, it can facilitate using non-renewable natural gas as co-feed. This is particularly advantageous in terms of maintaining a constant methane supply for the process and/or a supply of sufficient pressure and/or purity. In some cases, it may be advantageous to co-feed a stream of non-renewable natural gas and a gas stream containing the renewable methane. For example, if pipeline quality non-renewable natural gas makes up a large percentage of the co-feed, then a lower quality gas stream containing renewable methane (e.g., under 925 BTU/scf) may be acceptable.

In the above-described embodiments, the feedstock for the renewable hydrogen process is a gas containing renewable methane (e.g., just renewable methane with no non-renewable methane, or both renewable methane and non-renewable methane). In some embodiments, a gas containing the renewable methane is used as both a feedstock and a fuel for the methane reforming. For example, consider the case where a portion of the renewable methane is fed to the combustion zone of an SMR reactor. Since combusting renewable methane simply returns to the atmosphere carbon that was recently fixed by photosynthesis, and thus is considered relatively benign, this can reduce greenhouse gas emissions from the SMR furnace (e.g., compared to using fossil-based methane). Furthermore, since the renewable methane may be provided as raw biogas or partially purified biogas, process costs can be reduced. For example, if the hydrogen production process includes upgrading biogas to RNG for use a feed to SMR, then using a portion of the raw biogas or partially purified biogas as fuel for the SMR, means that a smaller amount of biogas needs to be fully upgraded, thereby reducing costs.

While it may be advantageous to sacrifice some renewable methane for fuel in order to improve the greenhouse gas balance of the hydrogen production process and/or fuel production process, this reduces the yield of renewable hydrogen and/or the yield of renewable content of the fuel(s) produced. Accordingly, there may be a compromise between increasing the yield of renewable hydrogen/renewable content and decreasing the lifecycle greenhouse gas (GHG) emissions, for a given quantity of renewable methane.

For example, consider a hydrogen production process that feeds 100 units of NG into an SMR as feedstock. In this example, the energy yield is about 1.2 such that for every 100 units (e.g., kJ/hr) of NG fed into the SMR as feedstock, 120 units of hydrogen is produced (e.g., the calculations do not account for the steam). If 50 of the 100 units of NG correspond to RNG then 60 units of renewable hydrogen are produced. If, however, 10 of the 50 units of RNG are instead used to fuel the SMR furnace, then only 40 units RNG are available as feed such that 48 units of renewable hydrogen are produced. Accordingly, the compromise may include choosing between providing 60 units of renewable hydrogen associated with some carbon intensity, or about 48 units of renewable hydrogen associated with a lower carbon intensity (e.g., higher greenhouse gas reduction).

In one embodiment, all of the renewable methane is used as feedstock (i.e., none is used to fuel the methane reformer). In this embodiment, the yield of renewable hydrogen, and thus the amount of renewable hydrogen (e.g., in MJ/hr) that can be incorporated into the fuel(s) can be maximized.

In one embodiment, the ratio of the amount of renewable methane used for feed to the amount of renewable methane used for fuel (i.e., feed:fuel) is selected to keep the lifecycle greenhouse gas emissions of the fuel produced and/or the renewable content thereof, at or below a target value. In one embodiment, the feed:fuel ratio is selected to provide the fuel and/or renewable content with a lifecycle greenhouse gas reduction that is greater than a predetermined threshold. In one embodiment, the target value and/or predetermined threshold are set by a regulatory agency (e.g., the United States Environmental Protection Agency or "EPA" or the European Commission). In one embodiment, the feed:fuel ratio is selected to provide the fuel and/or renewable content with a lifecycle greenhouse gas reduction that is at least 50% or at least 60% of the average emissions baseline of gasoline or diesel as determined by the regulatory agency (e.g., the 2005 gasoline baseline or the 2005 diesel baseline as determined by the EPA, which correspond to 96.3 kgCO2E/MMBtu and 95 kgCO2E/MMBtu, respectively). For example, in one embodiment, the fuel is gasoline and the feed:fuel ratio is selected such that the lifecycle greenhouse gas emissions are at least 50% lower than a gasoline baseline as measured by EPA methodology. In one embodiment, the fuel is gasoline and the feed:fuel ratio is selected such that the lifecycle greenhouse gas emissions are at least 60% lower than a gasoline baseline as measured by EPA methodology.

In one embodiment, the feed:fuel ratio is 1:1, 2:1, 3:1, 4:1, 5:1, 6:1, 7:1, 8:1, or 9:1. In one embodiment, at least 10% and no more than 50% of the renewable methane is provided for fuel for the SMR (e.g., where the percentages are based on volumetric flow rate such as SCFM). In one embodiment, the feed:fuel ratio is selected to provide the fuel production process with a predetermined greenhouse gas emissions reduction. For example, if the process for producing the fuel has a certain carbon intensity or lifecycle greenhouse gas emission value, which does not meet some target value, then the feed:fuel ratio may be adjusted in order to meet the target value.

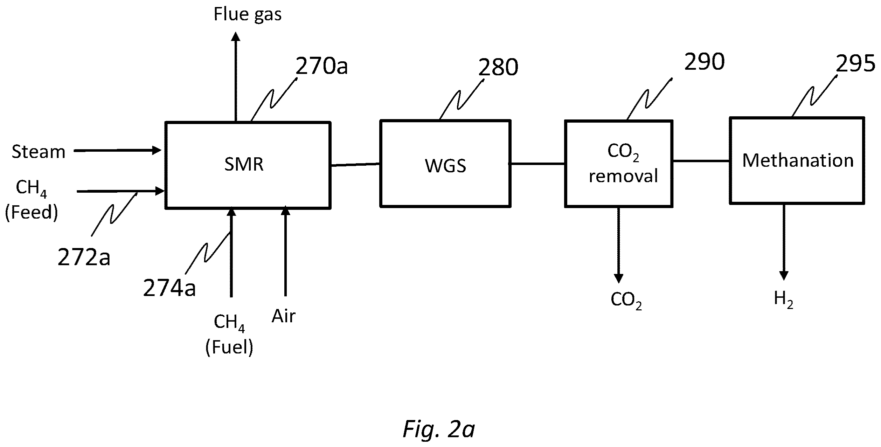

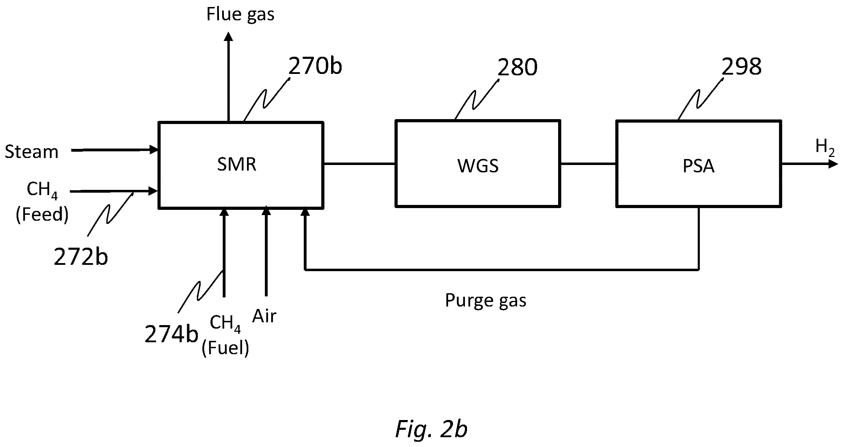

In general, SMR configurations may vary. For example, in older style SMR plants the carbon dioxide typically is removed from the syngas using a solvent-based process (e.g., a wet removal process), whereas in more modern SMR plants, the hydrogen typically is purified using PSA. Examples of older and newer style SMR configurations are illustrated in Figs. 2a and Fig. 2b, respectively.

Fig. 2a illustrates an embodiment of an older style hydrogen plant, where hydrogen purification is accomplished using wet scrubbing (e.g., amine absorption and regeneration cycle). In this embodiment, a stream of preheated natural gas 272a is desulfurized (not shown) and fed, along with steam, into the reactor tubes of the SMR 270a, which contain the reforming catalyst. Streams of natural gas 274a and combustion air are fed into the SMR burners, which fire into the reactor section of the SMR to provide the heat required for the endothermic reaction. The syngas produced in the SMR is fed to a WGS 280 to produce a shifted gas. In this case, the WGS 280 may use a high temperature WGS reactor followed by a low temperature WGS reactor. Cooled shifted gas is contacted with an amine solvent (e.g., MEA or MDEA) in an absorption process 290 to capture the $CO_2$. The stream enriched in hydrogen may be fed into a methanation reaction 295 in order to convert any remaining carbon monoxide and/or carbon dioxide to methane.

Fig. 2b illustrates an embodiment of a newer style hydrogen plant, where hydrogen purification is accomplished using PSA. In this embodiment, a stream of preheated natural gas 272b is desulfurized (not shown) and fed, along with steam, into the reactor tubes of the SMR 270b, which contain the reforming catalyst. Streams of natural gas 274b and combustion air are fed into the SMR burners, which fire into the reactor section of the SMR to provide the heat required for the endothermic reaction. The syngas produced in the SMR is fed to a WGS 280 to produce a shifted gas. In this case, the WGS 280 may use a high temperature WGS reactor. The shifted gas is cooled and is purified in the PSA unit 298, which produces a stream enriched in hydrogen and a purge stream. The purge stream, which may contain unconverted $CH_4$, $H_2$, $CO_2$, and/or CO, is fed back to the SMR, where it is used to fuel the SMR burners. More specifically, the purge stream is combusted together with the stream of natural gas 274b. Since the purge stream contains some fuel (e.g., $CH_4$, CO, and/or $H_2$), less fuel natural gas 274b is required.

In general, for conventional hydrogen production, the newer style plant illustrated in Fig. 2b is understood to be more energy efficient (e.g., requires less natural gas fuel) and have a more favourable greenhouse gas balance. However, as described herein, the older style plant can be preferable for producing renewable hydrogen.

For example, older style hydrogen plants typically have a higher energy yield than newer style hydrogen plants (e.g., 1.1 versus 1.2, respectively). Accordingly, more renewable hydrogen may be obtained from the older style plant.

Furthermore, the older style plant may be advantageous in terms of reducing carbon dioxide emissions. In general, SMR can be a large contributor to carbon dioxide emissions. Without being limiting, about 60% of the carbon dioxide produced may be generated in the reforming zones of the SMR and/or WGS reactors, while about 40% may be generated in the combustion zone of SMR reactor (i.e., from the SMR furnace). In the embodiment illustrated in Fig. 2a, carbon dioxide produced in reforming zones is captured in the amine scrubbing, while carbon dioxide produced in the combustion zone may be emitted in the flue gas. In the embodiment illustrated in Fig. 2b, carbon dioxide produced in the reforming zones is recycled back to the combustion zone (i.e., as the purge gas), such that the flue gas contains carbon dioxide produced in both the reforming and combustion zones.

Carbon dioxide produced from non-renewable methane and vented to the atmosphere can contribute to the lifecycle greenhouse gas emissions of the SMR process, however, carbon dioxide produced from renewable methane and vented to the atmosphere is considered biogenic and does not typically increase lifecycle greenhouse gas emissions. In either case, the carbon dioxide captured in the wet scrubbing can be used as part of a carbon capture and storage (CCS) approach to reduce lifecycle greenhouse gas emissions of the process. In one embodiment, the carbon dioxide removed from the syngas and/or shifted gas (e.g., in an amine scrubber) is sequestered. Various forms of carbon dioxide sequestration have been proposed for storage of carbon dioxide, including geologic sequestration, which involves injecting carbon dioxide directly into underground geological formations. In one embodiment, the carbon dioxide removed from the syngas and/or shifted gas (e.g., in an amine scrubber) is injecting into oil or gas fields to assist oil or gas recovery (e.g., EOR). In one embodiment, the carbon dioxide removed from the syngas and/or shifted gas (e.g., in an amine scrubber) is used as a feedstock for making chemicals, fuels, and/or materials.

In one embodiment, the hydrogen production plant is an older style plant (i.e., that does not recycle purge gas to fuel the SMR furnace), and uses at least 95% of the renewable methane as feedstock (i.e., less than 5% in as fuel) and/or 100% the renewable methane as feedstock. For example, in one embodiment, all or most of the renewable methane is allocated to the reforming zone of the SMR. Advantageously, this can maximize the amount of renewable hydrogen produced and/or maximize the renewable energy output from the renewable methane.

In one embodiment, the hydrogen production plant is an older style plant (i.e., that does not recycle purge to fuel the SMR furnace), and uses at least at least 5%, 10%, 15%, 20%, or 25% of the renewable methane as fuel for the SMR. In one embodiment, the hydrogen production plant is an older style plant (i.e., that does not recycle purge to fuel the SMR furnace), and uses at least at least 5%, 10%, 15%, 20%, or 25% of the renewable methane as fuel for the SMR and not more than 50% of the renewable methane as fuel. For example, in one embodiment, a portion of the renewable methane is allocated to the SMR burners.

In one embodiment, the hydrogen production plant is a newer style plant (i.e., using PSA), and uses at least 95% of the renewable methane as feedstock (i.e., less than 5% as fuel) and/or 100% the renewable methane as feedstock.

In one embodiment, the hydrogen production plant is a newer style plant (i.e., using PSA), and uses at least at least 5%, 10%, 15%, 20%, or 25% of the renewable methane as fuel for the SMR. In one embodiment, the hydrogen production plant is a newer style plant (i.e., using PSA), and uses at least at least 5%, 10%, 15%, 20%, or 25% of the renewable methane as fuel for the SMR and not more than 50% of the renewable methane as fuel.

In one embodiment, the hydrogen production plant is configured to purify the hydrogen produced without a PSA system. In one embodiment, the hydrogen production plant does not include a PSA system. In one embodiment, the hydrogen production plant includes an SMR reactor that is not fueled using a purge gas from a PSA. In one embodiment, the hydrogen production plant includes an SMR reactor that is not fueled using off-gas from a hydrogen purification unit (e.g., membrane system).

In one embodiment, the renewable methane is allocated to the reforming zone and/or combustion zone of the SMR. For example, in one embodiment, where X% (e.g., 60%) of the NG for the SMR is used as feedstock, and 100-X% (e.g., 40%) is used as fuel, then more or less than 60% of RNG provided is used as feedstock. In one embodiment, where X% (e.g., 60%) of the NG for the SMR is used as feedstock, and 100-X% (e.g., 40%) is used as fuel, than at least 1.1, at least 1.2, at least 1.3, at least 1.4, or at least 1.5 times X% of RNG provided for the SMR is used as feedstock to produce the renewable hydrogen.

### *Fuel Production*

The renewable hydrogen is used in a fuel production process to produce a fuel (e.g., a liquid transportation or heating fuel). For example, in one embodiment, the renewable hydrogen is combined with crude oil derived liquid hydrocarbon so that it becomes incorporated into the hydrocarbon and ultimately is part of a fuel (e.g., liquid transportation or heating fuel) that is a product of the fuel production facility. The term "crude oil derived liquid hydrocarbon", as used herein, refers to any carbon-containing material obtained and/or derived from crude oil that is liquid at standard ambient temperature and pressure. The term "crude oil", as used herein, refers to petroleum extracted from geologic formations (e.g., in its unrefined form). Crude oil includes liquid, gaseous, and/or solid carbon-containing material from geologic formations, including oil reservoirs, such as hydrocarbons found within rock formations, oil sands, or oil shale. Advantageously, since the hydrogen that is added to the crude oil derived liquid hydrocarbon includes renewable hydrogen, the resultant fuel may be considered a renewable fuel, a fuel having renewable content, a fuel having reduced fossil fuel content, and/or a fuel having a reduced lifecycle greenhouse gas emissions or carbon intensity.

In general, the renewable hydrogen may be added to the crude oil derived liquid hydrocarbon at any stage in the fuel production process that uses hydrogen (e.g., any unit operation in an oil refinery that requires a hydrogen feed). The incorporation of renewable hydrogen into crude oil derived liquid hydrocarbon encompasses the addition, incorporation, and/or bonding of renewable hydrogen to the crude oil derived liquid hydrocarbon. Such reactions include hydrogenation, which includes, without limitation, any reaction in which renewable hydrogen is added to a crude oil derived liquid hydrocarbon through a chemical bond or linkage to a carbon atom. The renewable hydrogen may be bonded to a carbon backbone, a side chain, or a combination thereof, of a linear or ring compound of a crude oil derived liquid hydrocarbon. The addition and/or incorporation of renewable hydrogen into the crude oil derived liquid hydrocarbon may include the addition of renewable hydrogen to an unsaturated or a saturated hydrocarbon. This includes addition of renewable hydrogen to unsaturated groups, such as alkenes or aromatic groups, on the crude oil derived liquid hydrocarbon (i.e., the saturation of aromatics, olefins (alkenes), or a combination thereof). The addition and/or incorporation of hydrogen may be accompanied by the cleavage of a hydrocarbon molecule. This may include a reaction that involves the addition of a hydrogen atom to each of the molecular fragments that result from the cleavage. Without being limiting, such reactions may include ring opening reactions and/or dealkylation reactions. Such reactions are known to those of skill in the art. The hydrogenation reactions may be conducted in a "hydrogenation reactor". As used herein, the term "hydrogenation reactor" includes any reactor in which hydrogen is added to a crude oil derived liquid hydrocarbon. Hydrogenation reactions may be carried out in the presence of a catalyst.

In one embodiment, the renewable hydrogen is added to the crude oil derived liquid hydrocarbon in a hydrotreating process. Hydrotreating processes typically use hydrogen, under pressure, in the presence of a catalyst, to remove oxygen and/or other heteroatoms (e.g., nitrogen, sulfur, halides, and metals) from crude oil derived liquid hydrocarbon. For example, hydrotreaters may be used to remove sulfur and other contaminants from intermediate streams before blending into a finished refined product. At high pressures, hydrotreaters may also saturate aromatics and olefins. Although hydrotreating may saturate olefinic and aromatic bonds, there is minimal cracking. For example, a minimal conversion of 10-20% may be typical. Without being limiting, hydrotreaters may be operated at temperatures between 290°C -455°C and at pressures between 150 psig (1.03 MPa) - 2000 psig (13.79 MPa), in the presence of a metal catalyst (e.g., $CoMo/Al_2O_3$ or $NiMo/Al_2O_3$). The conditions used in a hydrotreater are conventional and can be readily selected by those of ordinary skill in the art.

In one embodiment, the renewable hydrogen is added to the crude oil derived liquid hydrocarbon in a hydrocracking process. Hydrocracking processes typically use hydrogen, under pressure, in the presence of a catalyst, to convert relatively high-boiling, high molecular weight hydrocarbons into lower-boiling, lower molecular weight hydrocarbons by breaking carbon-to-carbon bonds. The breaking of carbon-to-carbon bonds, also referred to herein as "cracking", may be carried out in a hydrocracker. Without being limiting, hydrocrackers may be operated at temperatures between 400-800°C and at pressures between 1000 psig (6.89 MPa) -2000 psig (13.79 MPa), in the presence of a catalyst. Catalysts used for hydrocracking may be bifunctional, and more specifically, may provide a hydrogenation function provided by a metal (e.g., Pt, Pd), and an acid function, which catalyzes the cracking, provided by the support (e.g., zeolite). In one embodiment, the hydrocracker uses a catalyst that is active only for cracking and hydrogenating. In contrast to hydrotreating, which may provide a conversion level less than about 20 wt% (and more typically less than 15 wt%), a hydrocracker may provide a conversion level that is between 20 and 100 wt%. By the term "conversion level", it is meant the difference in amount of unconverted crude oil derived liquid hydrocarbon between feed and product divided by the amount of unconverted crude oil derived liquid hydrocarbon in the feed. Unconverted crude oil derived liquid hydrocarbon is material that boils above a specified temperature. Without being limiting, for vacuum gas oil, a typical specified temperature may be 343°C. The conditions used in hydrocrackers are conventional and can be readily selected by those of ordinary skill in the art.

In one embodiment, the renewable hydrogen is added to the crude oil derived liquid hydrocarbon in hydroprocessing process that includes hydrogenation, hydrocracking, and/or hydrodesulfurization. In a conventional oil refinery, there may be multiple hydroprocessing unit operations that consume hydrogen at individual rates, purities, and pressures. The hydrogen fed to these hydroprocessing units, each of which includes one or more hydrogenation reactors, may be obtained from a variety of sources, each of which provides hydrogen at individual rates, purities, pressures, and costs. For example, in addition to the hydrogen plant (which may be on-site, off-site, and/or operated by another party), one common source of hydrogen in an oil refinery is the catalytic reformer used to produce high octane reformate from naphtha. Another source may be from gasification/partial oxidation of oil. A pipe system for the oil refinery may distribute hydrogen gas from the various supply sources (e.g., including one or more hydrogen plants) to the various consumption sites. Integrated into this complex pipe system are controls that alter, among other things, the flow rate, purity and/or pressure of hydrogen.

In one embodiment, the fuel production facility includes one or more pipes (e.g., a pipe system) that provide hydrogen (e.g., in gaseous or liquid form) to multiple unit operations and/or processing units. In one embodiment, hydrogen fed into the pipe system must meet certain specifications (e.g., be of a certain quality). For example, the fuel production facility may include more than one pipe, each of which provides hydrogen of a different quality (e.g., high quality from the hydrogen plant or lower quality from recycle streams). In one embodiment, the renewable hydrogen is provided as a fungible batch to one or more unit operations and/or processing units (e.g., hydroprocessing units) using a pipe system.

In one embodiment, the renewable hydrogen is transferred within the fuel production facility in a pipe system that provides hydrogen as a segregated batch. In this embodiment, the pipe system may provide predominately renewable hydrogen, or a mixture of renewable hydrogen and fossil hydrogen. The term "fossil hydrogen", as used herein, refers to hydrogen produced from fossil fuels and not produced from renewable methane.

In one embodiment, the renewable hydrogen is transferred to selected unit operations in a pipe system dedicated to only providing renewable hydrogen. For example, in one embodiment, a hydrogen pipe system separate from one or more other hydrogen pipe systems is used to provide renewable hydrogen to selected unit operations (e.g., hydroprocessing units). In this embodiment, the selected unit operations may also receive a fossil hydrogen feed using one of the other pipe systems.

In one embodiment, the renewable hydrogen is transferred to selected unit operations (e.g., hydroprocessing units) in a pipe system that contains both renewable hydrogen and fossil hydrogen. In this embodiment, the pipe system may be dedicated to provide hydrogen only to the selected hydroprocessing units, or may be a pipe system that also provides hydrogen to other hydroprocessing units.

In one embodiment, the renewable hydrogen is fed into a pipe system used to provide hydrogen within the fuel production facility such that it is delivered to most of the unit operations consuming hydrogen. In this embodiment, and/or embodiments where the renewable hydrogen is used in a hydrocracking process, the renewable hydrogen may end up in multiple fuel products (e.g., gasoline, jet fuel, and/or diesel).

In one embodiment, the renewable hydrogen is directed within the fuel production facility (e.g., at an oil refinery) such that it preferentially ends up in one or more predetermined fuel products and/or is preferentially consumed in one or more predetermined unit operations.

In one embodiment, the renewable hydrogen is directed within the fuel production facility (e.g., at an oil refinery) such that it preferentially ends up in gasoline. The term "gasoline" refers generally to a liquid fuel suitable for use in spark ignition engines (e.g., which may be predominantly $C_5$-$C_9$ hydrocarbons, and which may boil in the range between 32°C and 204°C). In one embodiment, the renewable hydrogen is directed within the fuel production facility such that it ends up in a product that satisfies applicable gasoline specifications (e.g., ASTM D4814).

In one embodiment, the renewable hydrogen is directed within the fuel production facility (e.g., at an oil refinery) such that it preferentially ends up in diesel. The term "diesel" refers generally to a liquid fuel suitable for use in compression ignition engines (e.g., which may be predominantly $C_9$-$C_{25}$ hydrocarbons, and which may boil in the range between 187°C and 417°C). In one embodiment, the renewable hydrogen is directed within the fuel production facility such that it ends up in a product that satisfies applicable diesel specifications (e.g., ASTM D975).

In one embodiment, the renewable hydrogen is directed within the fuel production facility (e.g., at an oil refinery) such that the percentage of renewable hydrogen that ends up in diesel is at least 1.1, 1.2, 1.3, 1.4, or 1.5 times the percentage of fuel produced by the fuel production facility that is diesel. For example, if the fuel production facility produces about 40% diesel and 60% gasoline, more than 44%, 48%, 52%, 56% or 60% of the renewable hydrogen ends up in diesel.

In one embodiment, the renewable hydrogen is directed within the fuel production facility using a pipe system that only provides renewable hydrogen. In one embodiment, the renewable hydrogen is directed within the fuel production facility using a pipe system that provides both renewable hydrogen and non-renewable hydrogen (e.g., a blend). In each embodiment, the renewable hydrogen may be selectively directed to one or more selected hydroprocessing units (e.g., to a single hydroprocessing unit or to multiple hydroprocessing units). The term "pipe system", as used herein, refers to a single pipe or an interconnected network of pipes (e.g., physically connected) of any length, including any associated pumps and valves.

The phrase "selectively directing renewable hydrogen to one or more hydroprocessing units", as used herein, refers to directing the renewable hydrogen such that the renewable hydrogen is allocated to the selected hydroprocessing units (e.g., and not allocated to other hydroprocessing units). In one embodiment, the renewable hydrogen is selectively directed by providing a pipe system configured to route the renewable hydrogen such that it can only be directed to the selected hydroprocessing units. In one embodiment, the renewable hydrogen is selectively directed by one or more computer-controlled valves. In one embodiment, the renewable hydrogen is selectively directed in a pipe system that contains both renewable hydrogen and non-renewable hydrogen, and the renewable hydrogen is provided as a fungible batch. In one embodiment, selectively directing the renewable hydrogen includes withdrawing, at the selected hydroprocessing units, a quantity of hydrogen from the pipe system that is associated with the environmental attributes of a corresponding amount of renewable hydrogen fed into the pipe system. In such embodiments, the renewable hydrogen can be provided to each of the selected hydroprocessing units as a hydrogen gas stream, a fraction of which is renewable hydrogen. In one embodiment, the amount of hydrogen that can be incorporated into fuel in the selected hydroprocessing units is measured (e.g., separately or in aggregate) and this determined amount(s) is used to determine the amount of renewable hydrogen (e.g., the renewable fraction of the hydrogen stream) provided to each hydroprocessing unit (e.g., so that the amount of renewable hydrogen provided does not exceed the amount of hydrogen that can be incorporated). Advantageously, such a control loop can be used to reduce costs and/or control the renewable content of fuels produced. In one embodiment, delivery of the renewable hydrogen to each hydrogen processing unit is controlled such that the amount of renewable hydrogen being consumed by each hydroprocessing unit is known.

In one embodiment, the renewable hydrogen is selectively directed to one or more hydroprocessing units (e.g., to a single hydroprocessing unit or multiple hydroprocessing units) selected from a plurality of hydroprocessing units in the fuel production facility (e.g., an oil refinery). In this embodiment, each hydroprocessing unit in the plurality of hydroprocessing units, including each of the selected hydroprocessing units, is connected to a pipe system that receives hydrogen from one or more hydrogen production plants. Since at least one of the hydrogen production plants is configured to receive RNG from a natural gas pipeline, the hydrogen pipe system will contain both renewable hydrogen and non-renewable hydrogen. When a hydrogen pipe system contains both renewable hydrogen and non-renewable hydrogen (e.g., produced from one or several hydrogen production plants), both the non-renewable hydrogen and renewable hydrogen molecules will follow the physical flow of hydrogen gas provided in the pipe system and can end up in multiple hydroprocessing units. In selectively directing renewable hydrogen to specific hydroprocessing units (i.e., as a fungible batch), the environmental attributes of the renewable hydrogen fed into the pipe system are assigned to hydrogen withdrawn from the hydrogen pipe system for the selected hydroprocessing units such that some hydroprocessing units receive a greater concentration of renewable hydrogen than other units (i.e., the renewable hydrogen is not distributed according to the distribution provided by the physical flow of gas). For example, analogous to providing RNG as a fungible batch, renewable hydrogen can be provided as fungible batch by feeding a quantity of renewable hydrogen (e.g., in MJ) into the hydrogen pipe system, where it can comingle with non-renewable hydrogen (e.g., derived from fossil sources), and hydrogen (e.g., in MJ) can be withdrawn from the pipe system for use at the selected hydroprocessing unit(s) in an equivalent quantity (e.g., aggregate). In this case, the withdrawn hydrogen can be recognized as renewable hydrogen due to the transfer or allocation of the environmental attributes of the renewable hydrogen fed into the pipe system (e.g., even though the withdrawn gas may not contain actual molecules from the original gas fed into the pipe system). In such embodiments, where hydrogen, a fraction of which is renewable hydrogen, is contained in a pipe system such that the hydrogen can physically flow to all of the hydroprocessing units in the plurality, selectively directing the renewable hydrogen results in the renewable hydrogen being allocated to the selected hydroprocessing units in an amount other than would be provided by distribution that would follow the physical flow of molecules within the pipe system. Advantageously, such embodiments facilitate providing selective directing of the renewable hydrogen during or after production of the fuel(s) in connection with determining the renewable content of the fuel(s).

In practice, an oil refinery may not necessarily receive a steady stream of RNG as feedstock for hydrogen production, but rather may contract for specific batches of RNG. In these cases, the selective directing of the renewable hydrogen is conducted on a batch scale (e.g., based on how much RNG is used to produce a batch of one or more fuels, and how much renewable hydrogen is produced from the RNG). Accordingly, such an implementation is particularly useful when applying the present embodiment to an existing fuel production facility (e.g., oil refinery).

In one embodiment, the renewable hydrogen is selectively directed to one or more hydrotreaters at the fuel production facility. An oil refinery typically has multiple hydrotreaters. For example, an oil refinery may include a naphtha hydrotreater (e.g., treats heavy naphtha prior to reforming), a kerosene hydrotreater (e.g., removes sulfur and improves smoke point of kerosene fractions), a diesel hydrotreater (e.g., removes sulfur and nitrogen and increases the cetane number of diesel fractions), a vacuum gas oil (VGO) hydrotreater, and/or a resid hydrotreater (e.g., to treat atmospheric residue or vacuum residue). In general, an oil refinery may include one or more distillate hydrotreaters which improve the quality of distillate boiling range feedstocks (e.g., uses a feed that includes crude oil derived liquid hydrocarbon in the kerosene and diesel boiling point range). A distillate hydrotreater can treat an individual distillate fraction or a mixture of various distillate fractions, as well as other refinery streams, to meet specifications required for the finished fuel (e.g., sulfur and/or cetane number specifications).

In one embodiment, the renewable hydrogen is selectively directed to one or more hydrocrackers at the fuel production facility. In an oil refinery, hydrocrackers may be used to process gas oil, aromatic cycle oils, and/or coker distillates. These feeds may originate from atmospheric and/or vacuum distillation units, delayed cokers, fluid cokers, visbreakers, or fluid catalytic cracking units. Middle distillates from a hydrocracker usually meet or exceed finished product specifications, but the heavy naphtha from a hydrocracker may be sent to a catalytic reformer for octane improvement.

In general, hydrocrackers may be the largest hydrogen consumer in an oil refinery. Using the renewable hydrogen in a hydrocracking process exploits this high demand, and may be advantageous in that more renewable hydrogen may be physically incorporated into the fuel (relative to using the renewable hydrogen in a hydrotreating process for desulfurization where a portion of the renewable hydrogen may be converted to hydrogen sulfide). In one embodiment, the renewable hydrogen is selectively directed to a hydrocracker that produces more diesel than gasoline (i.e., on a volume basis).

In one embodiment, the renewable hydrogen is directed within the process such that more renewable hydrogen is used for hydrocracking than for desulfurization. For example, in one embodiment, the renewable hydrogen is directed to a single stage hydrocracker or to the cracking stage of a multi-stage hydrocracker, while hydrogen derived from fossil fuels is directed to upstream desulfurization. In general, the effective amount of hydrogen required for cracking and/or desulfurization may be determined by those of ordinary skill in the art using known techniques.

In one embodiment, the renewable hydrogen is directed within the process such that more renewable hydrogen is used for hydrotreating than for hydrocracking. While one potential disadvantage of using renewable hydrogen in a hydrotreater is that some of the renewable hydrogen may be converted to hydrogen sulfide (H$_2$S), and thus is not necessarily incorporated into the fuel product, one potential disadvantage of using renewable hydrogen in a hydrocracker is that the incorporated renewable hydrogen may end up in a number of fuel products (e.g., gasoline, jet fuel, and/or diesel). Accordingly, it may be more challenging to accurately quantify the renewable hydrogen within the fuel production process. In contrast, some hydrotreating units are used to "finish" selected fractions before it becomes part of the corresponding pool. Accordingly, the renewable hydrogen may be quantified more easily and accurately within the process. Moreover, directing the renewable hydrogen to specific hydrotreaters used for finishing a fuel facilitates incorporating the renewable hydrogen in specific pools (e.g., diesel).

In one embodiment, the renewable hydrogen is selectively directed to a hydrotreater that processes crude oil derived liquid hydrocarbon having a boiling point range within the diesel boiling point range (e.g., a diesel hydrotreater). The term "diesel boiling point range", as used herein, refers to the temperatures including and between the boiling point cuts offs for diesel, as determined by the fuel production facility. In one embodiment, the diesel boiling point range is from 180°C to 400°C.

In one embodiment, the renewable hydrogen is selectively directed to a straight run diesel hydrotreater. The term "straight run", as used herein, describes hydrocarbon fractions produced in the refining process without cracking or other pyrolytic change (e.g., obtained directly from the atmospheric distillation unit).

In one embodiment, the renewable hydrogen is selectively directed to a distillate hydrotreater, wherein the feed includes crude oil derived liquid hydrocarbon in the diesel boiling point range and/or crude oil derived liquid hydrocarbon in the kerosene boiling point range. In one embodiment, the renewable hydrogen is directed to a distillate hydrotreater that provides a fuel that is not subject to further reactions wherein the crude-oil derived hydrocarbon molecules are reduced in size (e.g., by cracking). In one embodiment, the renewable hydrogen is directed to a distillate hydrotreater that has a straight run distillate feed (e.g., from the atmospheric distillation of crude oil), a hydrocracked distillate feed (e.g., from residue hydro converter or gas oil hydrocracker), a thermally cracked distillate feed (e.g., from delayed coking, fluid coking, or visbreaking), a catalytically cracked distillate feed (e.g., from fluid catalytic cracking or from catalytic pyrolysis), or any combination thereof.

Selectively directing the renewable hydrogen to a diesel hydrotreater and/or distillate hydrotreater, and particularly to a hydrotreater processing straight run diesel, is advantageous because the renewable hydrogen may saturate the olefins and aromatics in the diesel fraction, thereby incorporating more of the renewable hydrogen while improving the cetane number. Moreover, since the product leaving such a hydrotreater is not typically treated further, and more specifically is not typically subject to a cracking process, more (e.g., all or most) of the incorporated renewable hydrogen can end up in the diesel pool. In one embodiment, the renewable hydrogen is selectively directed predominantly to hydroprocessing units that predominately provide a fuel that ends up predominantly in one of the diesel, gasoline, or jet fuel pools.

In one embodiment, the renewable hydrogen is selectively directed to a hydroprocessing unit selected to preferentially incorporate the renewable hydrogen in a predetermined fuel product. In general, a given fuel production facility will be configured such that if renewable hydrogen is fed into a hydrogen pipe system of the fuel production facility, without selectively directing the renewable hydrogen, M% the renewable hydrogen will end up in the diesel fraction and N% will end up in the gasoline fraction (calculated by energy). These percentages may be calculated based on the process units, process efficiencies, etc. In one embodiment, the renewable hydrogen is selectively directed to one or more hydroprocessing units selected to incorporate more than M% of the renewable hydrogen feed into the diesel fraction (e.g., at least 10%, 20%, 30%, 40%, or a 50% more), or incorporate more than N% of the renewable hydrogen feed into the gasoline fraction (e.g., at least 10%, 20%, 30%, 40%, or a 50% more).

In one embodiment, the renewable hydrogen is directed to one or more hydroprocessing units selected to preferentially incorporate the renewable hydrogen into a predetermined blendstock. For example, consider the case where the fuel production facility produces multiple fuel products, each product having a characteristic boiling point range determined by the fuel production facility (e.g., gasoline, diesel/heating oil, kerosene/jet fuel). In one embodiment, the renewable hydrogen is selectively directed to one or more hydroprocessing units selected such that a ratio of volume of renewable hydrogen incorporated into a selected product to volume of the selected product produced, is greater than a ratio of volume renewable hydrogen incorporated into all of the products produced to volume of all of the products produced. In one embodiment, the renewable hydrogen is selectively directed to one or hydroprocessing units selected such that a ratio of volume of renewable hydrogen incorporated into a liquid transportation fuel (e.g., gasoline or diesel) to the total volume of the same liquid transportation fuel produced by the fuel production facility, is greater than a ratio of volume of renewable hydrogen incorporated into all of the liquid transportation fuels to the total volume of all the liquid transportation fuels produced by the fuel production facility. In one embodiment, the renewable hydrogen is selectively directed to one or more hydroprocessing units selected such that a ratio of volume of renewable hydrogen incorporated into a first liquid transportation fuel (e.g., gasoline or diesel) to the volume of the first liquid transportation fuel produced by the fuel production facility, is greater than a ratio of volume of renewable hydrogen incorporated into a second other liquid transportation fuel to the volume of the second other liquid transportation fuel produced by the fuel production facility. In one embodiment, the renewable hydrogen is selectively directed to one or more hydroprocessing units selected such that the ratio of volume of renewable content to volume of non-renewable content for one product produced by the fuel production facility is greater than a ratio of volume of renewable content to non-renewable content, for all of the products produced by the fuel production facility.

In one embodiment, the renewable hydrogen is directed to one or more hydroprocessing units selected to preferentially incorporate the renewable hydrogen into the diesel pool of the fuel production facility. Contributions to the diesel pool may be processed from the atmospheric or vacuum distillates, from cracked gas oil, and/or from catalytically or hydrocracked distillates. The diesel pool may be used to produce diesel fuel, which is useful as a transportation fuel or for use in diesel engines, or heating oil, which is often sold for use in boilers, furnaces, and/or water heaters.

In one embodiment, the renewable hydrogen is selectively directed to one or more hydroprocessing units selected to preferentially incorporate the renewable hydrogen into diesel blendstock. For example, in one embodiment, more than 50%, more than 60%, more than 70%, more than 80%, or more than 90% of the renewable hydrogen incorporated into fuel products at the fuel production facility is incorporated into diesel blendstock. In one embodiment, the renewable hydrogen is directed to one or more unit operations, processing units, or stage of a processing unit selected such that almost all of the renewable hydrogen that ends up in the fuel product(s) of the fuel production facility is in diesel blendstock. The term "blendstock", as used herein, refers to fuel component that is either used alone as fuel or is blended with other fuel components to produce a finished fuel (e.g., used in a motor vehicle).

Providing diesel blendstock having a renewable content is particularly advantageous. For example, in some jurisdictions, regulations may require petroleum fuel producers and importers to have an average renewable content of at least 5% based on their volume of gasoline and an average renewable content of at least 2% based on their volume of diesel fuel. This may be achieved, for example, by blending ethanol with gasoline in any proportion greater than 5% ethanol by volume (e.g., an E10), or by blending biodiesel with petroleum diesel in any proportion greater than 2% biodiesel by volume (e.g., a B7 blend). For diesel, the relatively low limit may be at least partially due to the properties of biodiesel in cold weather. However, by providing renewable content by producing the fuel using renewable hydrogen, a higher renewable content may be attainable without affecting the fuel properties. Some examples of processing units that may increase the relative amount of renewable hydrogen incorporated into diesel blendstock include hydrotreaters for finishing the straight-run diesel fraction, and hydrocrackers that process LCO or heavy gas oils (e.g., see Fig. 1).

In one embodiment, the renewable hydrogen is directed to a unit operation(s), processing unit(s), or stage of a processing unit selected to maximize the amount of renewable hydrogen incorporated into the crude oil derived liquid hydrocarbon. For example, more renewable hydrogen may be incorporated when the process includes hydrocracking and/or saturation of aromatics and/or olefins. In one embodiment, the renewable hydrogen that becomes bonded to the crude oil derived liquid hydrocarbon is greater than or equal to 2/3 of the renewable hydrogen that is either contracted for or otherwise introduced to the selected processes/unit operations. In one embodiment, the renewable hydrogen that becomes bonded to the crude oil derived liquid hydrocarbon is greater than or equal to 3/4 or 7/8 of the renewable hydrogen that is either contracted for or otherwise introduced to the selected process(es)/unit operation(s).

In one embodiment, the renewable hydrogen is distributed within the fuel production process using a pipe system that provides renewable hydrogen to a plurality of hydroprocessing units as segregated batches. In one embodiment, the renewable hydrogen is distributed within the fuel production process using a pipe system transferring renewable hydrogen and hydrogen derived from fossil sources, and is directed to one or more hydroprocessing unit as a fungible batch. In one embodiment, delivering the renewable hydrogen as a fungible batch includes allocating the renewable hydrogen to specific unit operation(s), processing unit(s), and/or stage(s) of one or more hydroprocessing units.

In some embodiments, even when all of the renewable hydrogen is selectively directed to a single hydroprocessing unit, the renewable hydrogen may end up in multiple products and/or coproducts. For example, consider the case where a batch of renewable hydrogen is used in a hydroprocessing unit that provides cracking (e.g., in a hydrocracker, or in a hydrotreater upstream of a cat cracker), which breaks the longer crude oil derived liquid hydrocarbons chains into smaller molecules, and then separates the product according to boiling point in a distillation tower. In this case, and others, the renewable hydrogen may be incorporated into hydrogen sulfide, LPG, gasoline, kerosene/jet, diesel/heating oil, etc. In some embodiments, the fuel production process may include allocating the renewable hydrogen to one or more of the fuel products. In one embodiment, the renewable hydrogen is allocated to all of the products. In one embodiment, the renewable hydrogen is allocated only to qualifying fuels (i.e., fuels that qualify for incentives under applicable regulations). In one embodiment, the renewable hydrogen is allocated only to one qualifying fuel. In one embodiment, the renewable hydrogen is allocated to all products equally. In one embodiment, the renewable hydrogen is allocated to each product proportionally to how much product is produced. In one embodiment, the renewable hydrogen is allocated to each product proportionally to how much hydrogen is incorporated therein. In general, the approach used to allocate the renewable hydrogen to fuel products typically is dependent on the authority providing incentives, and thus is typically dependent upon where the fuel is produced and/or sold. The term "allocating", as used herein in respect of a particular element, refers to designating the element for a specific purpose (e.g., virtually). For example, an amount of renewable hydrogen can be allocated as feed for a selected hydroprocessing unit. Advantageously, since at least a portion of the renewable methane and/or renewable hydrogen is provided as a feedstock for the fuel production process, one or more fuels produced by the fuel production process can have renewable content.

### *Quantifying renewable content*

In one embodiment, the fuel production process includes quantifying the renewable content of the fuel(s) produced. In general, quantifying the renewable content in the fuel includes determining how much renewable hydrogen (e.g., by volume, mass, or energy) is in an amount of the fuel produced (e.g., a batch, which may be expressed as volume, mass, or energy). The amount of renewable hydrogen in an amount of fuel typically will be measured and/or calculated using a methodology that is accepted by the applicable regulations (e.g., for fuel credit generation) and can, for example, rely on allocating some or all of the energy content of the renewable hydrogen (or the renewable methane or RNG used to produce the renewable hydrogen) to the fuel, and/or determining how much hydrogen is physically incorporated into the fuel.

In one embodiment, the renewable content is measured as a mass % (i.e., mass of renewable hydrogen in a batch of fuel per total mass of the batch, expressed as a percentage). In one embodiment the renewable content is measured as kg of renewable hydrogen/barrel of fuel. In one embodiment, the renewable content is measured as a volume % (i.e., volume of renewable hydrogen in a batch per total volume of the batch, expressed as a percentage). In one embodiment the renewable content is measured as L of renewable hydrogen/barrel of fuel. In one embodiment, the renewable content is measured as an energy percentage (i.e., energy of renewable hydrogen in a batch per total energy of the batch).

In one embodiment, the renewable content is quantified using a mass balance approach. Mass balance, also referred to as material balance, is an application of conservation of mass to the analysis of physical systems. It involves material balancing of input/output streams. For example, it can require a total hydrogen balance of the refinery units (e.g., measuring and quantifying the hydrogen in all pertinent streams).

In one embodiment, the renewable content of the fuel is quantified using a total mass balance of hydrogen, wherein the amount of hydrogen in the relevant streams is measured and quantified (e.g., input and output streams), wherein the ratio of renewable hydrogen to fossil hydrogen feed is determined, and wherein the renewable hydrogen is assigned proportionally to each output stream containing added hydrogen.

In one embodiment, the renewable content of the fuel is quantified using an "incorporation by difference" method. The "incorporation by difference" method, which includes establishing a mass balance of hydrogen around the selected hydroprocessing units (e.g., mass of hydrogen input (including renewable hydrogen) and mass of hydrogen in the product gases), determines the mass of hydrogen incorporated into liquid fuel products from the difference between the mass of hydrogen input and the mass of hydrogen lost to compounds/mixtures that are not liquid fuel products (e.g., gas streams containing hydrogen, hydrogen sulfide, ammonia, water, and/or light ends). For example, the mass of hydrogen lost to hydrogen sulfide can be determined from a sulfur difference, the mass of hydrogen lost to ammonia can be determined from a nitrogen difference, the mass of hydrogen lost to water can be determined from an oxygen difference, and the mass of hydrogen lost to light ends can be determined from the chemical composition.

In general, mass balance approaches (e.g., which can determine how much hydrogen is physically incorporated into the fuel, and thus be used to approximate how much renewable hydrogen is physically incorporated into the fuel) may be reasonable for simple systems. However, the calculations can become more challenging when the renewable hydrogen ends up in multiple products (e.g., LPG, gasoline, kerosene/jet fuel, diesel/heating oil) and/or wherein there is recycling of streams within the process (e.g., which is common in fuel production facilities such as oil refineries). Moreover, it can be more challenging to implement in a fuel production facility such as an oil refinery where, conventionally, not all streams are measured (e.g., flows) and/or multiple approaches may be required. For example, analyzing the hydrogen content in gas and liquids can require different analytical techniques. In liquids, hydrogen content may be determined using elemental analysis or nuclear magnetic resonance (NMR), whereas in gases the hydrogen content may be determined using high resolution gas chromatography.

In one embodiment, the renewable content of the fuel is quantified by measuring the relative amount of hydrogen and carbon in crude oil derived liquid hydrocarbon provided for hydrogenation, and the relative amount of hydrogen and carbon in one or more products (e.g., liquid) of the hydrogenation. The relative amount of hydrogen and carbon in a sample, which is, for purposes herein, expressed as an H:C mass ratio, an H:C molar ratio, a C:H mass ratio, or a C:H molar ratio, can be measured using any suitable technique known in the art. For example, known techniques that can measure both carbon and hydrogen intensities in a hydrocarbon sample include nuclear magnetic resonance (NMR) testing, and the combustion method for carbon, hydrogen, and nitrogen elemental analysis. In general, these measurement techniques can determine the relative amount of hydrogen and carbon for the mixture (i.e., overall sample).

In one embodiment, the renewable content of the fuel is quantified by measuring how much hydrogen is incorporated into the crude oil derived liquid hydrocarbon in each selected hydroprocessing unit by measuring the mass fraction of hydrogen in the crude oil derived liquid hydrocarbon fed into the selected hydroprocessing unit, and measuring the mass fraction of hydrogen in processed crude oil derived liquid hydrocarbon provided by the selected hydroprocessing unit. In one embodiment, the mass fraction of hydrogen in the crude oil derived liquid hydrocarbon is determined using elemental analysis (e.g., a CHN or CHNX analysis). The elemental analysis can be conducted with any elemental analyzer suitable for analyzing crude oil and/or crude oil derived liquid hydrocarbon. For example, such elemental analyzers can include a combustion chamber (furnace), a gas chromatography (GC) column, and a detector (e.g., thermal conductivity detector (TCD)) to detect the elements eluted form the GC column. In one embodiment, the elemental analyzer is capable of measuring the percentage of C, N, H, and S in a liquid sample.

In one embodiment, the renewable content of the fuel is quantified by measuring how much hydrogen is incorporated into the crude oil derived liquid hydrocarbon in each selected hydroprocessing unit by measuring the H/C molar ratio of the crude oil derived liquid hydrocarbon fed into the selected hydroprocessing unit, and measuring the H/C molar ratio of processed crude oil derived liquid hydrocarbon provided by the selected hydroprocessing unit (e.g., one or more fuel products). Without being limiting, crude oil derived liquid hydrocarbon typically has a H/C molar ratio between about 1.4 and 2.1.

Advantageously, by comparing the H/C molar ratio of the crude oil derived liquid hydrocarbon feed to a selected hydroprocessing unit to a H/C molar ratio of a crude oil derived liquid hydrocarbon product produced by a selected hydroprocessing unit, the amount of hydrogen incorporated into the product by the hydrogenation can be determined from the liquids alone. For example, if the H/C molar ratio increases from 1.7 to 1.9, then 0.2 moles of hydrogen (H) is added per mole of carbon. The amount of carbon and hydrogen present in the feed and product can be determined by measuring the flows of the crude oil derived liquid hydrocarbon feed and products, respectively. In one embodiment, the flows are measured as mass per unit time (e.g., kg/hr). In one embodiment, the flows are measured as volume per unit time (e.g., barrels/day, or barrels/hr). In one embodiment, where the flow is measured as volume per unit time, the density of the crude oil derived liquid hydrocarbon feed and/or products is used in the measurement. Accordingly, the mass or volume of hydrogen incorporated into crude oil derived liquid hydrocarbon can be calculated using elemental analysis and measured flows of crude oil derived liquid hydrocarbon into and out of the unit operation and/or hydroprocessing unit.

In one embodiment, the renewable content of the fuel is quantified using a process that includes the steps of:

a) measuring the flow of crude oil derived liquid hydrocarbons input to the unit operation and/or processing unit;

b) determining the H/C molar ratio of the crude oil derived liquid hydrocarbon input to the unit operation and/or processing unit;

c) measuring the flow of at least one product stream produced by the unit operation and/or processing unit;

d) determining the H/C molar ratio of the at least one product stream, and

e) determining a quantity of hydrogen incorporated into the at least one product stream using the flows and H/C molar ratios measured in steps (a) to (d).

The quantity of hydrogen determined in (e) is the total hydrogen incorporated into the product stream (i.e., includes both renewable hydrogen and fossil hydrogen, if present). The quantity of renewable hydrogen incorporated into the fuel can be calculated using this value and the percentage of renewable hydrogen in the hydrogen feed. Advantageously, since the composition of feed into a given hydroprocessing unit, and/or the processing conditions may not vary significantly over short periods of time (e.g., a day) the values determined in (b) and (d) may be used for one or more batches and/or to estimate how much renewable hydrogen should be directed to that unit. Advantageously, this approach provides a relatively simple and reliable method for quantifying how much hydrogen is physically incorporated into the hydrocarbon product (e.g., a batch) produced by the given hydroprocessing unit, and thus provides a relatively simple and reliable approach to quantifying the renewable content of the hydrocarbon product. The quantity of hydrogen determined in (e) can be expressed in energy units (MJ), mass, or volume.

In one embodiment, the renewable content of a batch of product (e.g., of a hydrogenation reactor or hydroprocessing unit) is calculated using the following equation.

$$\text{Mass of hydrogen incorporated in a product (kg)} =$$

$$\text{Mass of carbon in the product (kg)} * (\text{H/C}_{product} - \text{H/C}_{feedstock}) \qquad (11)$$

The mass of carbon in the product can be determined using any method known in the art. For example, the mass of carbon in the product can be determined from the mass fraction of carbon in the product, as determined from using elemental analysis. In this equation, H/C $_{product}$ refers to the H/C mass ratio of a product produced by the hydrogenation reactor or hydroprocessing unit, and H/C$_{feedstock}$ refers to the H/C mass ratio of the crude oil derived liquid hydrocarbon fed into the hydrogenation reactor or hydroprocessing unit.

In one embodiment, there is no fossil hydrogen present, and all of the incorporated hydrogen is renewable hydrogen. In one embodiment, fossil hydrogen is present, and all of the incorporated hydrogen is renewable hydrogen based on the allocation of the renewable hydrogen. In one embodiment, fossil hydrogen is present, and the incorporated hydrogen has a ratio of renewable hydrogen to fossil hydrogen that corresponds to the ratio of renewable hydrogen to fossil hydrogen of the feed.

In general, measuring the flow of the feedstock(s) and/or products may be achieved using any suitable method/technology in the art. In one embodiment, the flow of feedstock(s) and/or product(s) is measured as a volume flow rate and/or a mass flow rate, using a suitable flow meter, either continuously or intermittently. In one embodiment, measuring the flow of feedstock(s) and/or products includes measuring the flow of feedstock into the unit operation/- processing unit. For example, in one embodiment, measuring the flow of hydrogen includes measuring the flow rate of fresh hydrogen provided to the unit operation, processing unit, or stage of a process unit (i.e., does not include hydrogen recycled within that unit). In one embodiment, measuring the flow of feedstock(s) and/or products includes measuring the flow of hydrogenated crude oil derived liquid hydrocarbon provided by the unit operation/processing unit. In embodiments where the unit operation/processing unit produces multiple fuel products, the flow of hydrogenated crude oil derived liquid hydrocarbon can be measured before it is separated (e.g., according to boiling point) and/or after they are separated. In one embodiment, the relative amount of hydrogen and carbon in the crude oil derived liquid hydrocarbon provided to and/or by the hydroprocessing unit is measured by taking a sample of the crude oil derived liquid hydrocarbon for the combustion method for elemental analysis. As will be understood by those skilled in the art, the frequency of sampling required may depend on how (or if) the values change over time, with variabilities in the process conditions (e.g., feedstock), and/or applicable regulations.

In one embodiment, the renewable content of the fuel is quantified by measuring how much hydrogen is incorporated into the crude oil derived liquid hydrocarbon in each selected processing unit by measuring the C/H molar ratio of the crude oil derived liquid hydrocarbon fed into the selected processing unit, and measuring the C/H molar ratio of processed crude oil derived liquid hydrocarbon provided by the selected processing unit. The C/H molar ratio, may be determined using the mass fractions of hydrogen and carbon and/or elemental analysis.

In one embodiment, the renewable content of the fuel is quantified by measuring how much hydrogen is incorporated into the crude oil derived liquid hydrocarbon in each selected processing unit by measuring the H/C mass ratio of the crude oil derived liquid hydrocarbon fed into the selected processing unit, and measuring the H/C mass ratio of processed crude oil derived liquid hydrocarbon provided by the selected processing unit. The H/C mass ratio, may be determined using the mass fractions of hydrogen and carbon and/or elemental analysis.

In the above described embodiments, the mass fraction of H, the mass fraction of C, the H/C molar ratio, the C/H molar ratio, the H/C mass ratio, and/or the C/H mass ratio is used in determining the total amount of hydrogen incorporated into the crude oil derived liquid hydrocarbon (e.g., kg/barrel). The total amount of hydrogen includes both renewable hydrogen and fossil hydrogen, if present. In one embodiment, the amount of renewable hydrogen incorporated is determined using a ratio of renewable hydrogen feed to fossil hydrogen feed. In one embodiment, the amount of renewable hydrogen incorporated is the total amount of hydrogen incorporated. For example, in one embodiment, the hydrogen feed consists only of renewable hydrogen.

In general, the mass fraction of H, the mass fraction of C, the H/C molar ratio, the C/H molar ratio, the H/C mass ratio, and the C/H mass ratio, can be substantially constant for a given feedstock composition and processing conditions. In one embodiment, the total amount of hydrogen incorporated in a product in a specific unit operation and/or processing unit is measured prior to, during, or after, incorporating the renewable hydrogen (e.g., a predetermined factor representative of that unit operation and/or processing unit can be used). For example, in one embodiment, a predetermined factor is used to determine how much renewable hydrogen should be provided to the selected unit operation and/or processing units. In embodiments, where the feed to a selected hydroprocessing unit contains multiple streams, the relative amount of hydrogen and carbon in the feed to the hydroprocessing unit can be calculated from the blended stream or as an average from all of the streams.

In one embodiment, the hydrogen feed includes both renewable hydrogen and fossil hydrogen, and the amount of renewable hydrogen directed to the selected unit operations and/or processing units is selected to be equal to and/or less than the total amount of hydrogen incorporated (e.g., predetermined).

Advantageously, quantifying the renewable content using the mass fraction of H, the H/C molar ratio, and/or the C/H ratio of the liquid feed and/or products, provides a simpler and/or more verifiable approach to determining renewable content than a total mass balance approach. For example, it obviates the handling of recycle streams and/or measuring parameters not easily measured (e.g., volumes of some streams). In addition, it allows the renewable content to be determined without measuring lost carbon and/or hydrogen (e.g., without measuring gases produced by the selected unit operations and/or processing units). Further advantageously, using the total amount of hydrogen incorporated to determine how much renewable hydrogen is be directed, is more efficient and/or is compatible with accounting methods that use a book-and-claim accounting.

In one embodiment, the renewable content of the fuel is quantified using energy, and more specifically from the energy of each feedstock (e.g., renewable hydrogen and crude oil derived liquid hydrocarbon, or renewable methane or RNG and crude oil derived liquid hydrocarbon) and of each fuel product. For example, the energy of each feedstock can be reported in MJ and be calculated from the feedstock mass flow over a given time period multiplied by the feedstock lower heating value (LHV).

In one embodiment, the renewable content is quantified using the renewability, as proposed in the "RTFO Guidance Part One Process Guidance", version January 2020, used for reporting under the Renewable Transport Fuel Obligations Order 2007 No. 3072. In this case, the renewability of a fuel refers to the percentage of a fuel (by energy) that is recognized as and/or qualifies as renewable, and is calculated using Eq. 12.

$$\text{MJ of renewable fuel} = \frac{\underline{\text{Total MJ of renewable feedstocks}}}{\text{Total MJ of all feedstocks}} * \text{Total MJ of fuel produced} \qquad (12)$$

This method may be particularly suitable for fuels produced by hydrogenating crude-oil derived liquid hydrocarbon with renewable hydrogen, as part of the energy of the fuel is from renewable sources and part is from non-renewable sources. As such a fuel may not have discrete volumes that are renewable or non-renewable, in order to determine how much of that fuel contains renewable content that is eligible for incentives under applicable regulations, the volume of the fuel(s) produced may be split into notional non-renewable and renewable portions. For example, if the renewability of the fuel is determined to be 20%, then a 1/5 of a barrel of the fuel is considered to be renewable fuel, while the remaining 4/5 of the barrel is non-renewable. In one embodiment, the renewability is re-assigned between different consignments of the same product. For example, if the fuel production process produces 5 barrels of diesel, each of which is 20% renewable, then the fuel may be sold as 5 barrels of diesel that is 20% renewable, or may be sold as 1 barrel of diesel that is 100% renewable and 4 barrels of diesel that is non-renewable. This is particularly advantageous when at least part of the fuel is to be shipped and/or when the renewability of the fuel is required to meet a target value in order to qualify for incentives. In one embodiment, where a target value is 25% renewability, 5 barrels of diesel having a renewability of 20% may be sold as 4 barrels of diesel that is 25% renewable, and 1 barrel of diesel that is non-renewable.

In one embodiment, quantifying the renewable content includes using energy of the feedstocks and product. For example, in one embodiment, quantifying the renewable content includes determining an amount of renewable hydrogen fed into each of the one or more hydroprocessing units in energy units (e.g., MJ), determining an amount of crude oil derived liquid hydrocarbon fed into each of the one or more hydroprocessing units in energy units (e.g., MJ), and determining an amount of at least one product produced by each of the one or more hydroprocessing units in energy units (e.g., MJ). The amount of feedstock/product provided/produced in energy units (e.g., MJ) can be determined from the corresponding mass (or volume) flow over a given time period multiplied by the corresponding heating value (e.g., LHV).

Advantageously, quantifying the renewable content using energy (e.g., MJ) of the feedstocks and product may not necessarily require determining how much hydrogen is physically incorporated into the crude oil derived liquid hydrocarbon. However, depending on the applicable regulations, it may require that the renewability (expressed as a percentage) be applied equally to all of the products (e.g., produced by the hydrogenation). For example, if the hydrogenation uses a feedstock where 25% of the feedstock energy is renewable (e.g., from renewable hydrogen) and 75% is non-renewable (e.g., from crude oil derived liquid hydrocarbon), and the hydrogenation produces multiple products, then 25% of each of the products will be renewable. While this method may simplify the quantification of the renewable content, it can unfortunately result in less renewable content ending up in fuels (e.g., gasoline, jet fuel, and diesel).

In accordance with one embodiment, the fuel production process includes the combination of a step of quantifying the renewable content using energy (e.g., MJ) of the feedstocks and product and a step of selectively directing the renewable hydrogen to one or more processing units within the fuel production facility. Advantageously, it has been found that this combination of steps can provide unexpected advantages, particularly with appropriate selection of the hydroprocessing units. For example, it can increase the yield of renewable content in liquid transportation fuels produced by the fuel production facility for a given quantity of renewable hydrogen and/or renewable methane or RNG.

In addition to fuels (e.g., heating oil, gasoline, kerosene, jet fuel, naphtha, diesel, etc.), an oil refinery typically also produces non-fuel products such as asphalt, lubricants, greases, road oils, waxes, etc. In one embodiment, the renewable hydrogen is selectively directed to one or more hydroprocessing units selected such that the amount of renewable hydrogen that ends up in non-fuel products is relatively low (e.g., relative to without the selective directing). In one embodiment, the renewable hydrogen is selectively directed to one or more hydroprocessing units selected such that the amount of renewable hydrogen that ends up in fuel products is relatively high (e.g., relative to without the selective directing).

In one embodiment, the renewable hydrogen is selectively directed to one or more hydroprocessing units, where each hydroprocessing unit has a transportation fuel energy yield that is greater than a predetermined value. The transportation fuel energy yield for a hydroprocessing processing unit represents the energy (e.g., MJ) in the feedstock fed into the hydroprocessing unit (e.g., hydrogen and crude oil derived liquid hydrocarbon) that is converted to energy (e.g., MJ) in transportation fuel product produced by the hydroprocessing unit. The term "transportation fuel product", as used herein with reference to a hydroprocessing unit, refers to product produced by the hydroprocessing unit that is used as or in a liquid transportation fuel without undergoing a chemical reaction that materially modifies the hydrocarbon therein. For example, transportation fuel product can be physically separated into different fractions (e.g., according to boiling point), but is not subject to a reaction that materially modifies the hydrocarbon structure, such as hydrocracking and/or cat cracking. Transportation fuel products produced by a hydroprocessing unit may be treated and/or blended to provide finished transportation fuels. The transportation fuel energy yield for a particular hydroprocessing unit is calculated by dividing the sum of the energies of all transportation fuel products (e.g., in MJ) produced by the hydroprocessing unit by the sum of the energies of all feedstock (e.g., in MJ) fed into the hydroprocessing unit, and may be expressed as a percentage. The term "feedstock" as used herein with reference to a particular process, refers to material entering the process that contributes atoms to a product of the process. For example, the feedstock for a hydroprocessing unit is typically hydrogen and crude oil derived liquid hydrocarbon. The transportation fuel energy yield for a hydroprocessing unit is calculated as an average over a given time period (e.g., 3 months).

In one embodiment, the renewable hydrogen is selectively directed to one or more hydroprocessing units, where each hydroprocessing unit has a transportation fuel energy yield of at least 70%, at least 75%, at least 80%, at least 85%, at least 90%, or at least 95%. Advantageously, selecting hydroprocessing units that have a relatively high transportation fuel energy yield (e.g., above 80%), can increase the renewable content provided by the fuel production facility for a given amount of renewable hydrogen and/or renewable methane/RNG, particularly when the renewable content is calculated using energy of the feedstock/products. In one embodiment, the renewable content is quantified with energy and the renewable hydrogen is selectively directed to one or more hydroprocessing units, where each hydroprocessing unit has a transportation fuel energy yield that is at least 80%.

In one embodiment, the renewable hydrogen is selectively directed to one or more hydroprocessing units, where each hydroprocessing unit has a transportation fuel energy yield that is greater than the transportation fuel energy yield of the fuel production facility (e.g., by a predetermined amount). The transportation fuel energy yield of the fuel production facility represents the energy in the feedstock fed into the entire fuel production facility that is converted to energy in transportation fuel products produced by the fuel production facility. The transportation fuel energy yield for the fuel production process is calculated by dividing the sum of the energies of all transportation fuel products (e.g., in MJ) produced by at the fuel production facility, respectively, by the sum of the energies of all feedstock (e.g., in MJ) fed into fuel production facility, and may be expressed as a percentage. The transportation fuel energy yield of the fuel production facility is calculated as an average over the same time period used to calculate the transportation fuel energy yield, respectively, of the hydroprocessing unit to which it is compared.

In one embodiment, the renewable hydrogen is selectively directed to one or more hydroprocessing units, where each hydroprocessing unit has a transportation fuel energy yield that is at least 5%, at least 7.5%, at least 10%, at least 12.5%, at least 15%, or at least 20% greater than the transportation fuel energy yield of the fuel production facility. For example, a hydroprocessing unit having a transportation fuel energy yield of 85% would have a transportation fuel energy yield that is 13.3% greater than the transportation fuel energy yield of the fuel production facility, when the transportation production facility has a transportation energy yield of 75%.

In one embodiment, the renewable hydrogen is selectively directed to one or more hydroprocessing units, where each hydroprocessing unit has an energy loss to non-transportation fuel products that is lower than the energy loss to non-transportation fuel products of the production facility (e.g., by a predetermined amount). For example, consider an oil refinery that loses on average (e.g., over a 3 month time period) 25% of the input energy to non-transportation fuel products (e.g., asphalt, lubricants, greases, road oil, waxes, and/or chemicals). In this case, selectively directing the renewable hydrogen to hydroprocessing units that lose only 15% of the input energy to non-transportation fuel products can reduce the amount of renewable energy lost to non-transportation fuel products by 40%. This is particularly advantageous when using energy to quantify the renewable content. In one embodiment, the renewable hydrogen is selectively directed to one or more hydroprocessing units, where each hydroprocessing unit has an energy loss to non-transportation fuel products that is at least 2.5% lower, at least 5% lower, at least 7.5% lower, or at least 10% lower than the energy loss to non-transportation fuel products of the production facility. In one embodiment, the renewable hydrogen is selectively directed to one or more hydroprocessing units, where each hydroprocessing unit has an energy loss to non-transportation fuel products that is less than 0.6 times the energy loss to non-transportation fuel products of the production facility, less than 0.7 times the energy loss to non-transportation fuel products of the production facility, less than 0.8 times the energy loss to non-transportation fuel products of the production facility, or less than 0.9 times the energy loss to non-transportation fuel products of the production facility.

In one embodiment, the fuel production process includes quantifying the renewable content using energy (e.g., MJ) of the feedstocks and product(s) and selectively directing the renewable hydrogen to one or more hydrotreaters, each of which provides predominately one liquid transportation fuel (e.g., gasoline, jet fuel, or diesel). In one embodiment, the fuel production process includes quantifying the renewable content using energy (e.g., MJ) of the feedstocks and product and selectively directing the renewable hydrogen to one or more hydrotreaters, wherein at least 85%, at least 90%, or at least 95% of the product produced by each hydrotreater corresponds one transportation fuel (e.g., gasoline, jet fuel, or diesel) by energy. In one embodiment, the fuel production process includes quantifying the renewable content using energy (e.g., MJ) of the feedstocks and product and selectively directing the renewable hydrogen to one or more hydrotreaters, wherein each hydrotreater has a crude-oil derived liquid hydrocarbon feed in the diesel boiling point range, the gasoline boiling point range, or the kerosene boiling point range of the fuel production facility. In one embodiment, the fuel production process includes quantifying the renewable content using energy (e.g., MJ) of the feedstocks and product and selectively directing the renewable hydrogen to one or more straight run hydrotreaters (e.g., where each hydrotreater processes straight run gasoline, straight run kerosene, or straight run diesel). In one embodiment, the fuel production process includes quantifying the renewable content using energy (e.g., MJ) of the feedstocks and product and selectively directing the renewable hydrogen to a distillate hydrotreater, which is not upstream of a unit operation that provides carbon-carbon bond breaking (e.g., a hydrocracker). In one embodiment, the fuel production process includes quantifying the renewable content using energy (e.g., MJ) of the feedstocks and product and selectively directing the renewable hydrogen such that it is incorporated into crude oil derived liquid hydrocarbon that is not fed into a cat cracker. In one embodiment, the fuel production process includes quantifying the renewable content using energy (e.g., MJ) of the feedstocks and product and selectively directing the renewable hydrogen to one or more hydrotreaters, where each hydrotreater is used for finishing a specific fuel product (e.g., gasoline, kerosene/jet fuel, or diesel/heating oil). Advantageously, these embodiments may increase the renewable content available for a specific fuel for a given amount of renewable hydrogen.

In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed to unit operations and/or processing unit, where the product(s) provided by each unit operation and/or processing unit provides is least 85%, 90%, or 95% gasoline, kerosene, or diesel by volume (e.g., is selectively directed to one or more of the straight-run and/or finishing hydrotreaters). In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed to one or more unit operations and/or processing units for hydrotreating crude oil derived liquid hydrocarbon predominantly in the gasoline boiling point range of the fuel production facility. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed to one or more unit operations and/or processing units for hydrotreating crude oil derived liquid hydrocarbon predominantly in the kerosene boiling point range of the fuel production facility. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed to one or more unit operations and/or processing units for hydrotreating crude oil derived liquid hydrocarbon predominantly in the diesel boiling point range of the fuel production facility. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed to unit operations and/or processing units that are not upstream of a cracking unit. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is incorporated into crude oil derived liquid hydrocarbon that does not undergo a subsequent chemical reaction. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is directed to unit operations and/or processing units that produce products wherein at least 75%, at least 80%, at least 85%, at least 90%, or at least 95% of the products, by volume, correspond to a single liquid transportation fuel. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is directed to unit operations and/or processing units wherein at least 75%, at least 80%, at least 85%, at least 90%, or at least 95% of the products, by energy, are transportation fuel products.

In one embodiment, the fuel production process includes quantifying the renewable content using energy (e.g., MJ) of the feedstocks and product and selectively directing the renewable hydrogen to predetermined unit operations and/or processing units, wherein the predetermined unit operations and/or processing units are selected such that at least 75%, at least 80%, at least 85%, or at least 90% of the renewable hydrogen provided to and/or within the fuel production process is incorporated into diesel, heating oil, gasoline, kerosene, and/or jet fuel. In one embodiment, the fuel production process includes quantifying the renewable content using energy (e.g., MJ) of the feedstocks and product and selectively directing the renewable hydrogen to predetermined unit operations and/or processing units, wherein the predetermined unit operations and/or processing units are selected such that at least 75%, at least 80%, at least 85%, or at least 90% of the renewable hydrogen provided to and/or within the fuel production process is incorporated into diesel, gasoline, and/or jet fuel.

In one embodiment, the fuel production process includes quantifying the renewable content using energy (e.g., MJ) of the feedstocks and product and selectively directing the renewable hydrogen such that at least 75%, at least 80%, at least 85%, at least 90%, at least 95%, or 100% of the renewable hydrogen provided to and/or within the fuel production process is selectively directed such that it is used within unit operations and/or processing units that have a hydrogen feed with a renewable hydrogen to fossil hydrogen ratio of at least 80%, at least 85%, at least 95%, or 100%. Providing a hydrogen feed wherein the amount of renewable hydrogen to fossil hydrogen is relatively high can significantly increase the quantity of renewable content associated with a specific fuel (e.g., diesel) when the renewability is quantified using energy.

In one embodiment, the fuel product process includes quantifying the renewable content using energy and selectively directing the renewable hydrogen such that at least 75%, at least 80%, at least 85%, at least 90%, at least 95%, or 100% of the renewable hydrogen provided to and/or within the fuel production process is selectively directed to a hydroprocessing unit where at least 75%, at least 85%, at least 90%, or at least 95% of the products by energy is diesel and/or kerosene.

In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed such that is used in the hydroprocessing of crude oil derived liquid hydrocarbon having an average carbon number (per molecule) that is less than 25, less than 24, less than 23, or less than 22. In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed such that is used in the hydroprocessing of crude oil derived liquid hydrocarbon having an average carbon number (atoms per molecule) that is at least 5 and is not more than 18, not more than 19, not more than 20, not more than 21, not more than 22, not more than 23, not more than 24, or not more than 25. In one embodiment, the fuel production process includes quantifying the renewable content using energy and selectively directing the renewable hydrogen such that at least 75%, at least 80%, at least 85%, at least 90%, at least 95%, or 100% of the renewable hydrogen provided to and/or within the fuel production process is selectively directed such that is used in the hydroprocessing of crude oil derived liquid hydrocarbon having an average carbon number (atoms per molecule) that is at least 5 and is not more than 20. Using the renewable hydrogen in the hydroprocessing of crude-oil derived liquid hydrocarbon where the hydrocarbon is within the $C_5$-$C_{25}$ range can improve the quantification of the renewable content and/or increase the renewable content for a specific fuel product. In one embodiment, the fuel production process selectively directing the renewable hydrogen such that at least 75%, at least 80%, at least 85%, at least 90%, at least 95%, or 100% of the renewable hydrogen provided to and/or within the fuel production process is selectively directed such that is used in the hydroprocessing of crude oil derived liquid hydrocarbon having an average carbon number (atoms per molecule) that is at least 5 and is not more than 20, and that has a hydrogen to carbon molar ratio that is not more than 2.5 or not more than 3.

In one embodiment, the fuel production process includes selectively directing the renewable hydrogen such that at least 75%, at least 80%, at least 85%, at least 90%, at least 95%, or 100% of the renewable hydrogen provided to and/or within the fuel production process is selectively directed to one or more hydroprocessing units, wherein each hydroprocessing unit has a transportation fuel energy yield of at least 80%, at least 85%, at least 90%, or at least 95%. In one embodiment, the fuel production process includes quantifying the renewable content using energy and selectively directing the renewable hydrogen such that at least 75%, at least 80%, at least 85%, at least 90%, at least 95%, or 100% of the renewable hydrogen provided to and/or within the fuel production process is selectively directed to one or more hydroprocessing units, where each processing unit an energy yield for diesel of at least 85%, at least 90%, or at least 95%.

In one embodiment, the renewable content of the fuel produced by the fuel production process is quantified using energy when at least 75%, at least 80%, at least 85%, at least 90%, at least 95%, or 100% of the renewable hydrogen used within the fuel production facility is selectively directed to one or more hydroprocessing units, where each of the selected hydroprocessing units has a fuel energy yield of at least 80%, of at least 85%, at least 90%, or at least 95%.

In one embodiment, the renewable content of the transportation fuel product is quantified using energy (e.g., MJ) of the feedstocks and product(s) when the transportation fuel energy yield of the fuel production facility is at least 1.2, at least 1.5, or at least 2 times greater than the hydrogen incorporation yield by difference. The hydrogen incorporation yield by difference represents the energy in the product(s) that is quantified by calculating known loss of hydrogen (e.g., to light ends, hydrogen sulfide, water, etc.) and subtracting it from the hydrogen input to determine hydrogen incorporation. The hydrogen incorporation yield by difference for transportation fuel products of the fuel production facility is calculated from

$$\underline{\frac{\text{MJ of hydrogen incorporated by difference into all the transportation fuel products}}{\text{MJ of all of the transportation fuel products}}} \quad (13)$$

where the MJ of hydrogen incorporated by difference into transportation fuel products is determined using a mass balance of hydrogen. Eq. 13 provides the renewable content of transportation fuel products as calculated by mass balance.

In one embodiment, the fuel production process includes quantifying the renewable content using energy (e.g., MJ) of the feedstocks and product and selectively directing the renewable hydrogen such that at least 75%, at least 80%, at least 85%, at least 90%, at least 95%, or 100% of the renewable hydrogen provided to and/or within the fuel production process is selectively directed to a hydroprocessing unit that provides transportation fuel products having a renewability calculated using energy (e.g., Eq. 12) that is at least 1.1, at least 1.2, at least 1.3, at least 1.4, or at least 1.5 times the renewable content calculated by mass balance (e.g., Eq. 13).

Determining the energy (e.g., MJ) of the feedstocks and/or product(s) typically includes measuring a flow (e.g., mass flow rate, volume flow rate, daily average mass flow rate, daily average volume flow rate, average mass flow rate for a reporting period, and/or average volume flow rate for a reporting period). For example, determining the energy of the renewable hydrogen feedstock typically includes measuring a flow rate (e.g., volume flow rate) of hydrogen into the selected unit operations or processing units (e.g., using a gas meter). The energy of the renewable hydrogen feedstock may be determined using the flow rate of hydrogen into the selected unit operations and/or processing units and the ratio of renewable hydrogen to fossil hydrogen.

In one embodiment, the amount of renewable hydrogen produced by and/or provided to the fuel production process is determined by measuring a flow of renewable methane (and non-renewable methane, if present) into the methane reformer, measuring the flow of hydrogen produced, and calculating the amount of renewable hydrogen therein. In one embodiment, the amount of renewable hydrogen provided to the each unit operation and/or processing unit is determined by measuring the flow of hydrogen to each unit operation and/or processing unit and calculating how much hydrogen can be incorporated into the product (e.g., calculating a predetermined factor).

In general, delivering a renewable product as a fungible batch in a distribution system also used for providing a non-renewable product is known (e.g., transporting RNG in the natural gas grid). In such cases, as long as there is a physical link between the injection point and the withdrawal point, the renewable product can be delivered to any destination. In one embodiment, this method is used to allocate a quantity of renewable hydrogen to selected unit operations and/or processing units. Advantageously, this may simplify the quantification of renewable content. For example, in one embodiment, quantifying the renewable content comprises allocating the renewable hydrogen by delivering it as a fungible batch. In one embodiment, quantifying the renewable content comprises allocating the renewable hydrogen to a unit operation and/or processing unit that only produces one fuel product (e.g., only produces diesel, such as a straight-run diesel hydrotreater). In one embodiment, quantifying the renewable content comprises allocating the renewable hydrogen to a unit operation and/or processing unit that produces only one liquid transportation fuel product.

In one embodiment, the renewable hydrogen is provided to a unit operation and/or processing unit that produces more than one fuel product (e.g., diesel and gasoline). In general, quantifying the renewable content when the renewable hydrogen may end up in multiple products is more complex. Moreover, the methods of quantifying the renewable content in these cases can be dependent on the jurisdiction and/or applicable regulations. In one embodiment, quantifying the renewable content comprises allocating the renewable content to selected products (e.g., only to diesel). In one embodiment, quantifying the renewable content comprises allocating the renewable content proportionally to the different products containing added hydrogen (e.g., if more gasoline is produced than diesel, then more of the renewable content from the renewable hydrogen is allocated to gasoline). In one embodiment, quantifying the renewable content comprises allocating the renewable hydrogen equally to all the products (e.g., half to gasoline and half to diesel regardless of the product ratio). In one embodiment, quantifying the renewable content comprises allocating the renewable hydrogen according to the amount of hydrogen incorporated into each product (e.g., as measured by the relative amount of hydrogen and carbon in the feeds and output streams). In one embodiment, quantifying the renewable content comprises determining a renewability of the renewable fuel produced (e.g., using Eq. 12) and assigning the same percent renewability to all of the products produced.

In one embodiment, the renewable hydrogen is provided so that it is allocated to a single fuel product (e.g., gasoline, diesel, or jet fuel). For example, in one embodiment, the process of producing the fuel includes allocating more than 50%, more than 60%, more than 70%, more than 80%, or more than 90% of the renewable hydrogen provided to and/or produced within the fuel production facility into diesel blendstock (e.g., by selectively directing the renewable hydrogen to a diesel hydrotreater). In one embodiment, all or most (e.g., 100%) of the renewable hydrogen generated and/or contracted for, is incorporated into a single product (e.g., diesel blendstock). In one embodiment, the renewable hydrogen is allocated to multiple fuel products (e.g., diesel and gasoline).

Although the fuel produced may be referred to as a petroleum-based fuel, since it contains and/or is produced using renewable hydrogen and/or renewable methane or RNG, it or portions thereof may be considered a renewable fuel, a fuel having renewable content, a fuel having a reduced carbon intensity (CI), and/or a fuel having reduced lifecycle greenhouse gas emissions (e.g., relative to a fuel produced only using fossil-derived hydrogen). For example, since a feedstock to the fuel production process is biogas and/or renewable hydrogen, and since the renewable hydrogen contributes atoms to the fuel product, the resulting fuel has renewable content.

Since the fuel (e.g., blendstock) produced may be considered to be renewable, have renewable content, and/or to be produced using a process that has reduced lifecycle greenhouse gas emissions or reduced carbon intensity, the process for producing the fuel may also include generating and/or obtaining documentation that evidences, certifies, attests to, validates, authenticates, and/or officially recognizes that the fuel or process itself, possesses qualifications and/or meets applicable standards and/or regulations to qualify as a renewable fuel or a fuel having renewable content, and/or to qualify for any incentives (e.g., fuel credits) available.

In one embodiment, the process of producing the fuel includes generating and/or obtaining documentation that evidences, certifies, attests to, validates, authenticates, or otherwise officially recognizes that the fuel is produced using renewable methane. For example, such documentation may include the source of renewable methane and/or biogas (e.g., company name, farm name, address, ID number, contact information, etc.), type and quantity of feedstock for producing the renewable methane and/or biogas, feedstock transaction records, feedstock transfer documents, delivery records showing the quantity and quality of renewable methane delivered, invoices showing the quantities of renewable methane sourced (e.g., in volume and/or MJ or BTU), delivery date, meter readings, chain of custody evidence, information related to the accounting of environmental attributes, attestations regarding environmental attributes, contracted price per unit of renewable methane, contracts, evidence of a fuel pathway under which the environmental attributes are obtained, reporting records, etc.

In one embodiment, the process of producing the fuel includes generating and/or obtaining documentation that evidences, certifies, attests to, validates, authenticates, or otherwise officially recognizes that the fuel is produced using renewable hydrogen. For example, such documentation may include the source of renewable methane and/or biogas (e.g., company name, farm name, address, ID number, contact information, etc.), type and quantity of feedstock for producing the renewable methane and/or biogas, feedstock transaction records, feedstock transfer documents, delivery records showing the quantity and quality of renewable methane delivered, delivery records showing the quantity and quality of renewable hydrogen delivered, invoices showing the quantities of renewable methane sourced (e.g., in volume and/or MJ or BTU), delivery date, meter readings, chain of custody evidence, information related to the accounting of environmental attributes, attestations regarding environmental attributes, contracted price per unit, contracts, evidence of a fuel pathway under which the environmental attributes are obtained, reporting records, etc.

In one embodiment, the process of producing the fuel includes generating and/or obtaining documentation that evidences, certifies, attests to, validates, authenticates, or otherwise officially recognizes that the fuel contains renewable hydrogen. For example, such documentation may include chain of custody evidence for the renewable methane, information related to the accounting of environmental attributes of the renewable methane, information related to the accounting of environmental attributes of the renewable hydrogen, flow rates, mass balance calculations (with or without traceable support), attestations regarding environmental attributes, evidence of a fuel pathway under which the environmental attributes are obtained, reporting records, etc.

In one embodiment, the process of producing the fuel includes generating and/or obtaining documentation that evidences, certifies, attests to, validates, authenticates, or otherwise officially recognizes that the fuel and/or renewable content, has a carbon intensity or lifecycle greenhouse gas emissions that is below a predetermined limit established by a government regulatory agency (e.g., the EPA or California Air Resources Board (CARB)).

In one embodiment, the process of producing the fuel includes generating and/or obtaining documentation that evidences, certifies, attests to, validates, authenticates, or otherwise officially recognizes that the fuel is associated with environmental attributes dependent on using the renewable methane and/or renewable hydrogen. The term "environmental attributes", as used herein with regard to a specific material (e.g., renewable methane, RNG, or renewable hydrogen), refers to any and all attributes related to the material, including all rights, credits, benefits, or payments associated with the renewable nature of the material and/or the reduction in or avoidance of fossil fuel consumption or reduction in lifecycle greenhouse gas emissions associated with the use of the material. Some non-limiting examples of environmental attributes include verified emission reductions, voluntary emission reductions, offsets, allowances, credits, avoided compliance costs, emission rights and authorizations, certificates, voluntary carbon units, under any law or regulation, or any emission reduction registry, trading system, or reporting or reduction program for greenhouse gas emissions that is established, certified, maintained, or recognized by any international, governmental, or nongovernmental agency.

In one embodiment, the fuel production process includes the step of obtaining an attestation from each upstream party that collectively demonstrate that entity claiming the environmental attributes has the exclusive right to claim environmental attributes associated with the sale or use of the biogas, renewable methane, and/or renewable hydrogen. In one embodiment, the process of producing the fuel includes petitioning for or registering a fuel pathway with an agency for the production of the fuel, or includes verifying that the fuel is prepared using a process that meets the criteria for a registered or otherwise approved or qualifying fuel pathway. The term "fuel pathway", as used herein, refers to the collective set of processes, operations, parameters, conditions, locations, and technologies throughout all stages that the applicable agency considers appropriate to account for in the system boundary of a complete well-to-wheel analysis of that fuel's lifecycle greenhouse gas emissions (e.g., for a particular finished fuel).

In one embodiment, the process of producing the fuel includes generating and/or obtaining documentation that evidences, certifies, attests to, validates, authenticates, or otherwise officially recognizes that the fuel, renewable content, or fuel production process, meets applicable regulations to qualify for a fuel credit. A "fuel credit" or "renewable fuel credit", includes any rights, credits, certificates, revenues, offsets, greenhouse gas rights, rights to any greenhouse gas emission reductions, carbon-related credits, or equivalent, arising from emission reduction trading or any quantifiable benefits (including recognition, award or allocation of credits, allowances, permits or other tangible rights), whether created from or through a governmental authority or a private contract.

In one embodiment, the process of producing the fuel includes generating or causing the generation of a fuel credit. In one embodiment, the fuel credit is generated in dependence upon the renewable methane and/or renewable hydrogen being used to produce the fuel. In one embodiment, a fuel credit is generated in dependence upon the renewable hydrogen being incorporated into the fuel. In one embodiment, a fuel credit is generated in dependence upon a calculated renewable content of the fuel product. In one embodiment, the fuel credit is generated in dependence upon a magnitude of carbon intensity of the renewable content (i.e., of the renewable hydrogen). In one embodiment, the process includes generating, or causing the generation of, a fuel credit for the renewable portion of the fuel (i.e., the renewable content).

In one embodiment, a renewable fuel credit is generated in dependence upon the renewable hydrogen being used to produce a liquid transportation fuel, where the renewable fuel credit is a certificate, record, serial number or guarantee, in any form, including electronic, which evidences production of a quantity of fuel meeting certain lifecycle greenhouse gas emission reductions relative to a baseline set by a government authority. In one embodiment, the baseline is a gasoline baseline. Non-limiting examples of credits include RINs and LCFS credits. A Renewable Identification Number (or RIN) is a certificate that acts as a tradable currency for managing compliance under the RFS. A Low Carbon Fuel Standard (LCFS) credit is a certificate which acts as a tradable currency for managing compliance under California's LCFS. A RIN has numerical information associated with the production of a qualifying renewable fuel in accordance with regulations administered by the EPA for the purpose of managing the production, distribution and use of renewable fuels for transportation or other purposes. In one embodiment, the process of producing the fuel includes generating or causing the generation of LCFS credits. In general, the requirements for generating or causing the generation of fuel credits can vary by country, the agency, and or the prevailing regulations in/under which the fuel credit is generated.

In one embodiment, the process of producing the fuel includes obtaining, transferring, trading, and/or selling the environmental attributes of the renewable methane, the renewable hydrogen, and/or the fuel product containing renewable hydrogen, wherein the environmental attributes are obtained, transferred, traded, and/or sold as a fuel credits (e.g., LCFS) or certificates (e.g., sustainability certificate, green gas certificate, and/or biogas certificate). In one embodiment, the fuel credits and/or certificates are the currency for a regulatory agency for demonstrating compliance with applicable regulations. In one embodiment, the fuel credits and/or certificates are issued by the regulator agency. In one embodiment, the fuel credits and/or certificates are issued by an issuing body recognized by the regulator agency. In one embodiment, the fuel credits and/or certificates include a unique number for circumventing double counting of the environmental attributes. In one embodiment, the process includes obtaining proof of sustainability.

In one embodiment, the process of producing the fuel includes generating and/or obtaining documentation that evidences, certifies, attests to, validates, authenticates, or otherwise officially recognizes that the fuel, renewable content, and/or fuel production process, meets applicable regulations, and can be used to meet low carbon fuel standards established by states within the United States or other government authorities. Transportation or heating fuels, including fuels made from crude oil derived liquid hydrocarbons, have a net greenhouse emission level associated with their production and this level can be compared against a standard (e.g., the greenhouse gas emission standard for gasoline set by the EPA). Due to legislative initiative and mandates, demand for renewable transportation or heating fuels with favorable net greenhouse gas emission reductions is increasing. For example, the mix of fuel that oil refineries and distributors sell into the California market can be required to meet established targets for greenhouse gas emissions. California's LCFS can require increasing reductions in the average lifecycle greenhouse gas emission of most transportation fuels. Targets can be met by trading of credits generated from the use of fuels with a lower greenhouse gas emission value than a gasoline baseline. Similar legislation has been implemented by the province of British Columbia, Canada, the United Kingdom, and by the European Union, and is under consideration in certain U.S. states besides California. It should be understood, however, that the invention is not limited to any particular jurisdiction in which a credit can be attained for the fuel produced.

In one embodiment, the process of producing the fuel includes generating and/or obtaining documentation that evidences, certifies, attests to, validates, authenticates, or otherwise officially recognizes that the fuel pathway used to produce the fuel is eligible for the generation of fuel credits (e.g., LCFS credits) as a result of the greenhouse gas emissions reductions provided by using renewable methane and/or renewable hydrogen. LCFS credits would be generated in proportion to the net greenhouse gas reductions generated relative to gasoline. Such credits would have associated numerical information, and could be traded by the credit generator, an intermediary, or party obligated under the LCFS. In one embodiment, the process of producing the fuel includes submitting an application to have the fuel pathway used to produce the fuel approved. In one embodiment, the pathway is approved by a verification body.

In one embodiment, the process of producing the fuel includes generating and/or obtaining documentation that evidences, certifies, attests to, validates, authenticates, or otherwise recognizes that the fuel is produced from a feedstock including waste organic material. In one embodiment, the process of producing the fuel includes generating and/or obtaining documentation that evidences, certifies, attests to, validates, authenticates, or otherwise recognizes that the fuel is produced from biogas and/or renewable methane. In one embodiment, the process of producing the fuel includes generating and/or obtaining documentation that evidences, certifies, attests to, validates, authenticates, or otherwise recognizes that the fuel is produced from biomass. The term "biomass", as used herein, refers to non-fossilized and biodegradable organic material originating from plants, animals, or micro-organisms, including: products, by-products, residues and waste from agriculture, forestry, and related industries (e.g., fisheries and aquaculture); the non-fossilized and biodegradable organic fractions of industrial and municipal wastes; and gases and liquids recovered from the decomposition of non-fossilized and biodegradable organic material.

In one embodiment, the fuel containing renewable hydrogen is produced for use in another jurisdiction. In this embodiment, the environmental attributes of the fuel, which may be required in the other jurisdiction, are transferred with the fuel to a third party.

In one embodiment, the process of producing the fuel includes generating and/or obtaining documentation that evidences, certifies, attests to, validates, authenticates, or otherwise officially recognizes that the fuel has a specific quantity of renewable hydrogen. In one embodiment, the process for producing the fuel includes quantifying the renewable content of the fuel. In one embodiment, the quantification includes determining the amount of renewable methane imported to the process, the amount of renewable hydrogen imported and/or produced in the process, the efficiency of various processes/unit operations, the amount of hydrogen in a flue gas and/or recycled, mass fractions, H/C ratios, etc. The amount of renewable methane and/or renewable hydrogen imported and/or generated may be determined by volume, mass, and/or energy, or may be evidenced by invoices, contracts, and/or other documentation. In one embodiment, the process of producing the fuel includes determining a greenhouse gas emission reduction or carbon intensity for the renewable content.

In general, the hydrogen requirements for the processes, the amount of hydrogen incorporated into the crude oil derived liquid hydrocarbon, and/or the renewable content of each fuel produced may be calculated using mass, energy, and/or volumetric balances. Depending on the applicable laws and/or regulations, this calculation may include an estimation/calculation of the contribution of the selected unit operations to each of the product categories, an estimation/calculation of the amount of hydrogen incorporated in the process, and/or conversion levels.

In one embodiment the process of producing the fuel includes demonstrating that a verifiable contractual pathway exists and that such pathway ensures that (1) a specific volume of RNG derived directly from biogas was placed into a commercial pipeline that ultimately serves the fuel production facility; (2) that the volume of gas withdrawn into this facility from that pipeline matches the volume of RNG derived directly from biogas placed into the pipeline; and (3) that the quantity of RNG for which renewable fuel credits were generated was sold for use as transportation or heating fuel and for no other purpose. Where such conditions are satisfied, liquid transportation or heating fuel made using RNG withdrawn from a natural gas pipeline may qualify for renewable fuel credits. It should be understood that the requirements for the RNG to qualify as renewable or renewably derived may change according to government standards and that the process is not limited to the current rules as would be known by those of skill in the art. It also should be understood that quantities of RNG may be withdrawn from the pipeline in batch sizes or at rates that are not identical at the introduction point.

In one embodiment, the process of producing the fuel includes a commercial arrangement or agreements that has the following conditions: (i) the fuel production facility or other party arranges to procure an amount or amounts of renewable methane, such as a volume amount or a heat or energy content; (ii) the renewable methane is only to be procured by the party specified in the commercial arrangement or agreement; (iii) the amount of renewable methane, such as a volume amount or a heat or energy content, that is withdrawn from a commercial distribution system, is withdrawn in a manner and at a time consistent with the transport of the renewable methane between injection and withdrawal points; (iv) the amount of renewable methane introduced and withdrawn from the distribution system for delivering methane is measured, such as by metering; (v) the distribution system for delivering a methane serves the fuel production facility; (vi) the specified quantity of renewable methane introduced and the quantity of methane withdrawn is only used for transportation or heating purposes; or any combination of conditions (i)-(vi).

In one embodiment, the fuel produced using renewable hydrogen is used towards meeting renewable fuel targets or mandates established by governments, including legislation and regulations for transportation or heating fuel sold or introduced into commerce in the United States. Examples of such legislation include the EISA and California AB 32 - The Global Warming Solutions Act, which respectively established an RFS and a Low Carbon Fuel Standard (LCFS). For example, in one embodiment, the renewable content of the fuel produced using renewable hydrogen is used towards meeting renewable obligations established by governments. Renewable targets, mandates, and/or obligations may be based on volume of renewable fuel and/or volume renewable content. In one embodiment, the renewable content of the fuel produced using renewable hydrogen is used towards meeting renewable volume obligations (RVOs). In some embodiments, a fuel supplier's obligation to provide a volume of renewable fuel, which may be calculated as a proportion of the overall volume of fuel they supply (e.g., for road transport), may be met using credits or certificates. For example, in one embodiment, the renewable content of the fuel produced using renewable hydrogen (e.g., a portion of fuel considered renewable) is used to meet the Renewable Transport Fuel Obligation (RTFO) in the United Kingdom, as evidenced by one or more Renewable Transport Fuel Certificates (RTFCs), where one RTFC may be claimed for every liter of sustainable renewable fuel supplied.

In one embodiment, the process includes determining lifecycle greenhouse gas emissions and/or carbon intensity for the fuel or renewable content. In one embodiment, the lifecycle greenhouse gas emissions evaluations consider the greenhouse gas emissions of each: (a) the feedstock production and recovery (including if the carbon in the feedstock is of fossil origin (such as with oil or natural gas) or of atmospheric origin (such as with biomass)), direct impacts like chemical inputs, energy inputs, and emissions from the collection and recovery operations, and indirect impacts like the impact of land use changes from incremental feedstock production; (b) feedstock transport (including energy inputs, and emissions from transport); (c) fuel production (including chemical and energy inputs, emissions and byproducts from fuel production (including direct and indirect impacts)); and (d) transport and storage prior to use as a transportation fuel (including chemical and energy inputs and emissions from transport and storage).

In one embodiment, the process provides a fuel composition comprising a fuel component and renewable content, where the fuel component includes hydrogenated crude oil derived liquid hydrocarbon that boils in a predetermined boiling point range (e.g., diesel boiling point range or gasoline boiling point range for that fuel production facility), and where the fuel component includes the renewable content. The term "fuel component," as used herein, refers to any compound or mixture of compounds that is used to formulate a fuel composition. Optionally, the fuel composition includes flow improvers, cloud point depressants, antifoam additives, drag reducing additives, stabilizers, corrosion inhibitors, ignition improvers, smoke suppressants, combustion catalysts, etc. In one embodiment, the fuel composition includes additional renewable content (e.g., renewable fuel components such as ethanol and/or renewable gasoline, or biodiesel and/or renewable diesel). In one embodiment, the renewable content has lifecycle greenhouse gas emissions that are at least 50% lower than lifecycle greenhouse gas emissions of a remaining portion of the fuel composition.

In one embodiment, the process provides a fuel composition comprising a diesel component having renewable content. In this embodiment, the diesel component includes crude oil derived liquid hydrocarbon that boils in a diesel boiling point range (e.g., 180°C to about 400°C), while the renewable content comprises renewable hydrogen bonded to hydrocarbons in the diesel component. Optionally, the composition includes flow improvers, cloud point depressants, biodiesel, antifoam additives, drag reducing additives, stabilizers, corrosion inhibitors, ignition improvers, smoke suppressants, combustion catalysts, etc.

In one embodiment, the process provides a fuel composition comprising a hydrogenated crude oil derived liquid hydrocarbon, wherein a molar ratio of renewable hydrogen to carbon of at least 0.05 and not more than 0.5. In one embodiment, the renewable hydrogen is derived from biogas. In one embodiment, the renewable content has lifecycle greenhouse gas emissions that are at least 50% lower than lifecycle greenhouse gas emissions of a remaining portion of the diesel component.

In one embodiment, the process provides a diesel fuel produced by hydrogenating crude oil derived liquid hydrocarbon in the diesel boiling point range with renewable hydrogen, where the diesel fuel has a molar ratio of renewable hydrogen to carbon of at least 0.05 and not more than 0.5. In accordance with one embodiment of the invention, there is provided a fuel composition comprising at least one diesel component having renewable content, wherein the renewable content comprises renewable hydrogen bonded to crude oil derived liquid hydrocarbon in a diesel boiling point range, wherein the diesel component has a molar ratio of renewable hydrogen to carbon of at least 0.05 and not more than 0.5, wherein the renewable hydrogen is derived from biogas, and wherein the renewable content has lifecycle greenhouse gas emissions that are at least 50% lower than lifecycle greenhouse gas emissions of a remaining portion of the diesel component.

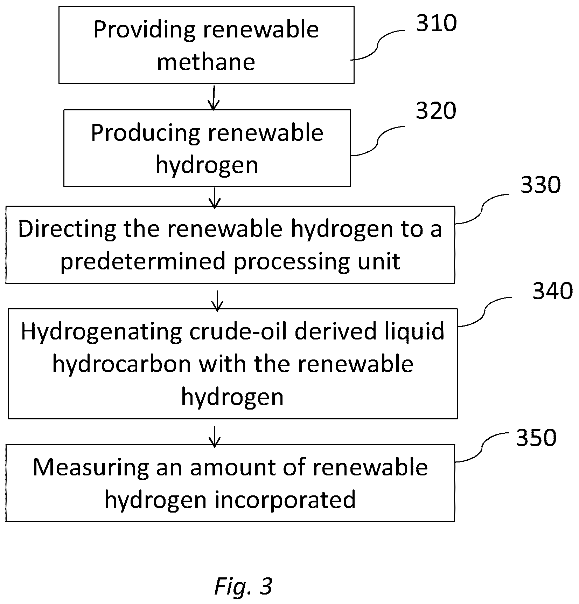

Referring to Fig. 3, there is shown a process of producing a fuel having renewable content in accordance with one embodiment of the invention. The process includes providing renewable methane (e.g., derived from biogas) 310, producing renewable hydrogen (e.g., by methane reforming a gas stream containing the renewable methane) 320, directing at least a portion of the renewable hydrogen to a selected processing unit (e.g., in a pipe system) 330, hydrogenating crude oil derived liquid hydrocarbon with the renewable hydrogen 340 (and optionally fossil hydrogen), measuring an amount of hydrogen incorporated into the crude oil derived liquid hydrocarbon in the processing unit (e.g., using a mass of H, mass fraction of C, mole fraction of H, or mole fraction of C, C/H molar ratio, H/C molar ratio, C/H mass ratio, or H/C mass ratio ) 350, and determining the renewable content. In one embodiment, providing the renewable methane includes collecting biogas, upgrading the biogas to RNG, and injecting the RNG into a distribution system. In one embodiment, providing the renewable methane includes receiving and/or supplying the renewable methane withdrawn from a distribution system.

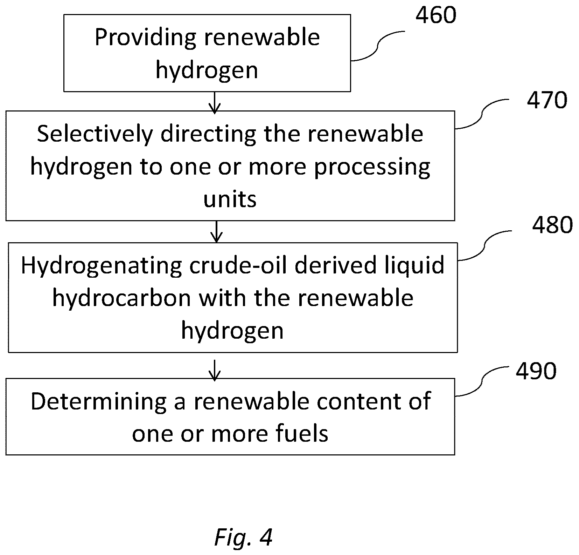

Referring to Fig. 4, there is shown a process of producing a fuel having renewable content in accordance with one embodiment of the invention. The process includes providing renewable hydrogen (e.g., derived from biogas) 460, selectively directing at least a portion of the renewable hydrogen to one or more processing units 470, hydrogenating crude oil derived liquid hydrocarbon with the selectively directed renewable hydrogen 480 (and optionally fossil hydrogen), and determining the renewable content of the one or more fuels produced by the one or more processing units. In one embodiment, determining the renewable content includes measuring an amount of renewable hydrogen incorporated into the crude oil derived liquid hydrocarbon 490. In one embodiment, providing the renewable hydrogen includes methane reforming a gas containing renewable methane (e.g., gas withdrawn from a distribution system and reported as dispensed as RNG). In one embodiment, providing the renewable hydrogen includes receiving renewable hydrogen provided from a third party and conveying it in a pipe system. In one embodiment, measuring an amount of renewable hydrogen incorporated into the crude oil derived liquid hydrocarbon includes an energy analysis.

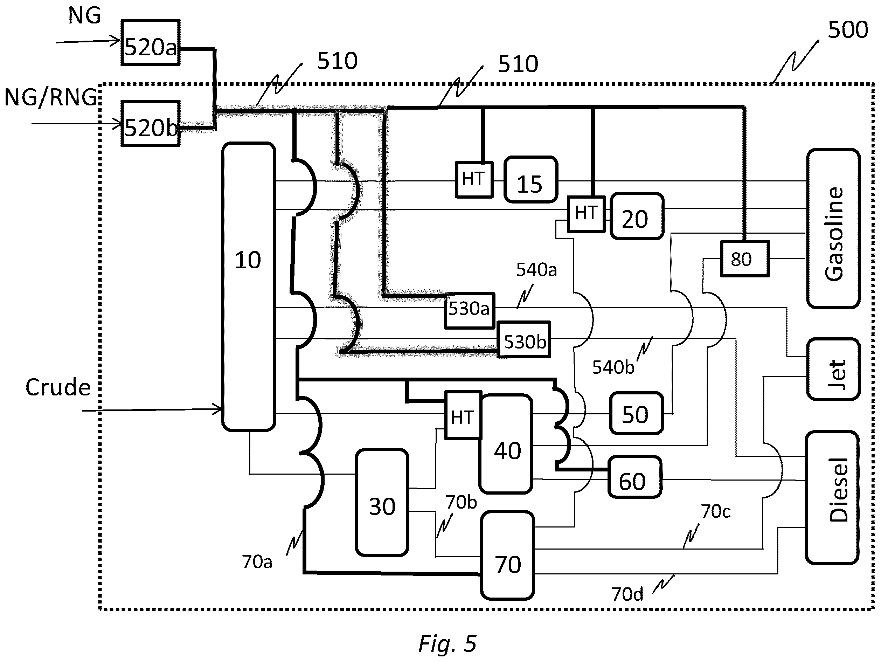

Referring to Fig. 5, there is shown an embodiment of a fuel production facility 500 at which a process in accordance with one embodiment of the invention can be conducted. In this embodiment, the fuel production facility 500 is an oil refinery that includes a pipe system 510 configured to convey hydrogen produced by multiple hydrogen production plants 520a and 520b (and optionally hydrogen produced within the fuel production process, not shown). In this embodiment, one of the hydrogen production plants 520a is an off-site hydrogen production plant, while the other hydrogen production plant 520b is an on-site hydrogen production plant. In other embodiments, there can be more or fewer hydrogen production plants. The oil refinery 500 also includes multiple hydroprocessing units including the hydrotreaters labeled HT, the kerosene hydrotreater 530a, the diesel hydrotreater 530b, hydrotreater 80, and hydrocrackers 60 and 70.

Some of the hydroprocessing units in the oil refinery 500 directly produce blendstock (e.g., one or more transportation fuel products). For example, each of the hydrotreaters 80, 530a, and 530b and hydrocrackers 60 and 70 provide at least one fuel that does not undergo further chemical reaction that materially modifies the hydrocarbon therein before use (e.g., gasoline, diesel/heating oil, jet fuel). Other hydroprocessing units produce fuel that generally requires further chemical reaction before it is suitable for use as a fuel product. For example, the hydrotreater (HT) upstream of the isomerization unit 15, the hydrotreater (HT) upstream of the naphtha reforming unit 20, and the hydrotreater (HT) upstream of the FCC unit 40, each produce fuel that undergoes further chemical reaction (e.g., isomerization, reforming, cracking) before ultimately ending up in one of the pools.

In accordance with one embodiment of the invention, a process of producing a fuel at the fuel production facility 500 includes providing renewable hydrogen (e.g., imported from off-site hydrogen production plant 520a and/or produced at on-site production plant 520b), selectively directing the renewable hydrogen (e.g., via pipe system 510) to one or more hydroprocessing units in the fuel production facility and hydrogenating crude oil derived liquid hydrocarbon therein to produce one or more fuels having renewable content, quantifying the renewable content of one or more of the fuels, and providing a volume fuel containing the renewable content.

As described herein, the renewable hydrogen can be selectively directed to hydroprocessing units that meet certain criteria and/or have certain hydroprocessing characteristics. For example, in one embodiment, each of the selected hydroprocessing units (a) is a hydrotreater, (b) is a distillate hydrotreater, (c) produces blendstock, (d) produces at least one transportation fuel product, (e) predominately produces transportation fuel product, (f) does not substantially produce any fuel that is not a transportation fuel product, (g) has a transportation fuel energy yield of at least 80%, and/or (h) has a transportation fuel energy yield at least 5% higher than a transportation fuel energy yield of the oil refinery.

Without selectively directing the renewable hydrogen, the renewable hydrogen can be distributed to all of the hydroprocessing units connected to the hydrogen pipe system 510 and end up in multiple fuels and by-products. The quantity of renewable fuel resulting from this natural distribution of renewable hydrogen can be determined using one or more conventional means of allocating renewability (e.g., used for the co-processing of bio-based oils and fossil oils). For example, the renewable content can be quantified by conventional means that include tracing the renewable input and allocating where the renewable share ends up based upon mass or energy flows. If a renewable feedstock flows into fuel production facility to an SMR, and the SMR feeds several hydroprocessing units, then each hydroprocessing unit gets an allocation of the renewable feedstock. When such a distribution of renewable hydrogen occurs, the renewable content of the fuels produced can be determined using general fuel production or refinery data (e.g., accounting data for feedstock inputs and product outputs of the fuel production facility, which may also be used to analyze economic performance of the fuel production facility). However, when selectively directing the renewable hydrogen to one or more hydroprocessing units, quantification of the renewable content can require measuring flows of feedstock and product for each of the selected hydroprocessing units (or a section of the oil refinery that contains the selected hydroprocessing units), measurements which may not be necessarily measured during conventional operation in an oil refinery and/or may not readily available from the accounting data of the fuel production facility.

It has now been found that the effort in obtaining these measurements can be compensated for by an increased yield of renewable content in fuel produced by the process. In particular, it has now been found that even though selective direction entails more data analysis and/or more tracking, it provides higher yield of renewable content in the fuels produced and/or can be used to provide renewable content of selected fuels. For example, although the renewable hydrogen produced at the on-site hydrogen plant 520b can be distributed to the hydrotreaters labeled HT, the kerosene hydrotreater 530a, the diesel hydrotreater 530b, hydrotreater 80, hydrocrackers 60 and 70 by following the physical flow of the pipe system, as illustrated in Fig. 5, alternatively it can be selectively directed to hydrotreaters 530a and 530b. For example, if the hydrogen production plant 520b produces 5 MMscfd of hydrogen for hydroprocessing within the fuel production facility, and contracts for an amount of RNG over a given reporting period that can produce renewable hydrogen in an amount equivalent to 1 MMscfd, then 0.3 MMscfd can be selectively directed to hydrotreater 530a, while 0.7 MMscfd can be selectively directed to hydrotreater 530b over the reporting period.

In one embodiment, the renewable hydrogen is selectively directed to hydrotreaters. Selectively directing the renewable hydrogen predominantly to hydrotreaters is advantageous because relatively mild hydroprocessing, like desulfurization, can result in a higher yield of renewable content. In addition, the hydrotreater(s) can be selected to provide renewable content within a specific pool (i.e., diesel, for transportation use and/or heating oil). In one embodiment, the renewable hydrogen is directed away from hydrocrackers and/or away from hydrotreaters upstream of a cracking unit. It can be particularly advantageous to selectively direct the renewable hydrogen so that it does not go to a hydrotreater upstream of a cat cracker (e.g., the gas oil hydrotreater labelled HT upstream of the FCC 40). In one embodiment, the renewable hydrogen is selectively directed to one or more hydroprocessing units having a transportation fuel energy yield above a predetermined limit.

Advantageously, since at least the renewable content may be recognized as and/or qualify as a renewable fuel under applicable regulations, one or more fuel credits can be generated. In one embodiment, the process includes generating fuel credits associated with the renewable content and/or providing documentation to facilitate fuel credit generation.

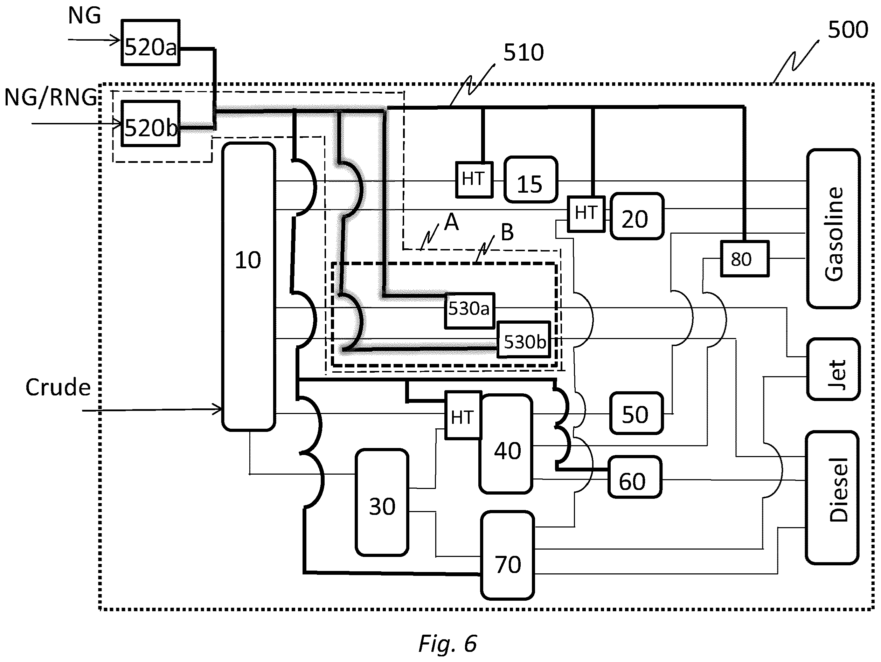

The renewable content of a fuel and/or volume of renewable content produced, and thus the number and/or value of fuel credits generated, can be dependent on the system used to produce the fuel having renewable content (e.g., the boundary of the renewable fuel production process). For example, the renewability of a fuel having renewable content as calculated using Eq. 12 is dependent on the feedstock (e.g., crude oil derived liquid hydrocarbon and renewable hydrogen or renewable methane/RNG) and fuel products (e.g., diesel/heating oil, kerosene, gasoline). As illustrated in Fig. 6, the feedstock and/or products can change depending on whether the system used to produce the fuel having renewable content corresponds to the entire fuel production facility 500, is bounded by the dashed line labeled A, or is bounded by the box labeled B.

In accordance with one embodiment of the invention, one or more fuels having renewable content are produced by a system wherein the only hydroprocessing units therein meet specific criteria and/or have certain hydroprocessing characteristics (e.g., are hydrotreaters as shown in systems A and B of Fig. 6). In one embodiment, the system for producing one or more fuels having renewable content is configured such that it does not include any hydroprocessing units that (a) are upstream of a cracking unit, an isomerization unit, and/or an alkylation unit, (b) produce a fuel product that undergoes substantial chemical reaction before provided to one of the pools, (c) does not produce at least one transportation fuel product, (d) has a transportation fuel energy yield less than 80%, and/or (e) has a transportation fuel energy yield lower than the transportation fuel energy yield of the oil refinery.

In general, the system for providing one or more fuels having renewable content may or may not include one or more hydrogen production plants. For example, in one embodiment, a renewable feedstock for the process of producing one or more fuels is renewable hydrogen (e.g., see box B). However, in some cases, in order for the fuel to qualify as renewable fuel and/or for fuel credits, the feedstock for the renewable fuel production process will include a renewable feedstock other than renewable hydrogen (e.g., renewable methane, biogas, RNG, and/or biomass). In these embodiments, the system for producing the fuel having renewable content typically includes one or more hydrogen production plants (e.g., a SMR-based hydrogen production plant or a gasification plant) that can provide hydrogen to a hydrogen pipe system of the fuel production process (e.g., each hydrogen production plant can be an off-site hydrogen production plant or an on-site hydrogen production plant).

In one embodiment, the system includes one or more hydrogen production plants and the process includes providing renewable methane to the one or more hydrogen production plants, which produce the renewable hydrogen. For example, in one embodiment, the process includes (a) providing a NG feedstock to a hydrogen production plant (e.g., based on SMR) at the fuel production facility, wherein a fraction of the NG is RNG, thereby producing a hydrogen stream containing renewable hydrogen, (b) determining how much renewable hydrogen is produced at the hydrogen production plant (e.g., calculating a percentage of renewable hydrogen in the hydrogen product stream), (c) injecting the hydrogen product stream containing renewable hydrogen into a hydrogen pipe system (e.g., grid) that provides hydrogen to multiple hydroprocessing units at the fuel production facility, and (d) withdrawing hydrogen from the hydrogen pipe system, at least a fraction of which is renewable, and feeding it into the selected hydroprocessing unit(s). The renewable fraction of the hydrogen streams injected and withdrawn from the hydrogen pipe system is calculated as:

$$\frac{energy\ of\ the\ renewable\ hydrogen\ (MJ)}{energy\ of\ the\ renewable\ hydrogen\ (MJ)+energy\ of\ the\ non-renewable\ hydrogen} \quad (14)$$

for a given time period (e.g., 3 months), and may be expressed as a percentage.

In one embodiment, the system includes multiple hydrogen production plants and the process includes feeding hydrogen produced from the multiple hydrogen plants into a pipe system of the fuel production facility such that renewable hydrogen is injected with an aggregate renewable fraction of Y% (from all the hydrogen production plants), and withdrawing hydrogen from the hydrogen pipe system for selected hydroprocessing plants such that the hydrogen withdrawn hydrogen for each selected hydroprocessing unit (or a subset of the refinery that includes the selected hydroprocessing units) is greater than Y%. In this embodiment, the amount of renewable hydrogen withdrawn from the hydrogen pipe system does not exceed the amount of renewable hydrogen injected into the hydrogen pipe system (e.g., in MMscf) over the same time period (e.g., over a 3 month period).

Providing a system for producing one or more fuels having renewable content, wherein the system is a subset of a fuel production facility, such as an oil refinery, and wherein the system includes hydrogen production (i.e., one or more hydrogen production plants) and one or more selected hydroprocessing units (e.g., having certain hydroprocessing characteristics) is particularly advantageous. In one embodiment, the system is a subset of the fuel production facility that includes hydrogen production and only one hydroprocessing unit, only two hydroprocessing units, only three hydroprocessing units, or only four processing units (e.g., selected from more than 5, 6, 7, 8, 9, or 10 at the oil refinery). In one embodiment, the system for producing one or more fuels having renewable content includes hydrogen production and multiple hydroprocessing units, where the average transportation fuel energy yield of all of the hydroprocessing units within the system is at least 80%. In one embodiment, the system for producing one or more fuels is a subset of the oil refinery that includes hydrogen production and multiple hydroprocessing units, and the average transportation fuel energy yield of the system is at least 5% higher than the transportation fuel energy yield of the oil refinery. The average transportation fuel energy yield for the system is calculated by dividing the sum of the energies of all transportation fuel products (e.g., in MJ) produced by the system by the sum of the energies of all feedstock (e.g., in MJ) fed into the system, and may be expressed as a percentage. In one embodiment, the system for producing one or more fuels having renewable content includes hydrogen production and excludes hydroprocessing units at the oil refinery that process hydrocarbon obtained from atmospheric bottoms, light vacuum gas oil (LVGO), and/or heavy vacuum gas oil (HVGO).

In one embodiment, the method of producing fuel having renewable content includes selecting a subset of a fuel production faciltiy having hydrogen production and one or more hydroprocessing units to produce the fuel having renewable content. In one embodiment, the method includes selecting multiple hydroprocessing units for the system, wherein the multiple hydroprocessing units, either singularly or collectively, possess certain hydroprocessing characteristics, while excluding one or more other hydroprocessing units that don't, singularly or collectively, possess certain hydroprocessing characteristics. For example, in one embodiment, the hydroprocessing characteristic is distillate hydroprocessing, such that the system includes all of the hydroprocessing units that process distillate fractions but excludes hydroprocessing units where the feed is or is derived from atmospheric bottoms.

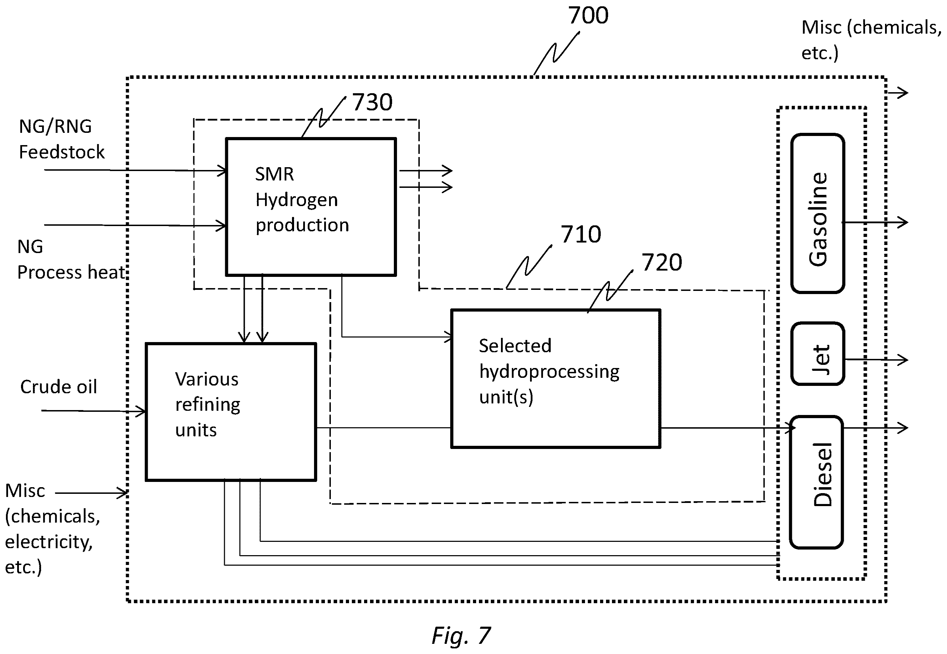

Referring to Fig. 7, there is shown a fuel production facility 700, such as an oil refinery, having a system 710 for producing one or more fuels having renewable content according to one embodiment. In this embodiment, the system 710 includes one or more hydroprocessing units 720, which is/are selected from various hydroprocessing units at the fuel production facility, and hydrogen production 730, which includes one or more hydrogen production plants that provides hydrogen that is distributed through the fuel production facility in a hydrogen pipe system (not shown). In this embodiment, the selected hydroprocessing unit(s) 720 include a hydroprocessing unit that receives crude oil derived liquid hydrocarbon that is a blend of various diesel fractions (e.g., selected from straight run kerosene, straight run diesel, light cycle oil, hydrocracked distillate, coker distillate, and/or other crude oil derived hydrocarbon) and is used to desulfurize and/or increase the cetane number of the blended stream. More specifically, the selected hydroprocessing unit is a distillate hydrotreater that predominately provides fuel product for the diesel pool (i.e., more than 90% of product by weight is diesel blendstock). Advantageously, selecting a subset of a fuel production facility for producing the one or more fuels having renewable content facilitates determining the renewable content based on the inputs and outputs of the subset (e.g., the renewable content can be dependent on the feedstock provided to the hydrogen production and the hydroprocessing units in the subset and products provided from the hydroprocessing units in the subset).

Of course, the above embodiments have been provided as examples only. It will be appreciated by those of ordinary skill in the art that various modifications, alternate configurations, and/or equivalents will be employed without departing from the scope of the invention. Accordingly, the scope of the invention is therefore intended to be limited solely by the scope of the appended claims.

The invention is further defined in the following clauses:

**Clauses**

1. A method of producing fuel having renewable content, the method comprising:

(a) providing renewable hydrogen;

(b) selectively directing the renewable hydrogen to one or more hydroprocessing units in a fuel production facility comprising a plurality of hydroprocessing units and hydrogenating crude oil derived liquid hydrocarbon in the one or more hydroprocessing units to provide one or more transportation fuel products comprising renewable content, wherein each of the one or more hydroprocessing units has a transportation fuel energy yield that is at least 5% higher than a transportation fuel energy yield of the fuel production facility;

(c) determining a renewable content of the one or more transportation fuel products, the determining comprising determining an amount of renewable hydrogen selectively directed to the one or more hydroprocessing units and determining an amount of at least one transportation fuel product produced by the one or more hydroprocessing units; and

(d) providing a fuel comprising at least one of the transportation fuel products comprising renewable content.

2. The method according to clause 1, wherein selectively directing the renewable hydrogen to one or more hydroprocessing units comprises selectively directing the renewable hydrogen to a plurality of selected hydroprocessing units, wherein each of the selected hydroprocessing units has a transportation fuel energy yield of at least 80%.

3. The method according to clause 1 or 2, wherein each of the one or more hydroprocessing units has a transportation fuel energy yield of at least 85%.

4. The method according to any of clauses 1 to 3, wherein at least 75% of the renewable hydrogen provided within the fuel production facility is provided to one or more hydrotreaters.

5. The method according to any of clauses 1 to 3, wherein at least 60% of the renewable hydrogen provided within the fuel production facility is provided to one or more distillate hydrotreaters.

6. The method according to any of clauses 1 to 5, wherein at least 75% of the renewable hydrogen provided within the fuel production facility is selectively directed to a hydroprocessing unit that predominately produces diesel.

7. The method according to any of clauses 1 to 6, wherein the renewable hydrogen is produced by reforming gas comprising renewable methane.

8. The method according to clause 7, wherein the gas comprising renewable methane comprises renewable natural gas withdrawn from a natural gas distribution system.

9. The method according to clause 7 or 8, wherein a renewable content of the at least one transportation fuel product provided in the fuel in step (d) has a carbon intensity that qualifies the renewable content as renewable fuel, the carbon intensity dependent upon using renewable methane as fuel for reforming the gas comprising renewable methane, sequestering carbon dioxide produced during the reforming, or a combination thereof.

10. The method according to any of clauses 1 to 9, wherein determining a renewable content of the one or more transportation fuel products comprises determining an amount of renewable hydrogen fed into each of the one or more hydroprocessing units in energy units, determining an amount of crude oil derived liquid hydrocarbon fed into each of the one or more hydroprocessing units in energy units, and determining an amount of at least one transportation fuel product produced by each of the one or more hydroprocessing units in energy units.

11. The method according to any of clauses 1 to 10, wherein the fuel is diesel, and wherein at least 60% of the energy content of the renewable hydrogen provided in step (a) ends up in diesel.

12. The method according to any of clauses 1 to 11, further comprising determining an amount of hydrogen fed to each of the one or more hydroprocessing units over a time period, and

determining an amount of hydrogen incorporated into the one or more transportation fuel products produced by each of the one or more hydroprocessing units over the time period,

wherein step (b) of selectively directing the renewable hydrogen to one or more hydroprocessing units in the fuel production facility comprises allocating the renewable hydrogen to each of the one or more hydroprocessing units in an amount over the time period that is not more than the determined amount of hydrogen incorporated into the one or more transportation fuel products.

13. The method according to any of clauses 1 to 12, wherein each hydroprocessing unit in the plurality of hydroprocessing units is connected to a hydrogen pipe system that contains renewable hydrogen and non-renewable hydrogen, wherein the hydrogen pipe system is configured to receive hydrogen from one or more hydrogen production plants that comprise a steam methane reformer, and wherein selectively directing the renewable hydrogen to one or more hydroprocessing units comprises withdrawing hydrogen from the hydrogen pipe system for the one or more hydroprocessing units, wherein the withdrawn hydrogen is associated with the environmental attributes of a corresponding quantity of renewable hydrogen fed into the hydrogen pipe system.

14. The method according to clause 13, wherein selectively directing the renewable hydrogen to one or more hydroprocessing units in the fuel production facility comprises selectively directing the renewable hydrogen to a subset of a fuel production facility and hydrogenating crude oil derived liquid hydrocarbon in each hydroprocessing units in the subset to provide the one or more transportation fuel products comprising renewable content, wherein the subset of the fuel production facility comprises hydrogen production and the one or more hydroprocessing units, wherein each hydroprocessing unit in the subset has a transportation fuel energy yield that is at least 5% higher than a transportation fuel energy yield of the fuel production facility, and wherein determining the renewable content is dependent on the feedstock provided to the hydrogen production and the hydroprocessing units in the subset and products provided from the hydroprocessing units in the subset.

15. The method according to clause 13, wherein selectively directing the renewable hydrogen to one or more hydroprocessing units in an fuel production facility comprises selectively directing the renewable hydrogen to a subset of the fuel production facility and hydrogenating crude oil derived liquid hydrocarbon in each hydroprocessing units in the subset to provide one or more transportation fuel products comprising renewable content, wherein the subset of the fuel production facility comprises hydrogen production and the one or more hydroprocessing units, wherein the subset has a transportation fuel energy yield at least 5% higher than transportation fuel energy yield of the fuel production facility, and wherein determining the renewable content is dependent on the feedstock provided to the hydrogen production and the hydroprocessing units in the subset and products provided from the hydroprocessing units in the subset.

16. The method according to any of clauses 1 to 15, wherein the fuel production facility is an oil refinery.

17. A method of producing fuel having a determined amount of renewable content, the method comprising:

providing renewable hydrogen to a hydroprocessing unit;

hydrogenating crude oil derived liquid hydrocarbon in the hydroprocessing unit with the renewable hydrogen; and

determining the renewable content of crude oil derived liquid hydrocarbon hydrogenated in the hydroprocessing unit, wherein the determining comprises:

measuring a relative amount of hydrogen and carbon in crude oil derived liquid hydrocarbon fed into the hydroprocessing unit; and

measuring a relative amount of hydrogen and carbon in crude oil derived liquid hydrocarbon produced by the hydroprocessing unit.

18. The method according to clause 17, wherein the determining comprises:

measuring a flow rate of the crude oil derived liquid hydrocarbon fed into the hydroprocessing unit; and

measuring a flow rate of the crude oil derived liquid hydrocarbon produced by the hydroprocessing unit.

19. The method according to clause 17 or 18, wherein measuring the relative amount of hydrogen and carbon comprises carrying out an elemental analysis.

20. The method according to any of clauses 17 to 19, wherein measuring the relative amount of hydrogen and carbon comprises determining a ratio of moles of hydrogen to moles of carbon.

21. The method according to any of clause 17 to 20, wherein hydrogenating crude oil derived liquid hydrocarbon in the hydrogenation reactor with the renewable hydrogen comprises feeding fossil hydrogen and the renewable hydrogen into the hydroprocessing unit.

22. The method according to any of clauses 17 to 21, wherein the determining comprises measuring a flow of hydrogen to the hydroprocessing unit and determining a renewable fraction of the hydrogen provided to the hydroprocessing unit.

23. The method according to any of clauses 17 to 22, wherein measuring a relative amount of hydrogen and carbon in crude oil derived liquid hydrocarbon fed into the hydroprocessing unit comprises measuring a mass fraction of hydrogen and a mass fraction of carbon of the crude oil derived liquid hydrocarbon fed into the hydroprocessing unit, and wherein measuring a relative amount of hydrogen and carbon in crude oil derived liquid hydrocarbon produced by the hydroprocessing unit comprises measuring a mass fraction of hydrogen and a mass fraction of carbon of the crude oil derived liquid hydrocarbon produced by the hydroprocessing unit.

24. The method according to any of clauses 17 to 23, wherein the renewable hydrogen is produced by reforming a stream comprising renewable methane.

25. A method of quantifying a renewable content of fuel produced by hydrogenating crude oil derived liquid hydrocarbon with renewable hydrogen, the method comprising:

(a) providing a sample of the crude oil derived liquid hydrocarbon;

(b) measuring a relative amount of hydrogen and carbon in the sample of crude oil derived liquid hydrocarbon;

(c) measuring a flow rate of the crude oil derived liquid hydrocarbon provided for hydrogenation;

(d) measuring a flow rate of hydrogen provided for the hydrogenation;

(e) determining an amount of renewable hydrogen provided for the hydrogenation;

(f) providing a sample of a product of the hydrogenation;

(g) measuring a relative amount of hydrogen and carbon in the sample of product;

(h) measuring a flow rate of the product as it is produced; and

(i) determining the renewable content in the product using the amounts determined or measured in (b), (e), and (g).

26. A method of producing fuel having renewable content, the method comprising:

(a) at a fuel production facility comprising one or more hydrogen production plants and a plurality of hydroprocessing units, hydrogenating crude oil derived liquid hydrocarbon to produce one or more fuels;

(b) selecting one or more of the hydrogen production plants and multiple hydroprocessing units from the plurality of hydroprocessing units to provide a system for producing the fuel having renewable content, wherein the system is a subset of all the hydrogen production plants and hydroprocessing units at the fuel production facility, wherein the system excludes one or more hydroprocessing units at the fuel production facility, and wherein each of the excluded hydroprocessing units produces more than 20% of product by energy that further undergoes a chemical reaction that materially modifies the hydrocarbon therein;

(c) providing renewable natural gas and fossil natural gas to the one or more hydrogen production plants in the system, thereby producing fossil hydrogen and renewable hydrogen;

(d) selectively directing the renewable hydrogen to all of the one or more hydroprocessing units in the system, thereby producing one or more fuels having renewable content; and

(e) quantifying the renewable content of a batch of a fuel produced in (d), the quantifying being dependent on an amount of renewable natural gas provided as feedstock to the system to produce the batch.

**Claims**

1. A method of producing fuel having a determined amount of renewable content, the method comprising:

   providing renewable hydrogen to a hydroprocessing unit;
   hydrogenating crude oil derived liquid hydrocarbon in the hydroprocessing unit with the renewable hydrogen; and
   determining the renewable content of crude oil derived liquid hydrocarbon hydrogenated in the hydroprocessing unit, wherein the determining comprises:

   a) measuring an amount of hydrogen, carbon, or a combination thereof in crude oil derived liquid hydrocarbon fed into the hydroprocessing unit; and
   b) measuring an amount of hydrogen, carbon, or a combination thereof in crude oil derived liquid hydrocarbon produced by the hydroprocessing unit, and wherein the determining further comprises using a difference between:

   (i) a relative amount of carbon and hydrogen in the crude oil derived liquid hydrocarbon fed to the hydroprocessing unit determined using at least one measured amount from a), and
   (ii) a relative amount of carbon and hydrogen in the crude oil derived liquid hydrocarbon produced by the hydroprocessing unit determined using at least one measured amount from b).

2. The method according to claim 1, wherein the measuring in a) comprises:
   measuring a flow rate of the crude oil derived liquid hydrocarbon fed into the hydroprocessing unit;
   and wherein the measuring in b) comprises:
   measuring a flow rate of the crude oil derived liquid hydrocarbon produced by the hydroprocessing unit.

3. The method according to claim 1 or 2, wherein the measuring in each of a) and b) comprises elemental analysis.

4. The method according to claim 1 or 2, wherein the measuring in each of a) and b) comprises nuclear magnetic resonance (NMR) testing.

5. The method according to any one of claims 1 to 4, wherein hydrogenating crude oil derived liquid hydrocarbon in the hydrogenation reactor with the renewable hydrogen comprises feeding fossil hydrogen and the renewable hydrogen into the hydroprocessing unit.

6. The method according to claim 5, wherein the determining comprises measuring a flow of hydrogen to the hydroprocessing unit and determining a renewable fraction of the hydrogen provided to the hydroprocessing unit.

7. The method according to any one of claims 1 to 6, wherein the relative amount of hydrogen and carbon in each of (i) and (ii) is expressed as a ratio of moles of hydrogen to moles of carbon.

8. The method according to claim 7, wherein the determining comprises using the difference to determine the moles of hydrogen added per mole of carbon resulting from the hydrogenating.

9. The method according to any one of claims 1 to 6, wherein the relative amount of hydrogen and carbon in each of (i) and (ii) is expressed as a ratio of mass of hydrogen to mass of carbon.

10. The method according to claim 9, wherein a) comprises measuring a mass fraction of hydrogen and a mass fraction of carbon of the crude oil derived liquid hydrocarbon fed into the hydroprocessing unit, and wherein b) comprises measuring a mass fraction of hydrogen and a mass fraction of carbon of the crude oil derived liquid hydrocarbon produced by the hydroprocessing unit.

11. The method according to claim 9 or 10, wherein hydrogenating crude oil derived liquid hydrocarbon in the hydroprocessing unit produces a product, and wherein the determining comprises determining the mass of hydrogen incorporated into the product, where the mass of hydrogen incorporated into the product is calculated as:

$$\text{mass of carbon in the product} * (H/C_{product} - H/C_{feedstock}),$$

wherein $H/C_{product}$ refers to the H/C mass ratio of the product produced by the hydroprocessing unit, and $H/C_{feedstock}$ refers to the H/C mass ratio of the crude oil derived liquid hydrocarbon fed to the hydroprocessing unit.

12. The method according to any one of claims 1 to 11, wherein the determining comprises calculating a predetermined factor representative of a total quantity of hydrogen incorporated into the crude oil derived liquid hydrocarbon within the hydroprocessing unit, and wherein the method comprises providing the renewable hydrogen to the hydroprocessing unit in a quantity selected in dependence upon the predetermined factor.

13. The method according to claim 12, wherein the quantity is equal to, or less than, the predetermined factor.

14. The method according to any of claims 1 to 13, wherein the renewable hydrogen is produced by reforming a stream comprising renewable methane.

15. A method of quantifying a renewable content of fuel produced by hydrogenating crude oil derived liquid hydrocarbon with renewable hydrogen, the method comprising:

    (a) providing a sample of the crude oil derived liquid hydrocarbon;
    (b) determining by measurement a relative amount of hydrogen and carbon in the sample of crude oil derived liquid hydrocarbon;
    (c) measuring a flow rate of the crude oil derived liquid hydrocarbon provided for hydrogenation;
    (d) measuring a flow rate of hydrogen provided for the hydrogenation;
    (e) determining an amount of renewable hydrogen provided for the hydrogenation;
    (f) providing a sample of a product of the hydrogenation;
    (g) determining by measurement a relative amount of hydrogen and carbon in the sample of product;
    (h) measuring a flow rate of the product as it is produced; and
    (i) determining the renewable content in the product using the amounts determined in (b), (e), and (g).

Light Naphtha

Heavy Naphtha

Kerosene

Diesel

AGO

Crude

Gasoline

Jet

Diesel

HDS

HDS

HDS

HDS

HDS

HDS

10

15

20

30

40

50

60

70

Fig. 1

Fig. 2a

Fig. 2b

*Fig. 3*

EP 4 786 413 A1

```
┌─────────────────────────────┐
│      Providing renewable    │───────  460
│          hydrogen           │
└─────────────────────────────┘
              │
              ▼
┌─────────────────────────────┐
│  Selectively directing the  │───────  470
│  renewable hydrogen to one  │
│    or more processing       │
│           units             │
└─────────────────────────────┘
              │
              ▼
┌─────────────────────────────┐
│ Hydrogenating crude-oil     │───────  480
│ derived liquid hydrocarbon  │
│   with the renewable        │
│         hydrogen            │
└─────────────────────────────┘
              │
              ▼
┌─────────────────────────────┐
│  Determining a renewable    │───────  490
│   content of one or more    │
│           fuels             │
└─────────────────────────────┘
```

*Fig. 4*

Fig. 5

*Fig. 6*

*Fig. 7*

**EUROPEAN SEARCH REPORT**

Application Number

EP 26 16 9316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 658 026 B2 (IOGEN CORP [US]; IOGEN CORP [CA]) 25 February 2014 (2014-02-25) <br> * column 18, line 42 - column 19, line 51; claim 1 * <br> * column 20, line 3 - column 21, line 61 * <br> * column 22, line 16 - column 23, line 67 * <br><br> ----- | 1-15 | INV. <br> C01B3/34 <br> C10L1/08 <br> C10G49/26 <br> C10G49/00 |

TECHNICAL FIELDS SEARCHED (IPC)

C10G

The present search report has been drawn up for all claims

| Place of search | Date of completion of the search | Examiner |
|---|---|---|
| The Hague | 1 July 2026 | Deurinck, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 16 9316

This annex lists the patent family members relating to the patent documents cited in  the above-mentioned European search report.
The members are as contained in the European Patent Office EDP file on
The European Patent Office is in no way liable for these particulars which are merely given for the purpose of information.

01-07-2026

| Patent document cited in search report | Publication date | Patent family member(s) | Publication date |
|---|---|---|---|
| US 8658026 B2 | 25-02-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *RTFO Guidance Part One Process Guidance*, January 2020